# EUROPEAN PATENT APPLICATION

(11) **EP 4 770 062 A1**
(43) Date of publication of application: **01.07.2026**
(21) Application number: 24916003.7
(22) Date of filing: 10.01.2024
(51) Int. Cl.: H04M 1/02

(54) **MULTI-STABLE SUPPORT PLATE, HINGE ASSEMBLY AND FOLDABLE ELECTRONIC DEVICE**

(71) Applicant: Honor Device Co., Ltd., Shenzhen 518040 (CN)
(72) Inventor: DONG, Changfu, Shenzhen, Guangdong 518040 (CN); JIN, Kaifang, Shenzhen, Guangdong 518040 (CN); CHEN, Ruihao, Shenzhen, Guangdong 518040 (CN)
(74) Representative: MERH-IP Matias Erny Reichl Hoffmann Patentanwälte PartG mbB
(86) International application number: PCT/CN2024/071683
(87) International publication number: WO 2025/147926

(57) **Abstract**

This application provides a multi-stable support plate, a hinge assembly, and a foldable electronic device. The multi-stable support plate can be applied to a foldable electronic device. The multi-stable support includes: a support portion; and a multi-stable mechanism, where the multi-stable mechanism is disposed on a back side of the support portion, statuses of the multi-stable mechanism include at least a first stable state and a second stable state, and the multi-stable mechanism is configured to switch between states under the action of a driving force, to drive the support portion to move. When the multi-stable mechanism is in the first stable state, the support portion moves to a first position, to support a foldable display screen of the foldable electronic device; or when the multi-stable mechanism is in the second stable state, the support portion moves to a second position, to provide a screen accommodating space to avoid the foldable display screen. The multi-stable support plate enables the foldable display screen to maintain a desirable flattened state.

## Description

### TECHNICAL FIELD

This application relates to the field of foldable electronic device technologies, and in particular, to a multi-stable support plate, a hinge assembly, and a foldable electronic device.

### BACKGROUND

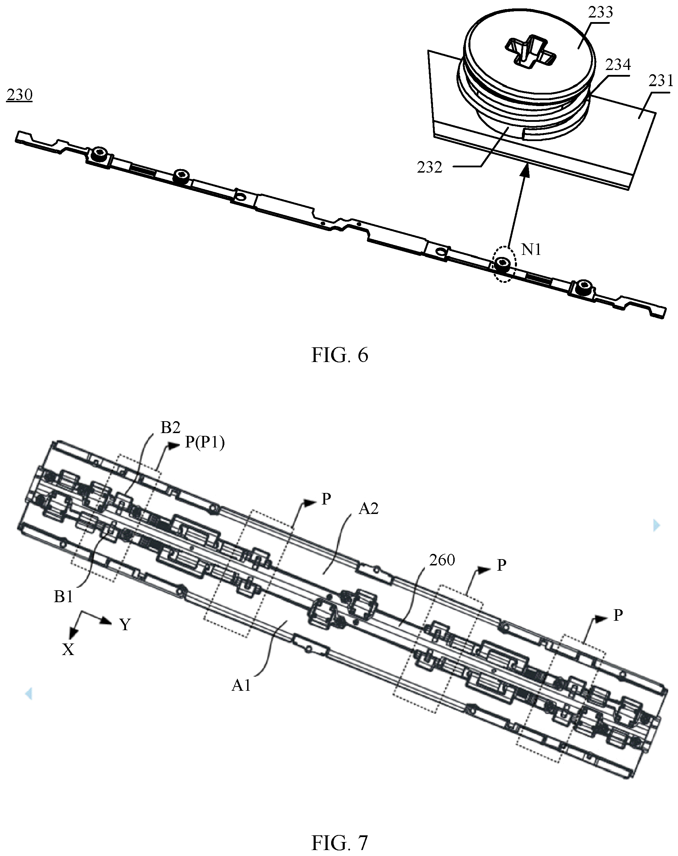

In a foldable electronic device (for example, a foldable mobile phone), a support mechanism is an important component in a hinge assembly of the foldable electronic device, and a main function of the support mechanism is to support a screen when the foldable electronic device is in a flattened state, and provide a screen accommodating space to avoid the screen when the foldable electronic device is in a folded state. Currently, the support mechanism of the foldable electronic device is usually a floating support plate. As shown in FIG. 6, the floating support plate mainly includes a plate body 231, a spring 234, and a screw 233.

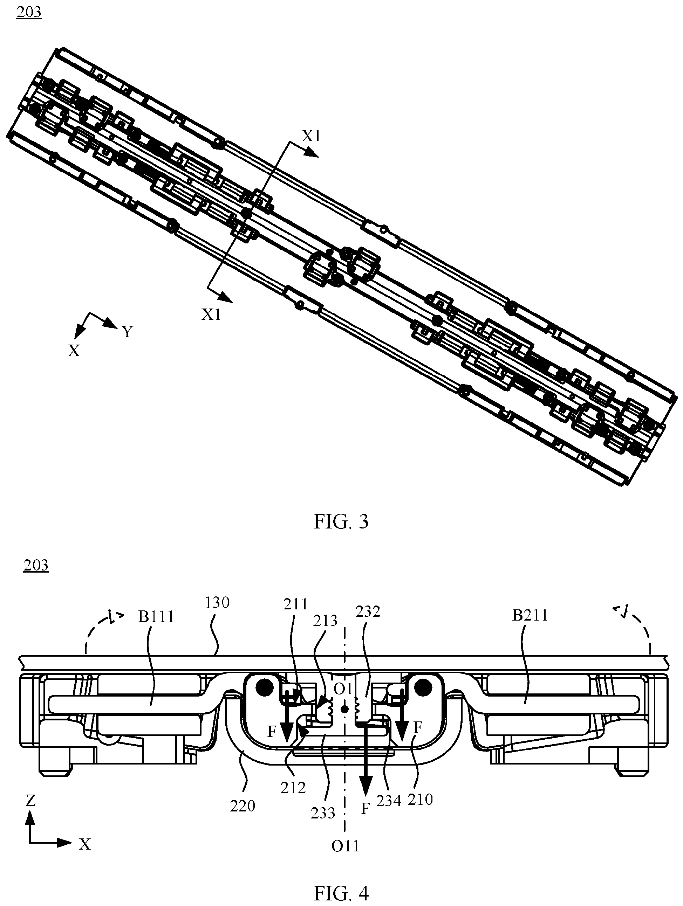

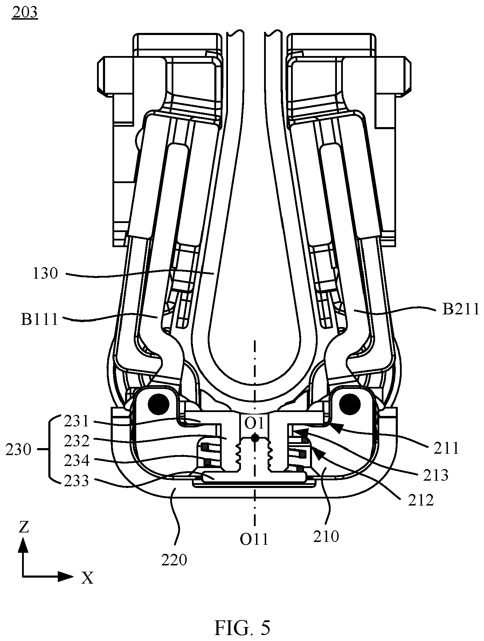

With reference to FIG. 4 and FIG. 5, a door panel swing arm B111 and a door panel swing arm B211 in a hinge assembly 203 are rotatably connected to a hinge base 210 of the hinge assembly 203, and are capable of rotating around the hinge base 210. In a process in which the foldable electronic device switches from a folded state to a flattened state, the door panel swing arm B111 and the door panel swing arm B211 rotate around the hinge base 210 from a folded position shown in FIG. 5 to a flattened position shown in FIG. 4. One end that is of the door panel swing arm B111 and that is close to the hinge base 210 and one end that is of the door panel swing arm B211 and that is close to the hinge base 210 may rotate to a position below the plate body 231, to pry the plate body 231 to move in a direction away from the hinge base 210. In this process, the spring 234 is gradually pressed to generate an elastic force F (that is, a reaction force). In the flattened state shown in FIG. 4, the elastic force generated when the spring 234 is pressed is transferred to the door panel swing arm B111 and the door panel swing arm B211 through the plate body 231, and acts downward on one end that is of the door panel swing arm B111 and that is close to the hinge base 210 and one end that is of the door panel swing arm B211 and that is close to the hinge base 210, so that one end that is of the door panel swing arm B111 and that is away from the hinge base 210 and one end that is of the door panel swing arm B211 and that is away from the hinge base 210 have a tendency to move upward. As a result, a flattening restoring force of the hinge assembly 203 is weakened, and stiffness of the hinge assembly 203 in the flattened state shown in FIG. 4 is weakened. This is not conducive to enabling the hinge assembly 203 in the flattened state shown in FIG. 4 to prevent screen warping and maintain a desirable flattened state.

### SUMMARY

Embodiments of this application provide a multi-stable support plate, a hinge assembly, and a foldable electronic device, to resolve a prior-art problem that a flattening restoring force of a hinge assembly is weakened because of a floating support plate and this is not conducive to enabling the hinge assembly in a flattened state to prevent screen warping and maintain a desirable flattened state.

To achieve the foregoing objective, the following technical solutions are used in this application.

According to a first aspect, a multi-stable support plate is provided. The multi-stable support plate can be applied to a foldable electronic device. The multi-stable support plate includes a support portion and a multi-stable mechanism. The multi-stable mechanism is disposed on a back side of the support portion. Statuses of the multi-stable mechanism include at least a first stable state and a second stable state. The multi-stable mechanism is configured to switch between states under the action of a driving force, to drive the support portion to move. When the multi-stable mechanism is in the first stable state, the support portion moves to a first position, to support a foldable display screen of the foldable electronic device; or when the multi-stable mechanism is in the second stable state, the support portion moves to a second position, to provide a screen accommodating space to avoid the foldable display screen.

It should be noted that a "stable state" is an equilibrium state that is presented depending on an inherent stability characteristic without an external force. In the multi-stable support plate, the multi-stable mechanism having two stable states, namely, the first stable state and the second stable state, is disposed, so that the support portion of the multi-stable support plate can remain stable at the first position depending on the first stable state of the multi-stable mechanism and can remain stable at the second position depending on the second stable state of the multi-stable mechanism without an external force.

When the support portion remains stable at the first position depending on the first stable state of the multi-stable mechanism, the multi-stable mechanism does not externally exert a reaction force, and therefore no force can be transferred to door panel swing arms to weaken a flattening restoring force of a hinge assembly. In addition, the flattening restoring force and stiffness of the hinge assembly are increased instead. Specifically, driving the support portion away from the first position necessarily encounters a resistance from the multi-stable mechanism. The reason is that the support portion remains stable at the first position depending on the first stable state of the multi-stable mechanism, but the driving force drives the multi-stable mechanism out of the first stable state. This makes the multi-stable mechanism generate a reaction force, thereby forming a resistance. The resistance prevents the hinge assembly from moving toward a folded state, so that the flattening restoring force and the stiffness of the hinge assembly are increased. This is conducive to enabling the hinge assembly to prevent screen warping and maintain a desirable flattened state. Moreover, as the flattening restoring force and the stiffness of the hinge assembly are increased, the hinge assembly can maintain a flattened state more stably. The better the stability of the hinge assembly in a flattened state, the stronger the vibration resistance is, making the hinge assembly less likely to be folded back under an external force.

Optionally, the multi-stable mechanism is a bistable mechanism, and the bistable mechanism includes a compliant beam. One end of the compliant beam is connected to the back side of the support portion, the other end of the compliant beam is fastened in a hinge assembly of the foldable electronic device, and the compliant beam is configured to deform under the action of the driving force, to drive the multi-stable mechanism to switch between states.

In this embodiment, the other end of the compliant beam cannot move because of being fastened, and one end of the compliant beam can move because of being connected to the back side of the movable support portion. It should be noted that the compliant beam may deform under the action of the driving force to exhibit different shapes, and the different shapes are corresponding to different states of the multi-stable mechanism. When the compliant beam is in different shapes, one end of the compliant beam is at different positions, to drive the support portion connected to the compliant beam to move to different positions. Therefore, the compliant beam is driven to deform, so that the multi-stable mechanism switches between states, to drive the support portion to move.

In some embodiments, the bistable mechanism includes two compliant beams: a first compliant beam and a second compliant beam, and the first compliant beam and the second compliant beam are spaced apart in a width direction of the support portion. In this case, the first compliant beam and the second compliant beam are connected to the support portion at two discrete positions in the width direction of the support portion, to drive the support portion to move at the two discrete positions in the width direction of the support portion. In this way, a force on the support portion in the width direction of the support portion is more widely distributed, and a motion process of the support portion is more stable. Optionally, the first compliant beam and the second compliant beam are axisymmetrically arranged with respect to a first center line. In this way, a force on the support portion in the width direction of the support portion is more uniform, and a motion process of the support portion is more stable.

In some embodiments, the bistable mechanism further includes a movable block. The movable block is located between the first compliant beam and the second compliant beam, one end of the first compliant beam and one end of the second compliant beam are both connected to the movable block, and the movable block is connected to the back side of the support portion. Both the first compliant beam and the second compliant beam are configured to deform under the action of the driving force, to drive the movable block to move; and when the movable block moves to a first stable-state position, the multi-stable mechanism is in the first stable state, and the movable block drives the support portion to move to the first position; or when the movable block moves to a second stable-state position, the multi-stable mechanism is in the second stable state, and the movable block drives the support portion to move to the second position.

In this embodiment, one end of the first compliant beam and one end of the second compliant beam are both connected to the support portion through the movable block. In comparison with a solution in which one end of the first compliant beam and one end of the second compliant beam are directly connected to the support portion, the movable block is connected to the support portion to form a face-to-face connection manner, so that a force-bearing area of the support portion is larger, and a motion process of the support portion is more stable.

In some embodiments, the bistable mechanism further includes a first fixed block and a second fixed block spaced apart. The first compliant beam and the second compliant beam are located between the first fixed block and the second fixed block, the other end of the first compliant beam is connected to the first fixed block, the other end of the second compliant beam is connected to the second fixed block, and the first fixed block and the second fixed block are configured to be fastened in the hinge assembly.

In this embodiment, the other end of the first compliant beam and the other end of the second compliant beam are fastened in the hinge assembly respectively through the first fixed block and the second fixed block. In comparison with the solution in which one end of the first compliant beam and one end of the second compliant beam are directly connected to the support portion, a contact area for fastening is larger during fastening, and fastening is more secure.

In some embodiments, the compliant beam is provided with a rigid block. Providing the rigid block on the compliant beam can increase a reaction force of the bistable mechanism, and further increase the flattening restoring force and the stiffness of the hinge assembly.

In some embodiments, the multi-stable support plate includes a plurality of multi-stable mechanisms; and the plurality of multi-stable mechanisms are spaced apart in a length direction of the support portion.

In this embodiment, the plurality of multi-stable mechanisms are spaced apart in the length direction of the support portion. In this case, the plurality of multi-stable mechanisms deform under the action of a driving force, to drive the support portion to move at a plurality of positions in the length direction of the support portion. In this way, a force on the support portion in the length direction is more uniform, and a motion process of the support portion is more stable.

In some embodiments, the multi-stable support plate further includes a drive mechanism disposed on the back side of the support portion. The drive mechanism includes a first driving part and a second driving part, the first driving part and the second driving part are spaced apart in the width direction of the support portion, and both the first driving part and the second driving part are configured to drive, under the action of the driving force, the multi-stable mechanism to switch between states.

In this embodiment, the first driving part and the second driving part are distributed at two discrete positions in the width direction of the support portion. In this way, when the driving force acts on the first driving part and the second driving part, a force on the support portion in the width direction of the support portion is more widely distributed and more uniform, and a motion process of the support portion is more stable.

In some embodiments, the first driving part includes a first driving sub-part, a connecting part, and a second driving sub-part. The first driving sub-part and the second driving sub-part are spaced apart in a thickness direction of the support portion, the second driving sub-part is farther from the support portion, the connecting part is connected between the first driving sub-part and the second driving sub-part and forms an opening together with the first driving sub-part and the second driving sub-part, an opening of the first driving part is configured to enable a first swing arm of the hinge assembly to extend into the first driving part, and an opening of the second driving part is configured to enable a second swing arm of the hinge assembly to extend into the second driving part, to provide the driving force. When the driving force acts on the first driving sub-part, the first driving part and the second driving part drive the multi-stable mechanism to switch from the second stable state to the first stable state, to drive the support portion to move from the second position to the first position; or when the driving force acts on the second driving sub-part, the first driving part and the second driving part drive the multi-stable mechanism to switch from the first stable state to the second stable state, to drive the support portion to move from the first position to the second position.

In this embodiment, the first driving part and the second driving part each include a first driving sub-part and a second driving sub-part spaced apart in the thickness direction of the support portion. In this way, a direction of the driving force can be changed by separately acting on the first driving sub-part and the second driving sub-part, to control a motion direction of the support portion. In this embodiment, when the driving force acts on the first driving sub-part, the first driving part drives the multi-stable mechanism to switch from the second stable state to the first stable state, to drive the support portion to move from the second position to the first position; or when the driving force acts on the second driving sub-part, the first driving part drives the multi-stable mechanism to switch from the first stable state to the second stable state, to drive the support portion to move from the first position to the second position.

In some embodiments of this application, the multi-stable support plate includes a support plate body and two driving members. The two driving members are spaced apart in a width direction of the support plate body, and are both connected to a back side of the support plate body, to form the first driving part and the second driving part. The support portion body is further configured to form the support portion.

Optionally, the driving member includes a first driving region, a connecting region, and a second driving region. The support plate body includes a support region and two third driving regions, the two third driving regions are disposed on two sides in a width direction of the support region, and the support region is configured to form the support portion. The connecting region is configured to form the connecting part, and the second driving region is configured to form the second driving sub-part. The first driving region of one driving member and one third driving region are stacked and connected to form the first driving sub-part of the first driving part, and the first driving region of the other driving member and the other third driving region are stacked and connected to form the first driving sub-part of the second driving part.

In an example, the support plate body is made of a carbon fiber plate or a stainless steel sheet. The two driving members and the multi-stable mechanism are all made of metal materials. The two driving members and the multi-stable mechanism are all connected to the support plate body through plastic adhesive bonding.

Specifically, the first driving sub-part includes a first plastic layer, the third driving region, the first driving region, and a second plastic layer that are sequentially stacked in the thickness direction of the support portion. The first driving region and the third driving region are penetrated by plastic, and the plastic penetrating the first driving region and the third driving region is bonded to both the first plastic layer and the second plastic layer.

Specifically, the movable block of the multi-stable mechanism is stacked on a back side of the support region, the support region and the movable block are penetrated by plastic, plastic is distributed on plastic of a front side of the support region, and the plastic penetrating the support region and the movable block is bonded to the plastic distributed on the front side of the support region.

Optionally, when the support plate body is made of the carbon fiber plate, the plastic distributed on the front side of the support region is located in a region directly opposite to the movable block. When the support plate body is made of the stainless steel sheet, the plastic distributed on the front side of the support region is spread over an upper surface of the support region.

In another example, the support plate body is made of a pure metal sheet. The two driving members and the multi-stable mechanism are all made of metal materials. The two driving members and the multi-stable mechanism are all connected to the support plate body through welding or sintering.

Optionally, the multi-stable mechanism includes a first side and a second side that are distributed in the length direction of the support portion. The drive mechanism includes two driving-part pairs, one driving-part pair includes one first driving part and one second driving part, one driving-part pair is distributed on the first side of the multi-stable mechanism, and the other driving-part pair is disposed on the second side of the multi-stable mechanism.

In this embodiment, one driving-part pair is distributed on each of the two sides of the bistable mechanism that are distributed in the length direction of the support portion. In this case, when a driving force acts on the two driving-part pairs, the two sides of the bistable mechanism in the length direction of the support portion are both driven by the driving force. In this way, a force on the bistable mechanism is more uniform, and a process in which the bistable mechanism drives the support portion to move is more stable.

Optionally, the multi-stable support plate includes a plurality of drive mechanisms; and the plurality of drive mechanisms are spaced apart in the length direction of the support portion.

In this embodiment, the multi-stable support plate is provided with the plurality of drive mechanisms, and the plurality of drive mechanisms are spaced apart on the support portion in the length direction of the support portion. In this case, when a driving force acts on the plurality of drive mechanisms, four positions of the support portion in the length direction are all driven by the driving force. In this way, a force on the support portion in the length direction is more uniform, and a motion process of the support portion is more stable.

In some embodiments, the multi-stable support plate is an integrally formed structure. The integrally formed structure means that components included in the multi-stable support plate are a single integral component rather than discrete components. That the multi-stable support plate is an integrally formed structure makes the multi-stable support plate have a small quantity of components. When the multi-stable support plate is assembled on the hinge assembly, a process of disassembling the multi-stable support plate is omitted, so that an assembly process is simpler.

According to a second aspect, an embodiment of this application further provides a hinge assembly. The hinge assembly can be applied to a foldable electronic device. The hinge assembly includes a hinge base, a first swing arm and a second swing arm, and the multi-stable support plate according to any implementation of the first aspect. The first swing arm and the second swing arm are located on two sides of a second center line, the first swing arm and the second swing arm are both rotatably connected to the hinge base, and the first swing arm and the second swing arm are capable of rotating around the hinge base between a flattened position and a folded position. The multi-stable support plate is disposed on a front side of the hinge base, and a multi-stable mechanism of the multi-stable support plate is configured to switch between states under the action of a driving force provided by the first swing arm and/or the second swing arm, to drive a support portion of the multi-stable support plate to move up and down relative to the hinge base. When the first swing arm and the second swing arm rotate to the flattened position, the multi-stable mechanism is in a first stable state, and the support portion moves to a first position; or when the first swing arm and the second swing arm rotate to the folded position, the multi-stable mechanism is in a second stable state, and the support portion moves to a second position.

In some embodiments, the first swing arm includes a first door panel swing arm, the second swing arm includes a second door panel swing arm, and the hinge assembly further includes a first door panel and a second door panel. One end of the first door panel swing arm is rotatably connected to the hinge base, and the other end of the first door panel swing arm is slidably connected to the first door panel. One end of the second door panel swing arm is rotatably connected to the hinge base, and the other end of the second door panel swing arm is slidably connected to the second door panel.

In some other embodiments, the first swing arm includes a first main swing arm, the second swing arm includes a second main swing arm, and the hinge assembly further includes a first connecting member and a second connecting member. One end of the first main swing arm is rotatably connected to the hinge base, and the other end of the first main swing arm is rotatably connected to the first connecting member. One end of the second main swing arm is rotatably connected to the hinge base, and the other end of the second main swing arm is rotatably connected to the second connecting member.

In some other embodiments, the first swing arm includes a first secondary swing arm, the second swing arm includes a second secondary swing arm, and the hinge assembly further includes a first connecting member and a second connecting member. One end of the first secondary swing arm is rotatably connected to the hinge base, and the other end of the first secondary swing arm is slidably connected to the first connecting member. One end of the second secondary swing arm is rotatably connected to the hinge base, and the other end of the second secondary swing arm is slidably connected to the second connecting member.

In some other embodiments, the first swing arm includes a first damping swing arm, the second swing arm includes a second damping swing arm, and the hinge assembly further includes a damping assembly, a first connecting member, and a second connecting member. The first damping swing arm and the second damping swing arm are both connected to the damping assembly. One end of the first damping swing arm is rotatably connected to the hinge base, and the other end of the first damping swing arm forms a higher pair joint with the first connecting member. One end of the second damping swing arm is rotatably connected to the hinge base, and the other end of the second damping swing arm forms a higher pair joint with the second connecting member.

In some other embodiments, the hinge assembly further includes a synchronization assembly; and the first damping swing arm and the second damping swing arm are connected to each other via the synchronization assembly.

Optionally, when the first swing arm and the second swing arm rotate to the flattened position, one end that is of the first swing arm and that is close to the hinge base extends into an opening of a first driving part of the multi-stable support plate and is located between a first driving sub-part and a second driving sub-part of the first driving part, and one end that is of the second swing arm and that is close to the hinge base extends into an opening of a second driving part of the multi-stable support plate and is located between a first driving sub-part and a second driving sub-part of the second driving part. In a process in which the first swing arm and the second swing arm rotate from the folded position to the flattened position, one end that is of the first swing arm and that is close to the hinge base is in contact with the first driving sub-part of the first driving part, and one end that is of the second swing arm and that is close to the hinge base is in contact with the first driving sub-part of the second driving part, to provide the driving force to act on the first driving sub-parts. In a process in which the first swing arm and the second swing arm rotate from the flattened position to the folded position, one end that is of the first swing arm and that is close to the hinge base is in contact with the second driving sub-part of the first driving part, and one end that is of the second swing arm and that is close to the hinge base is in contact with the second driving sub-part of the second driving part, to provide the driving force to act on the second driving sub-parts.

In some possible design manners, when the first swing arm and the second swing arm rotate along a first direction to a transition position between the flattened position and the folded position, the multi-stable mechanism is in an unstable equilibrium state, the support portion moves to a third position between the first position and the second position, a gap between the first driving sub-part and one end that is of the first swing arm and that is close to the hinge base and a gap between the first driving sub-part and one end that is of the second swing arm and that is close to the hinge base are both less than a first preset threshold, and the first direction is a rotational direction from the flattened position to the folded position.

It should be noted that, when the first swing arm and the second swing arm move to the transition position along the first direction, if a slight driving force is provided for the first driving sub-part of the first driving part and the first driving sub-part of the second driving part, the support portion rapidly moves from the third position to the second position, and drives the first driving part and the second driving part to move rapidly (motion paths are the foregoing gaps). In this way, the first driving sub-part of the first driving part and the first driving sub-part of the second driving part respectively move away from one end that is of the first swing arm and that is close to the hinge base and one end that is of the second swing arm and that is close to the hinge base, and the second driving sub-part of the first driving part and the second driving sub-part of the second driving part are respectively in contact with one end that is of the first swing arm and that is close to the hinge base and one end that is of the second swing arm and that is close to the hinge base. Existence of the foregoing gaps makes it easy to generate abnormal noise in this process. To reduce abnormal noise, in this design manner, the foregoing gaps are less than the first preset threshold. In this way, the motion paths of the first driving part and the second driving part are shorter. When the second driving sub-part of the first driving part and the second driving sub-part of the second driving part are respectively in contact with one end that is of the first swing arm and that is close to the hinge base and one end that is of the second swing arm and that is close to the hinge base, an impact force is smaller, resulting in less abnormal noise.

In some possible design manners, when the first swing arm and the second swing arm rotate along a second direction to the transition position between the flattened position and the folded position, the multi-stable mechanism is in the unstable equilibrium state, the support portion moves to the third position between the first position and the second position, a gap between the second driving sub-part and one end that is of the first swing arm and that is close to the hinge base and a gap between the second driving sub-part and one end that is of the second swing arm and that is close to the hinge base are both less than a second preset threshold, and the second direction is a rotational direction from the folded position to the flattened position. This design manner can reduce abnormal noise in a process in which the first swing arm and the second swing arm move along the second direction. For reasons, adaptively refer to the effect descriptions in the previous design manner.

Optionally, the hinge assembly includes a plurality of swing arm pairs, one swing arm pair includes one first swing arm and one second swing arm, and the plurality of swing arm pairs are spaced apart in a length direction of the hinge base. One swing arm pair is configured to drive one of a plurality of drive mechanisms of the multi-stable support plate.

In this embodiment, the plurality of swing arm pairs drive the plurality of drive mechanisms on a one-to-one correspondence basis. Therefore, a position of a swing arm pair is corresponding to a position of a drive mechanism correspondingly driven by the swing arm pair. It can be learned from the foregoing content that the plurality of drive mechanisms are spaced apart on the support portion in a length direction of the support portion. Based on this, the plurality of swing arm pairs are spaced apart in the length direction of the hinge base (that is, the length direction of the support portion). In this case, the plurality of swing arm pairs may provide a driving force at four positions of the support portion in the length direction. In this way, a force on the support portion in the length direction is more uniform, and a motion process of the support portion is more stable.

In some embodiments, the hinge base includes a first mounting platform and a second mounting platform, and the first mounting platform and the second mounting platform are located on the two sides of the second center line. A first fixed block of the multi-stable mechanism engages with the first mounting platform through a mortise-and-tenon fit, and a second fixed block of the multi-stable mechanism engages with the second mounting platform through a mortise-and-tenon fit.

In this embodiment, the first fixed block engages with the first mounting platform through a mortise-and-tenon fit, and the second fixed block engages with the second mounting platform through a mortise-and-tenon fit, so that the multi-stable mechanism can be fastened to the hinge base, and the multi-stable mechanism can implement a function of the multi-stable mechanism. Through the mortise-and-tenon fit, the multi-stable mechanism can be more securely fastened to the hinge base and is less prone to wobbling, so that connection reliability of the multi-stable mechanism is improved.

In an example, one side that is of the first fixed block and that faces the second fixed block is provided with a first protrusion extending in a thickness direction of the support portion, and one side that is of the second fixed block and that faces the first fixed block is provided with a second protrusion extending in the thickness direction of the support portion. The first mounting platform has a first notch, platform surfaces forming the first notch include a first platform surface facing a side on which the second mounting platform is located, and the first platform surface has a first groove extending in a thickness direction of the hinge base (that is, the thickness direction of the support portion). The second mounting platform has a second notch, platform surfaces forming the second notch include a third platform surface facing a side on which the first mounting platform is located and a fourth platform surface facing a side on which the support portion is located, and the third platform surface has a second groove extending in the thickness direction of the hinge base. The first fixed block is seated in the first notch, and the first protrusion is inserted into the first groove. The second fixed block is seated in the second notch, and the second protrusion is inserted into the second groove.

In this example, the first protrusion is inserted into the first groove extending in the thickness direction of the hinge base, and the second protrusion is inserted into the second groove extending in the thickness direction of the hinge base, so that the first fixed block and the first mounting platform are fastened to each other in the length direction of the hinge base through a mortise-and-tenon fit and the second fixed block and the second mounting platform are fastened to each other in the length direction of the hinge base through a mortise-and-tenon fit.

In an example, the first mounting platform has the first notch, the platform surfaces forming the first notch include a second platform surface facing the side on which the support portion is located, and the second platform surface has a third groove extending in a length direction of the support portion. The second mounting platform has the second notch, the platform surfaces forming the second notch include the fourth platform surface facing the side on which the support portion is located, and the fourth platform surface has a fourth groove extending in the length direction of the support portion. The first fixed block is seated in the first notch, and one end that is of the first fixed block and that is away from the support portion is inserted into the third groove. The second fixed block is seated in the second notch, and one end that is of the second fixed block and that is away from the support portion is inserted into the fourth groove.

In this example, one end that is of the first fixed block and that is away from the support portion is inserted into the third groove extending in the thickness direction of the hinge base, and one end that is of the second fixed block and that is away from the support portion is inserted into the fourth groove extending in the thickness direction of the hinge base, so that the first fixed block and the first mounting platform are fastened to each other in a width direction of the hinge base through a mortise-and-tenon fit and the second fixed block and the second mounting platform are fastened to each other in the width direction of the hinge base through a mortise-and-tenon fit.

According to a third aspect, an embodiment of this application further provides a foldable electronic device. The foldable electronic device includes a foldable display screen and the hinge assembly according to any embodiment of the second aspect. The foldable display screen is disposed on one side of the hinge assembly, and the multi-stable support plate of the hinge assembly is mounted on the hinge base of the hinge assembly and is located between the hinge base and the foldable display screen. When the first swing arm and the second swing arm of the hinge assembly rotate, the multi-stable support plate is driven to move relative to the hinge base, to support the foldable display screen or provide a screen accommodating space to avoid the foldable display screen.

It can be understood that, unless otherwise specified, for beneficial effects that can be achieved by the hinge assembly provided in any design manner of the second aspect and the foldable electronic device provided in any design manner of the third aspect, refer to the beneficial effects of the multi-stable support plate provided in the first aspect. Details are not described herein again.

### BRIEF DESCRIPTION OF DRAWINGS

FIG. 1 is a diagram of a three-dimensional structure of a foldable electronic device in a flattened state according to an embodiment of this application;
FIG. 2 is a diagram of a planar structure of the foldable electronic device shown in FIG. 1 in a folded state;
FIG. 3 is a diagram of a structure of a hinge assembly in a flattened state according to a related technology;
FIG. 4 is a sectional view of the hinge assembly shown in FIG. 3 taken along a cutting plane line X1-X1;
FIG. 5 is a diagram of a structure of the hinge assembly shown in FIG. 4 in a folded state;
FIG. 6 is a diagram of a structure of a floating support plate in the hinge assembly shown in FIG. 3;
FIG. 7 is a diagram of a structure of a hinge assembly in a flattened state according to an embodiment of this application;
FIG. 8 is a diagram of an exploded structure of the hinge assembly shown in FIG. 7 in a flattened state;
FIG. 9 is an enlarged view of one region P shown in FIG. 7;
FIG. 10 is a sectional view of the hinge assembly shown in FIG. 7 taken along a cutting plane line X2-X2 shown in FIG. 9;
FIG. 11 is a diagram of a structure of the hinge assembly shown in FIG. 10 in a folded state;
FIG. 12 is a diagram of a structure of a joint between a door panel swing arm and a hinge base that are shown in FIG. 8;
FIG. 13 is a diagram of a structure of a joint between a main swing arm and a hinge base that are shown in FIG. 8;
FIG. 14 is a diagram of a structure of a bistable support plate according to an embodiment of this application;
FIG. 15 is an enlarged view of one region Q shown in FIG. 14;
FIG. 16 is mounting diagrams of a bistable support plate and a hinge base according to an embodiment of this application;
FIG. 17 is status diagrams of a compliant bistable mechanism according to an embodiment of this application;
FIG. 18 is a comparison chart of characteristic curves of a reaction force f and a displacement s of a bistable mechanism according to an embodiment of this application;
FIG. 19 is diagrams of structures of three other bistable mechanisms according to an embodiment of this application;
FIG. 20 is a sectional view of the hinge assembly shown in FIG. 7 taken along a cutting plane line X3-X3 shown in FIG. 9;
FIG. 21 is a diagram of a structure of the hinge assembly shown in FIG. 20 in a folded state;
FIG. 22 is a transition diagram 1 illustrating that a hinge assembly moves from a flattened state to a folded state via an intermediate state according to an embodiment of this application;
FIG. 23 is a transition diagram 2 of movement from a flattened state to a folded state via an intermediate state according to an embodiment of this application;
FIG. 24 is a transition diagram 1 illustrating that a hinge assembly moves from a folded state to a flattened state via an intermediate state according to an embodiment of this application;
FIG. 25 is a transition diagram 2 of movement from a folded state to a flattened state via an intermediate state according to an embodiment of this application;
FIG. 26 is a diagram of a structure of a hinge assembly in an intermediate state according to an embodiment of this application;
FIG. 27 is a diagram of a three-dimensional structure of the hinge assembly shown in FIG. 7 taken along a cutting plane line X3-X3 shown in FIG. 9;
FIG. 28 is an exploded diagram of components of a bistable support plate according to an embodiment of this application;
FIG. 29 is a diagram of a structure illustrating that a support plate body is connected to a first pawl according to some embodiments of this application;
FIG. 30 is a sectional view taken along a cutting plane line Y1-Y1 shown in FIG. 29;
FIG. 31 is a diagram of a structure obtained after a bistable mechanism, a first pawl, and a second pawl in FIG. 28 are flipped;
FIG. 32 is a diagram of a structure illustrating that a support plate body is connected to a first pawl according to some other embodiments of this application;
FIG. 33 is a sectional view taken along a cutting plane line Y2-Y2 shown in FIG. 32;
FIG. 34 is a diagram of a structure illustrating that a support plate body is connected to all of a first pawl, a second pawl, and a bistable mechanism according to some embodiments of this application;
FIG. 35 is a diagram of a structure illustrating that a support plate body is connected to all of a first pawl, a second pawl, and a bistable mechanism according to some other embodiments of this application; and
FIG. 36 is a diagram of an assembly process of a bistable support plate according to an embodiment of this application.

### DESCRIPTION OF EMBODIMENTS

To make the objectives, technical solutions, and advantages of this application clearer, the following further describes this application in detail with reference to accompanying drawings.

The terms "first", "second", and the like mentioned below are merely intended for a purpose of description, and shall not be understood as an indication or implication of relative importance or an implicit indication of a quantity of indicated technical features. Therefore, a feature limited by "first", "second", or the like may explicitly or implicitly include one or more features. In descriptions of this application, unless otherwise specified, "a plurality of" means at least two.

In addition, nouns of locality such as "upper" and "lower" in this application are defined based on example directions in which components in the accompanying drawings are placed. It should be understood that these directional terms are relative concepts, are used to describe and clarify "relative to", and may accordingly vary with changes of the directions in which the components in the accompanying drawings are placed.

An embodiment of this application provides a foldable electronic device. The foldable electronic device is an electronic device capable of folding a display screen, and implements a function of folding the display screen by using a hinge assembly. For example, the foldable electronic device may be a device that has a display screen: a mobile phone, a display, a tablet computer, a vehicle-mounted computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or the like. A specific form of the foldable electronic device is not specially limited in embodiments of this application. In the following embodiments, an example in which the foldable electronic device is a mobile phone is used for description.

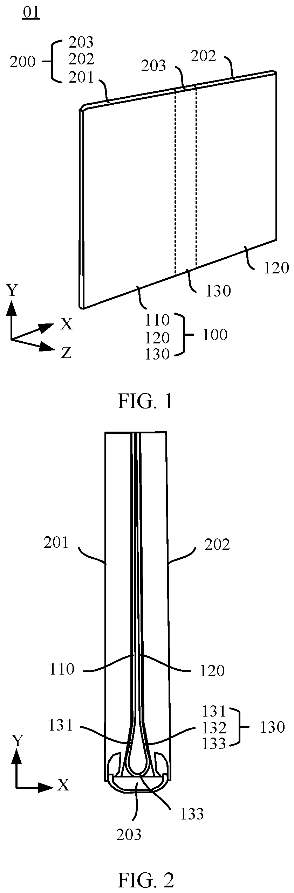

FIG. 1 is a diagram of a three-dimensional structure of a foldable electronic device in a flattened state according to an embodiment of this application.

The foldable electronic device 01 is approximately in a rectangular plate-like shape in the flattened state. For ease of description of the following embodiments, an XYZ coordinate system is established for the foldable electronic device 01 in the flattened state. A length direction of the foldable electronic device 01 is defined as an X-axis direction, a width direction of the foldable electronic device 01 is defined as a Y-axis direction, and a thickness direction of the foldable electronic device 01 is defined as a Z-axis direction. It can be understood that the coordinate system of the foldable electronic device 01 can be flexibly set depending on an actual requirement. This is not specifically limited herein. In some other embodiments, a shape of the foldable electronic device 01 may be alternatively a square plate-like shape or the like.

The foldable electronic device 01 includes a foldable display screen 100 and a support component 200.

First, the foldable display screen 100 is described by using examples.

The foldable display screen 100 is configured to display an image, a video, and other information. The foldable display screen 100 is a display screen featured by bendability, so that the foldable display screen 100 may be folded from the flattened state shown in FIG. 1 to a folded state shown in FIG. 2.

The foldable display screen 100 may include a first display region 110, a second display region 120, and a third display region 130. The third display region 130 is connected between the first display region 110 and the second display region 120. In the flattened state of the foldable electronic device 01 shown in FIG. 1, the foldable display screen 100 is also in the flattened state, and the first display region 110, the third display region 130, and the second display region 120 are sequentially arranged along the X-axis direction. In this way, the foldable electronic device 01 is folded along a horizontal direction. Certainly, in other embodiments, when the foldable display screen 100 is in the flattened state, the first display region 110, the third display region 130, and the second display region 120 may be sequentially arranged along the Y-axis direction. In this way, the foldable electronic device 01 is folded along a vertical direction.

In the three display regions, at least the third display region 130 is of a flexible structure. In this way, the third display region 130 may be bent under an external force, so that the foldable display screen 100 is featured by bendability, to support the foldable display screen 100 in switching between the flattened state shown in FIG. 1 and the folded state shown in FIG. 2.

For example, the foldable display screen 100 is of a fully flexible structure, that is, the first display region 110, the second display region 120, and the third display region 130 are all of flexible structures. For example, when the foldable display screen 100 is an active matrix organic light-emitting diode (active matrix organic light-emitting diode, AMOLED) display screen, the AMOLED display is used as a self-emissive display, and a backlight module (backlight module, BLM) does not need to be disposed. Therefore, when a substrate in the AMOLED display is formed by using a flexible resin material, for example, polyethylene terephthalate (polyethylene terephthalate, PET), the AMOLED display can be featured by bendability, and forms a fully flexible structure.

For example, only the third display region 130 is of a flexible structure, while the first display region 110 and the second display region 120 are of rigid structures.

It should be understood that, when the foldable electronic device 01 is in the flattened state shown in FIG. 1, the foldable display screen 100 is also in the flattened state shown in FIG. 1, so that large-screen display can be implemented, to provide more abundant information for a user and bring better use experience to the user.

Next, the support component 200 is described by using examples.

The support component 200 is configured to bear the foldable display screen 100. The foldable display screen 100 is disposed on one side of the support component 200. Specifically, the support component 200 includes a first housing 201, a second housing 202, and a hinge assembly 203. When the foldable electronic device 01 is in the flattened state shown in FIG. 1, the first housing 201, the hinge assembly 203, and the second housing 202 are sequentially arranged along the X-axis direction with upper surfaces (surfaces facing the foldable display screen 100) substantially flush with each other. The first housing 201 bears the first display region 110, the second housing 202 bears the second display region 120, and the hinge assembly 203 is connected between the first housing 201 and the second housing 202 and bears the third display region 130.

In a specific implementation process, the first housing 201 and the second housing 202 may be a middle frame of the foldable electronic device 01, may be a rear housing of the foldable electronic device 01, or may be a structure in which a middle frame and a rear housing are assembled.

The hinge assembly 203 may implement rotation of the first housing 201 and the second housing 202. The foldable display screen 100 is disposed on the first housing 201, the second housing 202, and the hinge assembly 203, and can be folded or unfolded with rotation of the first housing 201 and the second housing 202, to switch between the flattened state shown in FIG. 1 and the folded state shown in FIG. 2.

FIG. 2 is a diagram of a planar structure of the foldable electronic device shown in FIG. 1 in a folded state.

When the foldable electronic device 01 shown in FIG. 2 is in the folded state, the foldable display screen 100 is also in a folded state.

Specifically, the first display region 110 and the second display region 120 of the foldable display screen 100 are substantially parallel and opposite to each other. That the first display region 110 and the second display region 120 are substantially parallel means that an included angle between the first display region 110 and the second display region 120 is not necessarily 0°, but approximates to 0°. For example, the included angle may be less than a specific angle (for example, 15°). That the first display region 110 and the second display region 120 are opposite to each other means that a display surface of the first display region 110 and a display surface of the second display region 120 are opposite to each other.

The third display region 130 of the foldable display screen 100 is folded into a teardrop shape. In this shape, the third display region 130 includes a first bending region 131, a second bending region 132, and a third bending region 133. The first bending region 131 is connected between the third bending region 133 and the first display region 110, and the second bending region 132 is connected between the third bending region 133 and the second display region 120. A distance between one end that is of the first bending region 131 and that is connected to the first display region 110 and one end that is of the second bending region 132 and that is connected to the second display region 120 is a first distance, a distance between one end that is of the first bending region 131 and that is connected to the third bending region 133 and one end that is of the second bending region 132 and that is connected to the third bending region 133 is a second distance, and the second distance is greater than the first distance, so that the third display region 130 is folded into a teardrop shape, to prolong a lifespan of the foldable display screen 100. It can be understood that the third display region 130 may be alternatively folded into another shape, for example, a U shape. This is not limited in this application.

To implement a folding function of the foldable electronic device 01, the hinge assembly 203 may be configured to implement relative rotation of the first housing 201 and the second housing 202. When the foldable electronic device 01 switches from the flattened state shown in FIG. 1 to the folded state shown in FIG. 2, the first housing 201 and the second housing 202 rotate toward each other, to drive the foldable display screen 100 to be folded, so that the foldable display screen 100 switches from the flattened state shown in FIG. 1 to the folded state shown in FIG. 2. When the foldable electronic device 01 switches from the folded state shown in FIG. 2 to the flattened state shown in FIG. 1, the first housing 201 and the second housing 202 rotate away from each other, to drive the foldable display screen 100 to be unfolded, so that the foldable display screen 100 switches from the folded state shown in FIG. 2 to the flattened state shown in FIG. 1.

As shown in FIG. 1, when the first housing 201 and the second housing 202 rotate to an included angle of approximately 180°, the first housing 201 and the second housing 202 are flattened, and the foldable display screen 100 is in the flattened state. In this case, the hinge assembly 203 supports the third display region 130, to support flattening of the foldable display screen 100.

As shown in FIG. 2, when the first housing 201 and the second housing 202 rotate to an included angle of approximately 0°, the first housing 201 and the second housing 202 are closed together, and the foldable display screen 100 is in the folded state. In this case, the hinge assembly 203 provides a screen accommodating space to avoid the third display region 130, to support folding of the foldable display screen 100.

It should be noted that the foldable electronic device 01 shown in FIG. 2 is an electronic device with an inward-folding design. To be specific, in the folded state, the foldable display screen 100 is located on an inner side of the support component 200. In this way, the foldable display screen 100 is invisible to a user, and the foldable display screen 100 can be prevented from being scratched. In addition, it should be understood that, when the foldable electronic device 01 is in the folded state, a volume of the foldable electronic device 01 can be reduced. This facilitates carrying.

FIG. 3 is a diagram of a structure of a hinge assembly in a flattened state according to a related technology. FIG. 4 is a sectional view of the hinge assembly shown in FIG. 3 taken along a cutting plane line X1-X1. FIG. 5 is a diagram of a structure of the hinge assembly shown in FIG. 4 in a folded state. It should be noted that FIG. 5 can be understood as a sectional view of the hinge assembly 203 shown in FIG. 3 in a folded state taken along a cutting plane line that is at a same position as the cutting plane line X1-X1.

It should be understood that the hinge assembly 203 shown in FIG. 3 to FIG. 5 can be applied to the foldable electronic device 01 shown in FIG. 1 and FIG. 2. It should be noted that the flattened state of the hinge assembly 203 shown in FIG. 3 and FIG. 4 can be understood as a state of the hinge assembly 203 when the foldable electronic device 01 is in the flattened state shown in FIG. 1, and the folded state of the hinge assembly 203 shown in FIG. 5 can be understood as a state of the hinge assembly 203 when the foldable electronic device 01 is in the folded state shown in FIG. 2. For ease of understanding and description, FIG. 4 and FIG. 5 further show a third display region 130.

It can be learned from FIG. 4 and FIG. 5 that in the hinge assembly 203, a door panel swing arm B111 and a door panel swing arm B211 are disposed on two sides of a center line O11 of a hinge base 210, and the center line O11 is a reference line passing through a center O1 of the hinge base 210 in an X-axis direction and extending in a Z-axis direction. The door panel swing arm B111 and the door panel swing arm B211 are both rotatably connected to the hinge base 210, and are capable of rotating around the hinge base 210. As the foldable electronic device switches between the folded state and the flattened state, the door panel swing arm B111 and the door panel swing arm B211 rotate around the hinge base 210 between a folded position shown in FIG. 5 and a flattened position shown in FIG. 4.

In a process in which the door panel swing arm B111 and the door panel swing arm B211 rotate around the hinge base 210, a floating support plate 230 may move up and down relative to the hinge base 210 under the drive of the door panel swing arm B111 and the door panel swing arm B211. That the floating support plate 230 moves upward relative to the hinge base 210 means that the floating support plate 230 moves toward a direction away from the hinge base 210, that is, a positive direction of a Z axis shown in the figure. That the floating support plate 230 moves downward relative to the hinge base 210 means that the floating support plate 230 moves toward a direction close to the hinge base 210, that is, a negative direction of the Z axis shown in the figure. It should be noted that the floating support plate 230 may move up and down relative to the hinge base 210 along a Z-axis direction, or a direction in which the floating support plate 230 moves up and down relative to the hinge base 210 may be tilted relative to the Z-axis direction. It should be understood that the Z-axis direction is a thickness direction of the floating support plate 230, and is also a direction perpendicular to a plate surface of the floating support plate 230.

Specifically, when the foldable electronic device switches from the folded state to the flattened state, the first swing arm B1 and the second swing arm B2 rotate around the hinge base 210 from the folded position shown in FIG. 5 to the flattened position shown in FIG. 4, and the floating support plate 230 moves upward relative to the hinge base 210 from a clearance position shown in FIG. 5 to a support position shown in FIG. 4, to support the third display region 130 in the flattened state shown in FIG. 4. When the foldable electronic device switches from the flattened state to the folded state, the first swing arm B1 and the second swing arm B2 rotate around the hinge base 210 from the flattened position shown in FIG. 4 to the folded position shown in FIG. 5, and the floating support plate 230 moves downward relative to the hinge base 210 from the support position shown in FIG. 4 to the clearance position shown in FIG. 5, to provide a screen accommodating space to avoid the third display region 130 in the folded state shown in FIG. 5.

For enabling the floating support plate 230 to move up and down relative to the hinge base 210, refer to FIG. 6. FIG. 6 is a diagram of a structure of the floating support plate 230 in the hinge assembly 203 shown in FIG. 3. A region N1 is further enlarged in the figure.

It can be learned from FIG. 6 that the floating support plate 230 includes a plate body 231, an extension 232, a screw 233, and a spring 234. The extension 232 is located on a back side of the plate body 231, and extends in a direction away from a plate surface of the plate body 231. A threaded shank of the screw 233 is threadedly connected to one end that is of the extension 232 and that is away from the plate body 231. The spring 234 is connected to a head of the screw 233, and is sleeved around the extension 232.

When the floating support plate 230 is applied to the hinge assembly 203 shown in FIG. 4 and FIG. 5, the floating support plate 230 is fastened to the hinge base 210 in a movable manner by using the screw 233, to ensure that the floating support plate 230 moves up and down relative to the hinge base 210. In addition, the floating support plate 230 is driven to move through cooperation of the spring 234, the door panel swing arm B111, and the door panel swing arm B211, to drive the floating support plate 230 to move.

Specifically, still refer to FIG. 4 and FIG. 5. The hinge base 210 has a groove 211 and a groove 212. An opening of the groove 211 faces the third display region 130, an opening of the groove 212 faces a hinge cover 220, and the groove 211 and the groove 212 are in communication with each other through a through hole 213.

When the floating support plate 230 shown in FIG. 6 is mounted on the hinge base 210 of the hinge assembly 203 shown in FIG. 4 and FIG. 5, an assembly process is as follows: First, the screw 233 of the floating support plate 230 shown in FIG. 6 is detached from the extension 232. Then, the plate body 231 is placed in the groove 211 shown in FIG. 4, and the extension 232 passes through the through hole 213. Next, the threaded shank of the screw 233 passes through the through hole 213 from an opening side of the groove 212. Afterward, the screw 233 is screwed, so that the threaded shank of the screw 233 is threadedly connected to the extension 232 of the floating support plate 230 located in the groove 211. In this way, assembly is completed.

Still refer to FIG. 4 and FIG. 5. Due to dimensional constraints of the head of the screw 233 and the spring 234 (for example, a radial size of the head of the screw 233 and a size of the spring 234 are greater than a diameter of the through hole 213), the head of the screw 233 and the spring 234 are limited in the groove 212, and the spring 234 abuts between a groove bottom of the groove 212 and the head of the screw 233. The threaded shank of the screw 233 extends from the groove 212 into the groove 211 through the through hole 213, and is threadedly connected to the extension 232 of the floating support plate 230 located in the groove 211. It can be learned that the screw 233 is not fastened to the hinge base 210, so that the screw 233 can move up and down relative to the hinge base 210, to support the floating support plate 230 in moving up and down relative to the hinge base 210. When the floating support plate 230 moves upward relative to the hinge base 210, the screw 233 moves upward accordingly, so that the spring 234 located between the groove bottom of the groove 212 and the head of the screw 233 is pressed to generate an elastic force (that is, a reaction force). When the floating support plate 230 may move downward relative to the hinge base 210, the screw 233 moves downward accordingly, so that the pressed spring 234 is gradually restored.

Specifically, in a process in which the door panel swing arm B111 and the door panel swing arm B211 rotate from the folded position shown in FIG. 5 to the flattened position shown in FIG. 4, a second end of the door panel swing arm B111 and a second end of the door panel swing arm B211 gradually rotate to a position below the plate body 231, and gradually come into contact with a lower surface of the plate body 231, to pry the plate body 231 to move upward. When the door panel swing arm B111 and the door panel swing arm B211 rotate to the flattened position shown in FIG. 4, the second end of the door panel swing arm B111 and the second end of the door panel swing arm B211 are positioned below the plate body 231, and provide a supporting force to support the plate body 231, so that the plate body 231 is maintained at the support position to support the third display region 130. It should be understood that, as the plate body 231 moves upward, a downward elastic force F generated when the spring 234 is pressed becomes larger. Finally, the elastic force F of the spring 234 is equivalent to the supporting force of the two door panel swing arms. When the elastic force F reaches a maximum value, the plate body 231 is maintained at the support position due to interaction between the spring 234 and the two door panel swing arms.

In a process in which the door panel swing arm B111 and the door panel swing arm B211 rotate from the flattened position shown in FIG. 4 to the folded position shown in FIG. 5, the second end of the door panel swing arm B111 and the second end of the door panel swing arm B211 gradually withdraw from the position below the plate body 231, and the plate body 231 gradually loses support from the door panel swing arm B111 and the door panel swing arm B211 and moves downward under the drive of the elastic force F generated when the spring 234 is pressed. When the door panel swing arm B111 and the door panel swing arm B211 rotate to the folded position shown in FIG. 5, the plate body 231 moves to the clearance position, to provide a space to avoid the second bending region 132. It should be understood that, as the plate body 231 moves downward, the downward elastic force F generated when the spring 234 is pressed is smaller, and the plate body 231 is maintained at the clearance position when the elastic force F of the spring 234 becomes zero.

It can be learned that in the flattened state shown in FIG. 4, the floating support plate 230 needs to be supported by the door panel swing arm B111 and the door panel swing arm B211, so that the floating support plate 230 can be maintained at the support position to support the third display region 130. Once the door panel swing arm B111 and the door panel swing arm B211 are removed, the floating support plate 230 automatically moves to the clearance position under the action of the elastic force F.

In addition, in the flattened state shown in FIG. 4, the elastic force F generated when the spring 234 is pressed is transferred to the door panel swing arm B111 and the door panel swing arm B211 through the plate body 231, and acts downward on the second end of the door panel swing arm B111 and the second end of the door panel swing arm B211, so that a first end of the door panel swing arm B111 and a first end of the door panel swing arm B211 have a tendency to move upward (shown by dashed arrows in the figure). As a result, a flattening restoring force of the hinge assembly 203 is weakened.

The flattening restoring force of the hinge assembly 203 is a resistance that needs to be overcome when the hinge assembly 203 is reversely folded from a flattened state, and the flattening restoring force can be understood as a force that is used by the hinge assembly 203 in the flattened state to resist screen warping due to bending. Based on this, as the flattening restoring force of the hinge assembly 203 is weakened, stiffness of the hinge assembly 203 in the flattened state shown in FIG. 4 is weakened. This is not conducive to enabling the hinge assembly 203 in the flattened state to prevent screen warping and maintain a desirable flattened state.

To resolve the foregoing problem present in the hinge assembly 203 shown in FIG. 4 and FIG. 5, an embodiment of this application provides a hinge assembly 203.

For example, FIG. 7 is a diagram of a structure of a hinge assembly 203 in a flattened state according to an embodiment of this application. It should be understood that the hinge assembly 203 shown in FIG. 7 can be applied to the foldable electronic device 01 shown in FIG. 1 and FIG. 2. The flattened state of the hinge assembly 203 shown in FIG. 7 can be understood as a state of the hinge assembly 203 when the foldable electronic device 01 is in the flattened state shown in FIG. 1.

The hinge assembly 203 includes a first swing arm B1 and a second swing arm B2, a first door panel A1 and a second door panel A2, a multi-stable support plate 260, and a hinge base positioned below the multi-stable support plate 260 (which is shielded by the multi-stable support plate 260 in the figure). It should be understood that the hinge assembly 203 may alternatively include more components than those shown in the figure. This is not limited in embodiments of this application.

The first swing arm B1 and the second swing arm B2 are disposed on two sides of the hinge base in an X-axis direction, and are both rotatably connected to the hinge base, so that both the first swing arm B1 and the second swing arm B2 may rotate relative to the hinge base. It should be noted that the rotatable connection is a connection manner in which two connected components may rotate relative to each other, and includes but is not limited to manners implemented by using a physical axis or a virtual axis. Content of implementing a rotatable connection by using a physical axis or a virtual axis is described in detail during subsequent description of various types of swing arms, and may be adaptively referenced for understanding. Details are not described herein again.

The multi-stable support plate 260 is mounted on the hinge base 210 in a manner that allows relative movement, so that the multi-stable support plate 260 can move up and down relative to the hinge base. For a meaning and a specific implementation of up-and-down movement of the multi-stable support plate 260 relative to the hinge base, refer to related content of the foregoing floating support plate 230.

In this embodiment of this application, the multi-stable support plate 260 is driven by the first swing arm B1 and the second swing arm B2. Specifically, when the foldable electronic device switches from a flattened state to a folded state, the first swing arm B1 and the second swing arm B2 rotate toward each other, and drive the multi-stable support plate 260 to move downward relative to the hinge base. When the foldable electronic device switches from a folded state to a flattened state, the first swing arm B1 and the second swing arm B2 rotate away from each other, and drive the multi-stable support plate 260 to move upward relative to the hinge base.

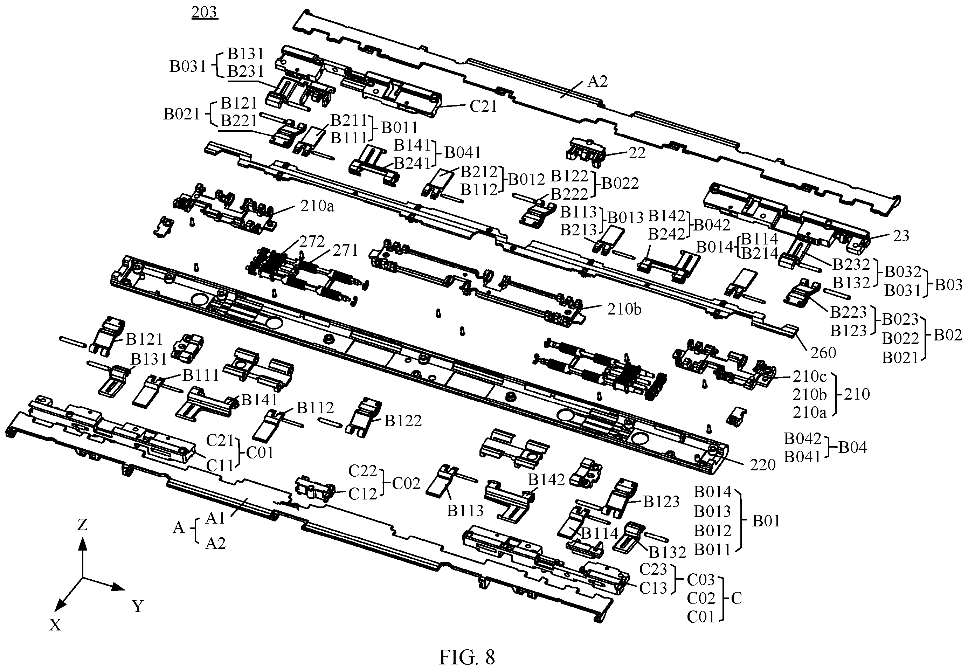

It should be noted that each of the first swing arm B1 and the second swing arm B2 may be any one of a plurality of types of swing arms that may rotate relative to the hinge base, for example, may be a main swing arm, a secondary swing arm, or a damping swing arm. The following first describes various implementations of the first swing arm B1 and the second swing arm B2 with reference to FIG. 8 to FIG. 13.

Refer to FIG. 7 and FIG. 8 together. FIG. 8 is a diagram of an exploded structure of the hinge assembly 203 shown in FIG. 7 in a flattened state.

The hinge assembly 203 includes the hinge base 210, a hinge cover 220, the multi-stable support plate 260, a door panel assembly A, a door panel swing arm assembly B01, a main swing arm assembly B02, a secondary swing arm assembly B03, a damping swing arm assembly B04, and a connecting assembly C. It should be understood that the hinge assembly 203 may alternatively include more components than those shown in the figure. This is not limited in embodiments of this application. The following separately describes position relationships, connection relationships, and functions of the components.

The hinge base 210 is used as a base for mounting moving parts of the hinge assembly 203. For example, the moving parts may be the multi-stable support plate 260, the door panel swing arm assembly B01, the main swing arm assembly B02, the secondary swing arm assembly B03, the damping swing arm assembly B04, and the like. The hinge base 210 is securely mounted on the hinge cover 220. In a specific implementation process, the hinge base 210 may be a single integral component, or may be a plurality of independent components. For example, in FIG. 8, the hinge base 210 includes a plurality of bases, such as a base 210a, a base 210b, and a base 210c, distributed in a Y-axis direction.

The multi-stable support plate 260 and the hinge cover 220 are located on two opposite sides of the hinge base 210 in a Z-axis direction. It should be understood that the Z-axis direction is a thickness direction of the hinge base 210. For ease of understanding, subsequently, a side on which the multi-stable support plate 260 is located is referred to as a front side of the hinge base 210, and a side on which the hinge cover 220 is located is referred to as a back side of the hinge base 210. In this case, the multi-stable support plate 260 is disposed on the front side of the hinge base 210, and the hinge cover 220 is disposed on the back side of the hinge base 210. It should be understood that the front side of the hinge base 210 is one side that is of the hinge base 210 and that faces a third display region 130, and the back side of the hinge base 210 is one side that is of the hinge base 210 and that is away from the third display region 130. For meanings of back sides and front sides of other components mentioned subsequently, refer to the foregoing descriptions for understanding. Details are not described again.

The hinge cover 220 is used as an exterior part of the hinge assembly 203, and is configured to enclose the hinge base 210 in the hinge assembly 203 and the moving parts disposed on the hinge base 210, to ensure aesthetic effect of the foldable electronic device 01.

The connecting assembly C includes three connecting member pairs that are spaced apart in the Y-axis direction of the hinge base 210: a connecting member pair C01, a connecting member pair C02, and a connecting member pair C03. One connecting member pair includes one first connecting member and one second connecting member. For ease of differentiation, subsequently, a first connecting member and a second connecting member that are included in the connecting member pair C01 are referred to as a connecting member C11 and a connecting member C21, a first connecting member and a second connecting member that are included in the connecting member pair C02 are referred to as a connecting member C12 and a connecting member C22, and a first connecting member and a second connecting member that are included in the connecting member pair C03 are referred to as a connecting member C13 and a connecting member C23. The following uses the connecting member C11 and the connecting member C21 included in the connecting member pair C01 as an example for description. This may be used as a reference for implementation of other connecting member pairs.

The connecting member C11 and the connecting member C21 included in the connecting member pair C01 are located on the two opposite sides of the hinge base 210 in the X-axis direction. In addition, in FIG. 8, the connecting member C11 and the connecting member C21 exhibit mirror symmetry in the X-axis direction. Certainly, the connecting member C11 and the connecting member C21 may alternatively not exhibit mirror symmetry in other embodiments. It should be understood that the X-axis direction is a width direction of the hinge base 210. For ease of understanding and description, subsequently, a side on which the connecting member C11 is located is referred to as a left side of the hinge base 210, and a side on which the connecting member C21 is located is referred to as a right side of the hinge base 210. It should be understood that the left side of the hinge base 210 faces the foregoing first housing 201, and the right side of the hinge base 210 faces the foregoing second housing 202. For meanings of left sides and right sides of other components mentioned subsequently, refer to the foregoing descriptions for understanding. Details are not described again.

The connecting member C11 on the left side of the hinge base 210 is configured to invariably connect to the first housing 201, and the connecting member C21 on the right side of the hinge base 210 is configured to invariably connect to the second housing 202. In this way, when the first housing 201 and the second housing 202 rotate toward each other, the connecting member C11 and the connecting member C21 that are located on the two sides of the hinge base 210 are respectively driven to rotate toward each other. When the first housing 201 and the second housing 202 rotate away from each other, the connecting member C11 and the connecting member C21 that are located on the two sides of the hinge base 210 are respectively driven to rotate away from each other.

Optionally, the connecting member C11 and the first housing 201 may be separately formed and connected to each other, for example, may be connected to each other through a fastener (for example, a bolt, a screw, a pin, or a rivet). Certainly, the connecting member C11 and the first housing 201 may be alternatively integrally formed as an integral structure in some other embodiments. Similarly, the connecting member C21 and the second housing 202 may be separately formed and connected to each other, or may be integrally formed as an integral structure. The connecting member C11 and the connecting member C21 may be structural members in various regular or irregular shapes, for example, may be but is not limited to a block-like structure, a plate-like structure, or a frame structure. It should be understood that the first connecting members and the second connecting members of the other connecting member pairs are also respectively invariably connected to the first housing 201 and the second housing 202. For an invariable connection manner and a movement principle, refer to the connecting member C11 and the connecting member C21.

The door panel assembly A includes the first door panel A1 and the second door panel A2. The first door panel A1 and the second door panel A2 are located on the two opposite sides of the hinge base 210 in the X-axis direction, and the first door panel A1 and the second door panel A2 exhibit mirror symmetry in the X-axis direction or may not exhibit mirror symmetry in other embodiments. The first door panel A1 is located between the left side of the hinge base 210 and the first connecting member, and the second door panel A2 is located between the right side of the hinge base 210 and the second connecting member. One end of the first door panel A1 is rotatably connected to the first connecting member, and one end of the second door panel A2 is rotatably connected to the second connecting member. In this way, when the first connecting member and the second connecting member rotate toward each other, the first door panel A1 and the second door panel A2 located on the two sides of the hinge base 210 are respectively driven to rotate toward each other, to drive the first bending region 131 and the second bending region 132 of the third display region 130 shown in FIG. 2 to move close to each other, so that the third display region 130 is bent. When the first connecting member and the second connecting member rotate away from each other, the first door panel A1 and the second door panel A2 located on the two sides of the hinge base 210 are respectively driven to rotate away from each other, to drive the first bending region 131 and the second bending region 132 of the third display region 130 shown in FIG. 2 move away from each other, so that the third display region 130 is unfolded.

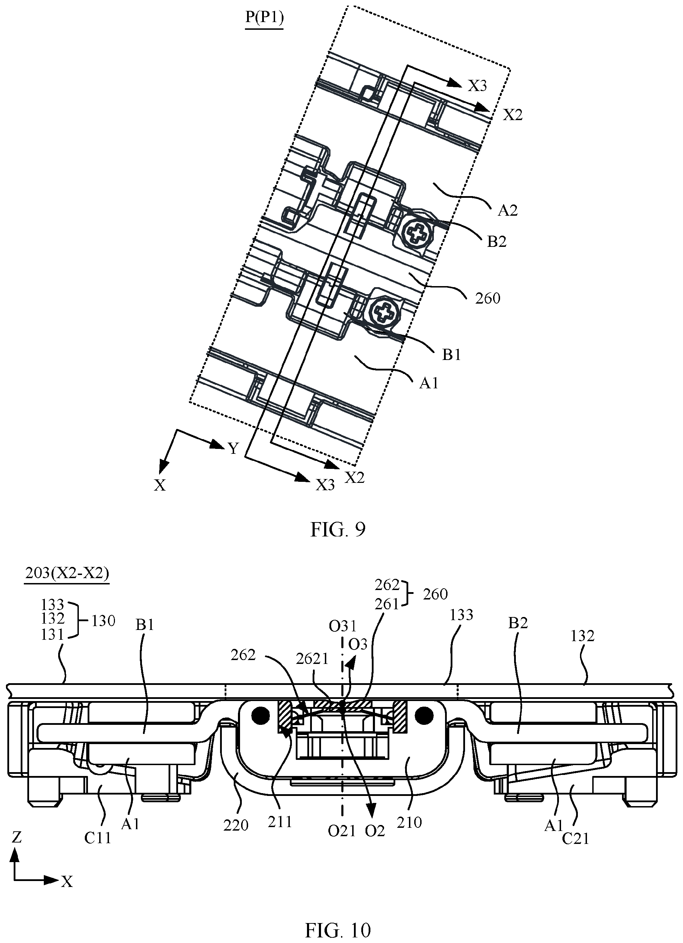

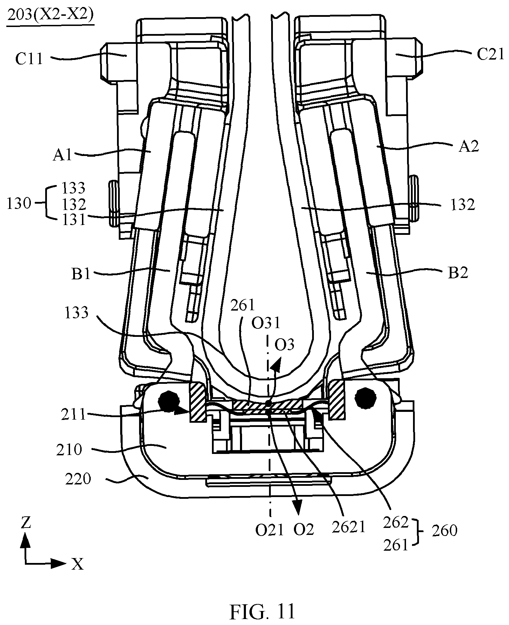

With reference to FIG. 9 to FIG. 11, FIG. 10 is a sectional view of the hinge assembly shown in FIG. 7 taken along a cutting plane line X2-X2 shown in FIG. 9. FIG. 11 is a diagram of a structure of the hinge assembly shown in FIG. 10 in a folded state. It should be noted that FIG. 11 can be understood as a sectional view of the hinge assembly 203 shown in FIG. 9 in a folded state taken along a cutting plane line that is at a same position as the cutting plane line X2-X2. It should be noted that four regions P are shown in FIG. 7 by using four dashed-line boxes. FIG. 9 is an enlarged view of one region P (a region P1) shown in FIG. 7.

It should be understood that the hinge assembly 203 shown in FIG. 10 and FIG. 11 can be applied to the foldable electronic device 01 shown in FIG. 1 and FIG. 2. It should be noted that the flattened state of the hinge assembly 203 shown in FIG. 10 can be understood as a state of the hinge assembly 203 when the foldable electronic device 01 is in the flattened state shown in FIG. 1, and the folded state of the hinge assembly 203 shown in FIG. 11 can be understood as a state of the hinge assembly 203 when the foldable electronic device 01 is in the folded state shown in FIG. 2. For ease of understanding and description, FIG. 10 and FIG. 11 further show the third display region 130.

It can be learned from FIG. 10 that, when the hinge assembly 203 is in the flattened state, the first door panel A1 and the second door panel A2 respectively rotate to the left side and the right side of the hinge base 210 shown in FIG. 10, and the first door panel A1 and the second door panel A2 are at an angle of approximately 180°. In this case, the first bending region 131, the third bending region 133, and the second bending region 132 are sequentially arranged along the X-axis direction at an angle of approximately 180°, that is, the third display region 130 is flattened. With reference to FIG. 1, the first housing 201 and the second housing 202 respectively rotate to a left side and a right side of the hinge assembly 203, the first housing 201 and the second housing 202 are at an angle of approximately 180°, and the foldable display screen 100 is in the flattened state.

As shown in FIG. 11, when the hinge assembly 203 is in the folded state, the first door panel A1 and the second door panel A2 rotate to a position above the hinge base 210 (that is, the front side of the hinge base 210), and a distance between one end that is of the first door panel A1 and that is close to the hinge base 210 and one end that is of the second door panel A2 and that is close to the hinge base 210 is greater than a distance between the other end of the first door panel A1 and the other end of the second door panel A2, so that an included angle between the first door panel A1 and the second door panel A2 is an acute angle less than a specific angle (which may be set depending on a requirement). In this case, the first bending region 131 and the second bending region 132 each form an angle with the third bending region 133, and the third display region 130 is folded. With reference to FIG. 2, the first housing 201 and the second housing 202 both rotate to the position above the hinge assembly 203, the first housing 201 and the second housing 202 are at an angle of approximately 0°, the first housing 201 and the second housing 202 are closed together, and the foldable display screen 100 is in the folded state.

It should be noted that, with reference to FIG. 11, the first door panel A1 is rotatably connected to the connecting member C11, the second door panel A2 is rotatably connected to the connecting member C21, the connecting member C11 is invariably connected to the first housing 201 shown in FIG. 2, and the connecting member C21 is invariably connected to the second housing 202 shown in FIG. 2. Therefore, the first door panel A1 may rotate relative to the first housing 201, and the second door panel A2 may rotate relative to the second housing 202. This enables a rotation angle of the first housing 201 shown in FIG. 2 relative to the hinge base 210 to be less than a rotation angle of the first door panel A1 relative to the first housing 201 shown in FIG. 2, and enables a rotation angle of the second housing 202 shown in FIG. 2 relative to the hinge base 210 to be less than a rotation angle of the second door panel A2 relative to the second housing 202 shown in FIG. 2, so that the distance between one end that is of the first door panel A1 and that is close to the hinge base 210 and one end that is of the second door panel A2 and that is close to the hinge base 210 is greater than the distance between the other end of the first door panel A1 and the other end of the second door panel A2. In this way, the third display region 130 can be folded into a teardrop shape, and the foldable display screen 100 can be folded to present a teardrop shape.

It should be understood that in other embodiments, the first door panel A1 may be invariably connected to the connecting member C11 and the second door panel A2 may be invariably connected to the connecting member C21. This is not limited in embodiments of this application.

It can be understood that, still with reference to FIG. 7 and FIG. 8, the first door panel A1 may be rotatably connected to all or some of first connecting members included in the connecting assembly C, and the second door panel A2 may be rotatably connected to all or some of second connecting members included in the connecting assembly C. For example, the first door panel A1 is rotatably connected to both the connecting member C11 and the connecting member C13, and the second door panel A2 is rotatably connected to both the connecting member C21 and the connecting member C23.

Optionally, the first door panel A1 and the second door panel A2 are entire panels extending in the Y-axis direction. In other embodiments, the first door panel A1 and the second door panel A2 may be alternatively divided into a plurality of door subpanels distributed in the Y-axis direction. A quantity of door subpanels may be equivalent to a quantity of door panel swing arms, and one door subpanel is slidably connected to one door panel swing arm.

The door panel swing arm assembly B01 includes four door panel swing arm pairs that are spaced apart in the Y-axis direction of the hinge base 210: a door panel swing arm pair B011, a door panel swing arm pair B012, a door panel swing arm pair B013, and a door panel swing arm pair B014. Optionally, in other embodiments, the door panel swing arm assembly B01 may alternatively include more or fewer door panel swing arm pairs, for example, one pair, two pairs, three pairs, or six pairs. This is not limited in embodiments of this application.

One door panel swing arm pair includes one first door panel swing arm and one second door panel swing arm. For ease of differentiation, subsequently, a first door panel swing arm and a second door panel swing arm included in the door panel swing arm pair B011 are referred to as a door panel swing arm B111 and a door panel swing arm B211, a first door panel swing arm and a second door panel swing arm included in the door panel swing arm pair B012 are referred to as a door panel swing arm B112 and a door panel swing arm B212, a first door panel swing arm and a second door panel swing arm included in the door panel swing arm pair B013 are referred to as a door panel swing arm B113 and a door panel swing arm B213, and a first door panel swing arm and a second door panel swing arm included in the door panel swing arm pair B014 are referred to as a door panel swing arm B114 and a door panel swing arm B214.

The following uses the door panel swing arm B111 and the door panel swing arm B211 included in the door panel swing arm pair B011 as an example for description. This may be used as a reference for implementation of other door panel swing arm pairs.

In FIG. 8, the door panel swing arm B111 and the door panel swing arm B211 are located on the two opposite sides of the hinge base 210 in the X-axis direction, and the door panel swing arm B111 and the door panel swing arm B211 exhibit mirror symmetry in the X-axis direction. In other embodiments, in consideration of structural design, the door panel swing arm B111 and the door panel swing arm B211 may be alternatively staggered by a distance in the Y-axis direction.

The door panel swing arm B111 is located between the left side of the hinge base 210 and the first door panel A1, and the door panel swing arm B211 is located between the right side of the hinge base 210 and the second door panel A2. One end of the door panel swing arm B111 and one end of the door panel swing arm B211 are both rotatably connected to the hinge base 210, so that the door panel swing arm B111 and the door panel swing arm B211 are capable of rotating around the hinge base 210. The other end of the door panel swing arm B111 is slidably connected to the first door panel A1. For example, the first door panel A1 is provided with a straight sliding slot, and the other end of the door panel swing arm B111 extends into the straight sliding slot of the first door panel A1 and can slide in the straight sliding slot. Similarly, the other end of the door panel swing arm B211 is slidably connected to the second door panel A2.

In this way, when the first door panel A1 and the second door panel A2 rotate toward each other, the door panel swing arm B111 and the door panel swing arm B211 located on the two sides of the hinge base 210 are respectively driven to rotate toward each other. In this case, relative sliding in directions away from each other is performed between the door panel swing arm B111 and the first door panel A1 and between the door panel swing arm B211 and the second door panel A2. An assembly formed by the door panel swing arm B111 and the first door panel A1 and an assembly formed by the door panel swing arm B211 and the second door panel A2 are extended in length. When the first door panel A1 and the second door panel A2 rotate away from each other, the door panel swing arm B111 and the door panel swing arm B211 located on the two sides of the hinge base 210 are respectively driven to rotate away from each other. In this case, relative sliding in directions close to each other is performed between the door panel swing arm B111 and the first door panel A1 and between the door panel swing arm B211 and the second door panel A2. An assembly formed by the door panel swing arm B111 and the first door panel A1 and an assembly formed by the door panel swing arm B211 and the second door panel A2 are shortened in length.

The door panel swing arm B111 and the door panel swing arm B211 included in the door panel swing arm pair B011 are used as an example to describe a specific implementation of rotatable connections between the door panel swing arm B111 and the hinge base 210 and between the door panel swing arm B211 and the hinge base 210.

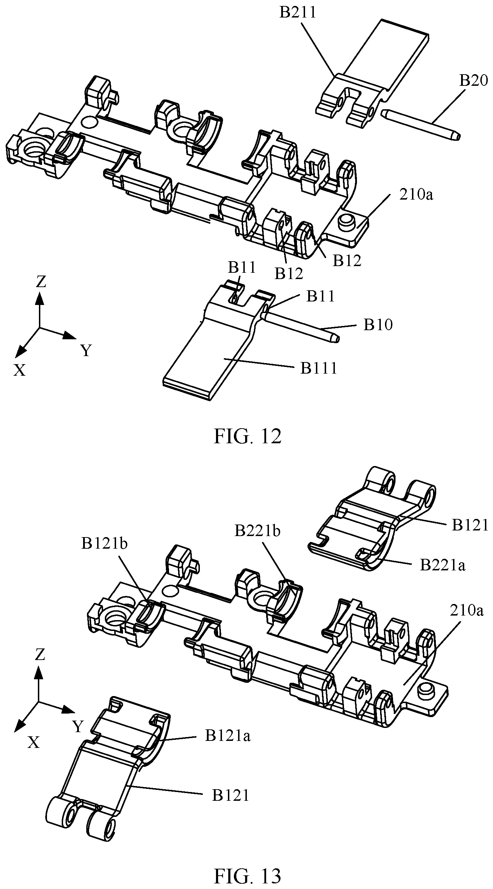

In some embodiments, with reference to FIG. 12, the hinge assembly 203 further includes a rotating shaft B10 and a rotating shaft B20, the door panel swing arm B111 is rotatably connected to the base 210a through the rotating shaft B10, and the door panel swing arm B211 is rotatably connected to the base 210a through the rotating shaft B20. The following uses an example for description in which the door panel swing arm B111 is rotatably connected to the base 210a through the rotating shaft B10. This may be used as a reference for a specific implementation of the rotatable connection between the door panel swing arm B211 and the base 210a through the rotating shaft B20.

It can be understood that the rotating shaft B10 may be a rotating shaft formed separately from the door panel swing arm B111 and the base 210a, the door panel swing arm B111 and the base 210a may be provided with a rotating shaft hole B11 and a rotating shaft hole B12, respectively, and the rotating shaft B10 may be disposed through the rotating shaft hole B11 on the door panel swing arm B111 and the rotating shaft hole B12 on the base 210a, to implement a rotatable connection between the first swing arm B1 and the base 210a. FIG. 12 shows this case by using an example.

Certainly, the rotating shaft B10 and the door panel swing arm B111 may be alternatively integrally formed as an integral structure, the base 210a is provided with a rotating shaft hole, and the rotating shaft B10 rotatably mates with the rotating shaft hole on the hinge base 210. Similarly, the rotating shaft B10 and the base 210a may be alternatively integrally formed as an integral structure, the door panel swing arm B111 is provided with a rotating shaft hole, and the rotating shaft B10 rotatably mates with the rotating shaft hole on the door panel swing arm B111.

It can be learned that in the foregoing embodiment, the door panel swing arm B111 and the door panel swing arm B211 are rotatably connected to the base 210a by using physical axes (the rotating shaft B10 and the rotating shaft B20), respectively. It should be understood that connections between the door panel swing arm B111 and the base 210a and between the door panel swing arm B211 and the base 210a may be alternatively implemented in other manners, provided that the door panel swing arm B111 and the door panel swing arm B211 can be rotatably connected to the base 210a. For example, the rotatable connections between the door panel swing arm B111 and the base 210a and between the door panel swing arm B211 and the base 210a may be alternatively implemented by using virtual axes. The foregoing content is described during subsequent description of a first main swing arm B121 and a second main swing arm B221, and may be adaptively referenced for understanding. Details are not described herein again.

Still refer to FIG. 7 and FIG. 8. The main swing arm assembly B02 includes three main swing arm pairs that are spaced apart in the Y-axis direction of the hinge base 210: a main swing arm pair B021, a main swing arm pair B022, and a main swing arm pair B023. Optionally, in other embodiments, the main swing arm assembly B02 may alternatively include more or fewer main swing arm pairs, for example, one pair, two pairs, or six pairs. This is not limited in embodiments of this application.

One main swing arm pair includes one first main swing arm and one second main swing arm. For ease of differentiation, subsequently, a first main swing arm and a second main swing arm included in the main swing arm pair B021 are referred to as a main swing arm B121 and a main swing arm B221, a first main swing arm and a second main swing arm included in the main swing arm pair B022 are referred to as a main swing arm B122 and a main swing arm B222, and a first main swing arm and a second main swing arm included in the main swing arm pair B023 are referred to as a main swing arm B123 and a main swing arm B223.

The following uses the main swing arm B121 and the main swing arm B221 included in the main swing arm pair B021 as an example for description. This may be used as a reference for implementation of other main swing arm pairs.

The main swing arm B121 and the main swing arm B221 are located on the two opposite sides of the hinge base 210 (specifically, the base 210a) in the X-axis direction. The main swing arm B121 is located between the left side of the hinge base 210 and the connecting member C11, and the main swing arm B221 is located between the right side of the hinge base 210 and the connecting member C21. One end of the main swing arm B121 and one end of the main swing arm B221 are both rotatably connected to the hinge base 210. The other end of the main swing arm B121 is rotatably connected to the connecting member C11, and the other end of the main swing arm B221 is rotatably connected to the connecting member C21.

The following first describes a specific implementation in which one end of the main swing arm B121 and one end of the main swing arm B221 are both rotatably connected to the hinge base 210.

In some embodiments, with reference to FIG. 13, one end of the main swing arm B121 is provided with an arc-shaped sliding part B121a, and the base 210a is provided with an arc-shaped sliding connection part B121b. The arc-shaped sliding part B121a is slidably connected to the arc-shaped sliding connection part B121b, so that the one end of the main swing arm B121 is rotatably connected to the base 210a. Similarly, one end of the main swing arm B221 is provided with an arc-shaped sliding part B221a, and the base 210a is provided with an arc-shaped sliding connection part B221b. The arc-shaped sliding part B221a is slidably connected to the arc-shaped sliding connection part B221b, so that the one end of the main swing arm B221 is rotatably connected to the base 210a.

Because physical axes (for example, structures similar to the foregoing rotating shaft B10 and rotating shaft B20) do not exist, herein, the rotatable connection between the main swing arm B121 and the hinge base 210 is implemented through the slidable connection between the arc-shaped sliding part B121a and the arc-shaped sliding connection part B121b, and may be considered as a rotatable connection between the main swing arm B121 and the base 210a by using a virtual axis. Similarly, it may also be considered that the main swing arm B221 is rotatably connected to the base 210a by using a virtual axis. In FIG. 13, because the main swing arm B121 and the main swing arm B221 are connected to the hinge base 210 by using the virtual axes, respectively, a large size of the base 210a in the X-axis direction is occupied. The main swing arm B121 and the main swing arm B221 are staggered by a distance in the Y-axis direction to avoid interference during rotation. In other embodiments, for example, in a scenario in which there is no interference during rotation, the main swing arm B121 and the main swing arm B221 may alternatively exhibit mirror symmetry in the X-axis direction.

The arc-shaped sliding part B121a and the arc-shaped sliding connection part B121b are used as an example for description. It can be understood that the arc-shaped sliding part B121a and the arc-shaped sliding connection part B121b slide relative to each other along an arc-shaped track to implement relative rotation. Both the arc-shaped sliding part B121a and the arc-shaped sliding connection part B121b are arc-shaped structures, and may be arc-shaped structures in various forms, provided that the arc-shaped sliding part B121a and the arc-shaped sliding connection part B121b can slide relative to each other along the arc-shaped track to be in contact with and mate with each other. The arc-shaped sliding part B121a and the main swing arm B121 may be integrally formed as an integral structure, or may be separately formed and invariably connected to each other. Similarly, the arc-shaped sliding connection part B121b and the base 210a may be integrally formed as an integral structure, or may be separately formed and invariably connected to each other.

Optionally, one of the arc-shaped sliding part B121a and the arc-shaped sliding connection part B121b is an arc-shaped slide rail, and the other is an arc-shaped sliding slot. FIG. 13 shows, by using an example, a case in which the arc-shaped sliding part B121a is an arc-shaped slide rail and the arc-shaped sliding connection part B121b is an arc-shaped sliding slot. Certainly, the arc-shaped sliding part B121a and the arc-shaped sliding connection part B121b may be alternatively interchanged, that is, the arc-shaped sliding part B121a is an arc-shaped sliding slot, and the arc-shaped sliding connection part B121b is an arc-shaped slide rail. The arc-shaped sliding part B121a is in surface contact with the arc-shaped sliding connection part B121b. To be specific, the arc-shaped slide rail may slide in the arc-shaped sliding slot along a slot wall of the arc-shaped sliding slot and may be in surface contact with the slot wall of the arc-shaped sliding slot.

It can be understood that the arc-shaped slide rail may be arc-shaped slide rails in a plurality of structural forms, for example, may be but is not limited to a plate-like arc-shaped slide rail (FIG. 13 shows this case by using an example) or an arc-shaped slide rail in a form of a raised rib, provided that the arc-shaped slide rail can be slidably connected to the arc-shaped sliding slot along the arc-shaped track. With such a setting, the arc-shaped slide rail and the arc-shaped sliding slot are slidably connected to and in surface contact with each other. Compared with point contact and line contact, this helps improve stability and reliability of relative sliding between the arc-shaped sliding part and the arc-shaped sliding connection part, and further improves stability of rotatable mating between the main swing arm B121 and the base 210a.

Mating between the arc-shaped sliding part B121a and the arc-shaped sliding connection part B121b is not limited to mating between the arc-shaped slide rail and the arc-shaped sliding slot. For example, both the arc-shaped sliding part B121a and the arc-shaped sliding connection part B121b may be arc-shaped sliding plates or arc-shaped slide rails, and outer walls thereof include arc-shaped walls. When the arc-shaped wall of the arc-shaped sliding part B121a and the arc-shaped wall of the arc-shaped sliding connection part B121b are slidably connected to and in surface contact with each other, the arc-shaped sliding part B121a and the arc-shaped sliding connection part B121b can also slide along the arc-shaped track, so that the main swing arm B121 is rotatably connected to the base 210a.

It can be understood that in other embodiments, the main swing arm B121 and the main swing arm B221 may be rotatably connected to the base 210a in other manners, for example, by using the foregoing physical axes, respectively.

Still with reference to FIG. 7 and FIG. 8, the following describes a specific implementation in which the other end of the main swing arm B121 is rotatably connected to the connecting member C11, and the other end of the main swing arm B221 is rotatably connected to the connecting member C21.

In some embodiments, the other end of the main swing arm B121 is rotatably connected to the connecting member C11 by using a physical axis, and the other end of the main swing arm B221 is rotatably connected to the connecting member C21 by using a physical axis. For a specific implementation, adaptively refer to the implementation in which the door panel swing arm B111 and the door panel swing arm B211 are rotatably connected to the base 210a by using the physical axes, respectively. In other embodiments, rotatable connections between the main swing arm B121 and the connecting member C11 and between the main swing arm B221 and the connecting member C21 may be alternatively implemented in other manners, for example, by using the foregoing virtual axes.

Still refer to FIG. 7 and FIG. 8. The secondary swing arm assembly B03 includes two secondary swing arm pairs that are spaced apart in the Y-axis direction of the hinge base 210: a secondary swing arm pair B031 and a secondary swing arm pair B032. Optionally, in other embodiments, the secondary swing arm assembly B03 may alternatively include more or fewer secondary swing arm pairs, for example, one pair, three pairs, or six pairs. This is not limited in embodiments of this application.

One secondary swing arm pair includes one first secondary swing arm and one second secondary swing arm. For ease of differentiation, subsequently, a first secondary swing arm and a second secondary swing arm included in the secondary swing arm pair B031 are referred to as a secondary swing arm B131 and a secondary swing arm B231, and a first secondary swing arm and a second secondary swing arm included in the secondary swing arm pair B032 are referred to as a secondary swing arm B132 and a secondary swing arm B232.

The following uses the secondary swing arm B131 and the secondary swing arm B231 included in the secondary swing arm pair B031 as an example for description. This may be used as a reference for implementation of other secondary swing arm pairs.

The secondary swing arm B131 and the secondary swing arm B231 are located on the two opposite sides of the hinge base 210 in the X-axis direction. The secondary swing arm B131 is located between the left side of the hinge base 210 and the connecting member C11, and the secondary swing arm B231 is located between the right side of the hinge base 210 and the connecting member C21. One end of the secondary swing arm B131 and one end of the secondary swing arm B231 are both rotatably connected to the hinge base 210. The other end of the secondary swing arm B131 is slidably connected to the connecting member C11. For example, the connecting member C11 is provided with a straight sliding slot, and the other end of the secondary swing arm B131 extends into the straight sliding slot of the connecting member C11 and can slide in the straight sliding slot. Similarly, the other end of the secondary swing arm B231 is slidably connected to the connecting member C21.

Optionally, still with reference to FIG. 7 and FIG. 8, the secondary swing arm B131 and the secondary swing arm B231 are rotatably connected to the hinge base 210 by using physical axes, respectively. For a specific implementation, adaptively refer to the implementation in which the door panel swing arm B111 and the door panel swing arm B211 are rotatably connected to the hinge base 210 by using the physical axes, respectively. In FIG. 8, because the secondary swing arm B131 and the secondary swing arm B231 are connected to the hinge base 210 by using the physical axes, respectively, a small size of the hinge base 210 in the X-axis direction is occupied. The secondary swing arm B131 and the secondary swing arm B231 are staggered by a distance in the Y-axis direction, so that staggered arrangement may be performed between the main swing arm B121 and the main swing arm B221 and between the secondary swing arm B131 and the secondary swing arm B231, to avoid interference between the main swing arm B121 and the main swing arm B221 during rotation. It can be learned from FIG. 8 that the main swing arm B121 is opposite to the secondary swing arm B231, and is staggered from the main swing arm B221. The secondary swing arm B131 is opposite to the main swing arm B221, and is staggered from the secondary swing arm B231. In other embodiments, for example, in a scenario in which there is no interference during rotation of the main swing arm B121 and the main swing arm B221, the secondary swing arm B131 and the secondary swing arm B231 may alternatively exhibit mirror symmetry in the X-axis direction.

It should be understood that in other embodiments, the secondary swing arm B131 and the secondary swing arm B231 may be rotatably connected to the hinge base 210 in other manners, for example, by using the foregoing virtual axes, respectively.

Still refer to FIG. 7 and FIG. 8. The damping swing arm assembly B04 includes two damping swing arm pairs that are spaced apart in the Y-axis direction of the hinge base 210: a damping swing arm pair B041 and a damping swing arm pair B042. Optionally, in other embodiments, the damping swing arm assembly B04 may alternatively include more or fewer damping swing arm pairs, for example, one pair, three pairs, or six pairs. This is not limited in embodiments of this application.

One damping swing arm pair includes one first damping swing arm and one second damping swing arm. For ease of differentiation, subsequently, a first damping swing arm and a second damping swing arm included in the damping swing arm pair B041 are referred to as a damping swing arm B141 and a damping swing arm B241, and a first damping swing arm and a second damping swing arm included in the damping swing arm pair B042 are referred to as a damping swing arm B142 and a damping swing arm B242.

The following uses the damping swing arm B141 and the damping swing arm B241 included in the damping swing arm pair B041 as an example for description. This may be used as a reference for implementation of other damping swing arm pairs.

The damping swing arm B141 and the damping swing arm B241 are located on the two opposite sides of the hinge base 210 in the X-axis direction. The damping swing arm B141 is located between the left side of the hinge base 210 and the connecting member C11, and the damping swing arm B241 is located between the right side of the hinge base 210 and the connecting member C21.

The hinge assembly 203 further includes a damping assembly 271 mounted on the hinge base 210. The damping assembly 271 is connected to both the damping swing arm B141 and the damping swing arm B241. For example, the damping assembly 271 may be directly engaged with the damping swing arm B141 and the damping swing arm B241, and is configured to provide a damping force for the damping swing arm B141 and the damping swing arm B241. With such a setting, specific damping exists when the damping swing arm B141 and the damping swing arm B241 located on the two sides of the hinge base 210 rotate relative to each other. This helps the damping swing arm B141 and the damping swing arm B241 remain or stay at a preset angular position after rotating by the angle relative to the hinge base 210, so that specific buffering effect is provided in a process in which the hinge assembly 203 rotates between a flattened state and a folded state, thereby helping improve stability and a user's operation feeling of the foldable electronic device 01 in different folding modes.

It can be understood that the damping assembly 271 may be various types of assemblies that can provide a damping force, for example, may be but is not limited to a damping assembly including a cam structure and an elastic member that are assembled.

One end of the damping swing arm B141 and one end of the damping swing arm B241 are both rotatably connected to the hinge base 210. For example, FIG. 8 shows rotatable connections implemented by using the foregoing physical axes. The other end of the damping swing arm B141 forms a higher pair joint with the connecting member C11, and the other end of the damping swing arm B241 forms a higher pair joint with the connecting member C21. A higher pair joint means that two mated components can both slide and rotate relative to each other.

In FIG. 8, the damping swing arm B141 and the damping swing arm B241 exhibit mirror symmetry in the X-axis direction. In other embodiments, the damping swing arm B141 and the damping swing arm B241 may be alternatively staggered by a distance in the Y-axis direction.

Optionally, the hinge assembly 203 further includes a synchronization assembly 272 mounted on the hinge base 210, and the damping swing arm B141 and the damping swing arm B241 are connected to each other via the synchronization assembly 272. With such a setting, the damping swing arm B141 and the damping swing arm B241 located on the two sides of the hinge base 210 may be linked through the synchronization assembly 272 to implement synchronous rotation, that is, may rotate toward each other synchronously to the folded state or rotate away from each other synchronously to the flattened state. It can be understood that the synchronization assembly 272 may be various types of assemblies configured to make two components synchronously rotate, for example, may be but is not limited to various types of gear assemblies, worm wheel and worm transmission assemblies, or friction wheel transmission assemblies.

Because the damping swing arm B141 and the damping swing arm B241 may synchronously rotate, the damping swing arm B141 may also be referred to as a synchronous swing arm B141, and the damping swing arm B241 may also be referred to as a synchronous swing arm B241. It can be understood that in other embodiments, the damping swing arm and the synchronous swing arm may be alternatively two different swing arms.

In FIG. 8, the door panel swing arm B111, the main swing arm B121, the secondary swing arm B131, and the damping swing arm B141 that are located on a same side of the hinge base 210 are all connected to the connecting member C11; the door panel swing arm B211, the main swing arm B221, the secondary swing arm B231, and the damping swing arm B241 that are located on a same side of the hinge base 210 are all connected to the connecting member C12; the door panel swing arm B114, the main swing arm B123, the secondary swing arm B132, and the damping swing arm B142 that are located on a same side of the hinge base 210 are all connected to the connecting member C13; and the door panel swing arm B214, the main swing arm B223, the secondary swing arm B232, and the damping swing arm B242 that are located on a same side of the hinge base 210 are all connected to the connecting member C23. In other embodiments, alternatively, connecting members connected to swing arms may be independent connecting members, or a combination of independent and shared connecting member (for example, the door panel swing arm B111 and the main swing arm B121 are both connected to one connecting member, the secondary swing arm B131 is connected to one independent connecting member, and the damping swing arm B141 is connected to one independent connecting member).

In FIG. 8, the connecting member C11, the connecting member C12, and the connecting member C13 located on the left side of the hinge base 210 are all separate structural members, and the connecting member C21, the connecting member C22, and the connecting member C23 located on the right side of the hinge base 210 are all separate structural members. In other embodiments, connecting members located on a same side of the hinge base 210 may be invariably connected to each other as an integral structural member.

It should be noted that in other embodiments, there may be more or fewer types of swing arms. For example, no secondary swing arm is disposed. It should be understood that the greater the types and quantity of swing arms, the higher the stability during rotation of the hinge assembly 203 is. In a specific implementation process, the types and quantity of swing arms may be set depending on a requirement.

In some embodiments, the first swing arm B1 and the second swing arm B2 shown in FIG. 7 may be respectively a first door panel swing arm and a second door panel swing arm included in one door panel swing arm pair shown in FIG. 8. For example, the first swing arm B1 is the door panel swing arm B111 and the second swing arm B2 is the door panel swing arm B211. FIG. 7 shows this case by using an example. The following embodiments all provide descriptions based on the case in which the first swing arm B1 is the door panel swing arm B111 and the second swing arm B2 is the door panel swing arm B211.

In some other embodiments, the first swing arm B1 and the second swing arm B2 shown in FIG. 7 may be respectively a first main swing arm and a second main swing arm included in one main swing arm pair shown in FIG. 8. For example, the first swing arm B1 is the main swing arm B121 and the second swing arm B2 may be the main swing arm B221.

In some other embodiments, the first swing arm B1 and the second swing arm B2 shown in FIG. 7 may be respectively a first secondary swing arm and a second secondary swing arm included in one secondary swing arm pair shown in FIG. 8. For example, the first swing arm B1 is the secondary swing arm B131 and the second swing arm B2 may be the secondary swing arm B231.

In some other embodiments, the first swing arm B1 and the second swing arm B2 shown in FIG. 7 may be respectively a first damping swing arm and a second damping swing arm included in one damping swing arm pair shown in FIG. 8. For example, the first swing arm B1 is the damping swing arm B141 and the second swing arm B2 may be the damping swing arm B241.

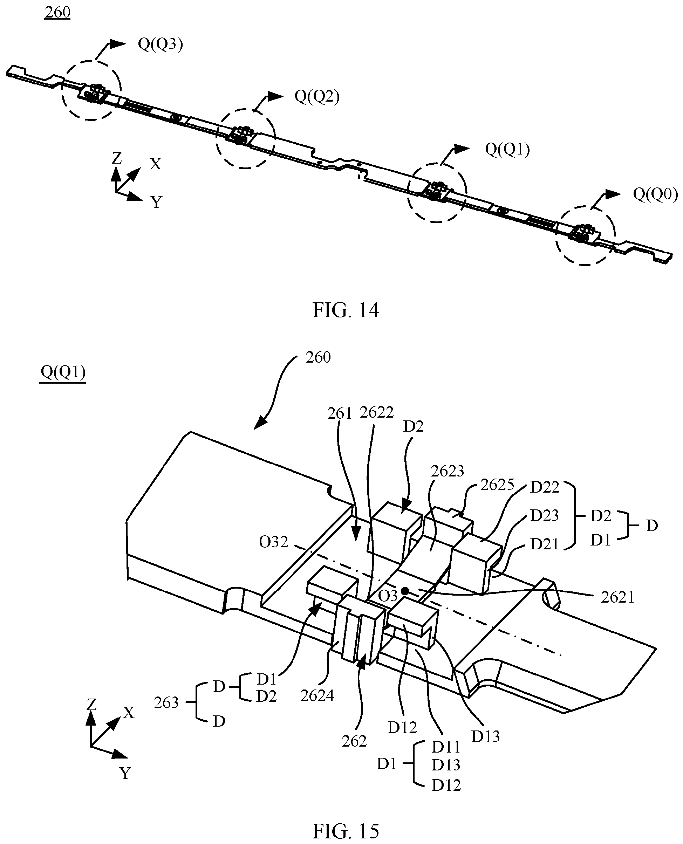

The following describes a structure and a function of a multi-stable support plate 260 with reference to FIG. 14 to FIG. 19.

With reference FIG. 14 and FIG. 15, FIG. 14 is a diagram of a structure of the multi-stable support plate according to an embodiment of this application. It should be noted that FIG. 14 shows the multi-stable support plate 260 shown in FIG. 7 from a perspective of a back side of the multi-stable support plate 260. Four regions Q are circled by four dashed circles in FIG. 14. FIG. 15 is an enlarged view of one region Q (namely, a region Q1) shown in FIG. 14.

It can be learned from FIG. 15 that the multi-stable support plate 260 includes a support portion 261, a multi-stable mechanism 262, and a drive mechanism 263. The multi-stable mechanism 262 and the drive mechanism 263 are both disposed at the back of the support portion 261.

It should be noted that the multi-stable mechanism 262 is a mechanism that can have at least two stable states when no external force is applied. For ease of understanding, a bistable mechanism 262 is used as an example for description in this embodiment of this application. Correspondingly, the multi-stable support plate 260 is referred to as a bistable support plate 260.

The bistable (bistable) mechanism 262 is a mechanism that can have three states: two different stable states and an unstable equilibrium state when no external force is applied. In this embodiment of this application, the two stable states of the bistable mechanism 262 are referred to as a first stable state and a second stable state. The first stable state and the second stable state are usually at local minima of energy, and the unstable equilibrium state is at a local maximum of energy. External driving force perturbation is needed for switching between different states.

In this embodiment of this application, the bistable mechanism 262 is disposed on the back side of the support portion 261. In this way, the bistable mechanism 262 may switch between states under the action of a driving force applied by the first swing arm B1 and/or the second swing arm B2 shown in FIG. 7 to the drive mechanism 263, to drive the support portion 261 connected to the bistable mechanism 262 to move to different positions along a Z-axis direction (or at a specific angle with the Z-axis direction). It should be understood that the Z-axis direction is a direction perpendicular to a plate surface of the support portion 261, and is also a thickness direction of the support portion 261. The following provides descriptions with reference to the accompanying drawings.

Optionally, still with reference to FIG. 15, the bistable mechanism 262 may be a compliant bistable mechanism 262.

The compliant bistable mechanism 262 includes a movable block 2621, a first compliant beam 2622, a second compliant beam 2623, a first fixed block 2624, and a second fixed block 2625.

The first fixed block 2624 and the second fixed block 2625 are spaced apart in an X-axis direction, the first fixed block 2624 is located on a first side of a center line O32 of the support portion 261, and the second fixed block 2625 is located on a second side of the center line O32 of the support portion 261. The center line O32 of the support portion 261 is a reference line passing through a center O3 of the support portion 261 in the X-axis direction and extending in a Y-axis direction, the X-axis direction can be understood as a width direction of the support portion 261, and the Y-axis direction can be understood as a length direction of the support portion 261. The first fixed block 2624 and the second fixed block 2625 are fastened in the hinge assembly 203 shown in FIG. 7. For example, the first fixed block 2624 and the second fixed block 2625 are fastened to the hinge base of the hinge assembly 203 shown in FIG. 7. Fastening means that two fastened components cannot move relative to each other, and does not indicate whether the two fastened components is detachable.

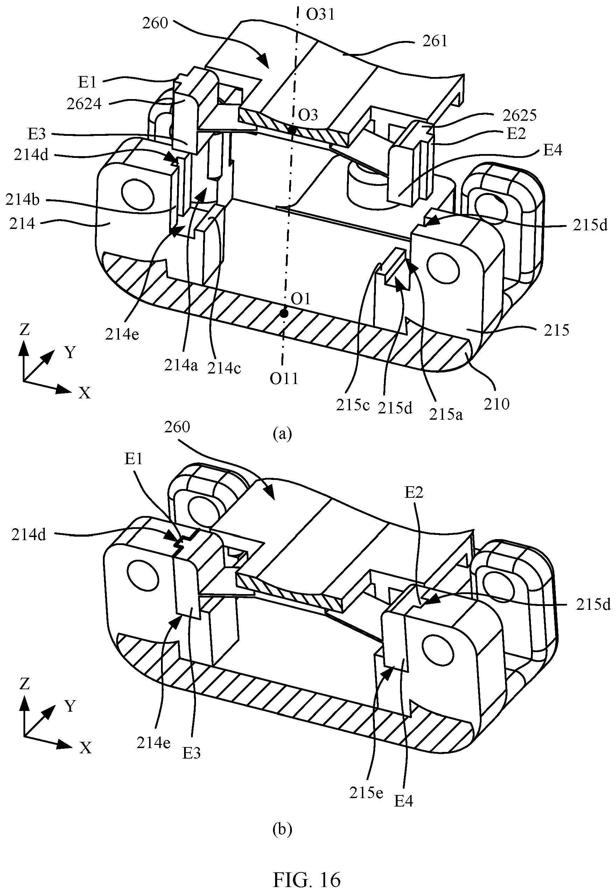

Specifically, refer to FIG. 16. FIG. 16 is mounting diagrams of a bistable support plate and a hinge base according to an embodiment of this application.

(a) in FIG. 16 shows a structure illustrating that the first fixed block 2624 and the second fixed block 2625 are not assembled with a first mounting platform 214 and a second mounting platform 215, respectively. It can be learned from (a) in FIG. 16 that the hinge base 210 includes the first mounting platform 214 and the second mounting platform 215 that are symmetrically disposed on two sides of a center line O11 (namely, a second center line).

The first mounting platform 214 has a first notch 214a, and the first notch 214a faces a side on which the second mounting platform 215 is located and a side on which the support portion 261 is located. Platform surfaces that are of the first mounting platform 214 and that form the first notch 214a include a first platform surface 214b and a second platform surface 214c, the first platform surface 214b faces the side on which the second mounting platform 215 is located, and the second platform surface 214c faces the side on which the support portion 261 is located. The first platform surface 214b has a first groove 214d extending in the Z-axis direction, and the second platform surface 214c has a third groove 214e extending in the Y-axis direction.

The second mounting platform 215 has a second notch 215a, and the second notch 215a faces a side on which the first mounting platform 214 is located and the side on which the support portion 261 is located. Platform surfaces that are of the second mounting platform 215 and that form the second notch 215a include a third platform surface 215b and a fourth platform surface 215c, the third platform surface 215b faces the side on which the first mounting platform 214 is located, and the fourth platform surface 215c faces the side on which the support portion 261 is located. The third platform surface 215b has a second groove 215d extending in the Z-axis direction, and the fourth platform surface 215c has a fourth groove 215e extending in the Y-axis direction.

It can be learned from (a) in FIG. 16 that the first fixed block 2624 and the second fixed block 2625 are axisymmetrically arranged by using a center line O31 of the support portion 261 as an axis. The first fixed block 2624 is located on a first side of the center line O31 of the support portion 261, and the second fixed block 2625 is located on a second side of the center line O31 of the support portion 261. The center line O31 of the support portion 261 is a reference line passing through the center O3 of the support portion 261 in the X-axis direction and extending in the Z-axis direction. The center line O31 of the support portion 261 overlaps with the center line O11 of the hinge base 210.

One side that is of the first fixed block 2624 and that is away from the second fixed block 2625 has a first protrusion E1 extending in the Z-axis direction, and the first protrusion E1 fits into the first groove 214d. An end E3 that is of the first fixed block 2624 and that is away from the support portion 261 fits into the third groove 214e. One side that is of the second fixed block 2625 and that is away from the first fixed block 2624 has a second protrusion E2 extending in the Z-axis direction, and the second protrusion E2 fits into the second groove 215d. An end E4 that is of the second fixed block 2625 and that is away from the support portion 261 fits into the fourth groove 215e.

(b) in FIG. 16 shows a structure illustrating that the first fixed block 2624 and the second fixed block 2625 shown in (a) in FIG. 16 are assembled with the first mounting platform 214 and the second mounting platform 215 shown in (a) in FIG. 16, respectively.

It can be learned from (b) in FIG. 16 that the first fixed block 2624 shown in (a) in FIG. 16 is seated in the first notch 214a shown in (a) in FIG. 16, the end E3 that is of the first fixed block 2624 and that is away from the support portion 261 is inserted into the third groove 214e, and the first protrusion E1 is inserted into the first groove 214d shown in (a) in FIG. 16. In this way, the first fixed block 2624 shown in (a) in FIG. 16 and the first mounting platform 214 shown in (a) in FIG. 16 are fastened to each other through a mortise-and-tenon fit.

In this embodiment, through the mortise-and-tenon fit between the first fixed block 2624 and the first mounting platform 214, the compliant bistable mechanism 262 can be more securely fastened to the hinge base 210 and is less prone to wobbling, so that connection reliability of the compliant bistable mechanism 262 is improved.

It should be understood that the first fixed block 2624 and the third groove 214e may be fastened to each other in the Y-axis direction through a mortise-and-tenon fit, and the first protrusion E1 and the first groove 214d may be fastened to each other in the X-axis direction through a mortise-and-tenon fit.

In addition, in some embodiments, with reference to (b) in FIG. 16, to implement fastening between the first fixed block 2624 and the first mounting platform 214 in the Z-axis direction, a position at which the first fixed block 2624 and the first mounting platform 214 are in contact with each other may be alternatively fastened through welding. For example, when the first fixed block 2624 is fastened to the first mounting platform 214 through the mortise-and-tenon fit, laser welding may be performed along a bold path shown in (b) in FIG. 16. In this way, the position at which the first fixed block 2624 and the first mounting platform 214 are in contact with each other (two platform surfaces of the first notch 214a are the position at which the first mounting platform 214 and the first fixed block 2624 are in contact with each other) can be welded. In this way, the first fixed block 2624 and the first mounting table 214 may be fastened to each other in three directions: the X-axis direction, the Y-axis direction, and the Z-axis direction, so that the bistable support plate 260 can be securely mounted on the hinge base 210 without easily loosening and axial movement.

It should be noted that a manner of fastening the second mounting platform 215 and the second fixed block 2625 to each other may be implemented with reference to content of fastening the first mounting platform 214 and the first fixed block 2624 to each other. Details are not described herein again.

It should be understood that in other embodiments, fastening may be performed only in any one or more of the X-axis direction, the Y-axis direction, and the Z-axis direction, and there may be other fastening manners. This is not limited in embodiments of this application.

Still refer to FIG. 15. The movable block 2621 is located between the first fixed block 2624 and the second fixed block 2625. The movable block 2621 is connected to the first fixed block 2624 through the first compliant beam 2622, and the movable block 2621 is connected to the second fixed block 2625 through the second compliant beam 2623. The movable block 2621 is connected to the support portion 261, so that the compliant bistable mechanism 262 is fastened to the back side of the support portion 261. The first compliant beam 2622 and the second compliant beam 2623 may deform under the action of the driving force, to drive the movable block 2621 to move up and down along the Z-axis direction. Certainly, in other embodiments, a motion direction of the movable block 2621 may be alternatively at a specific angle with the Z-axis direction.

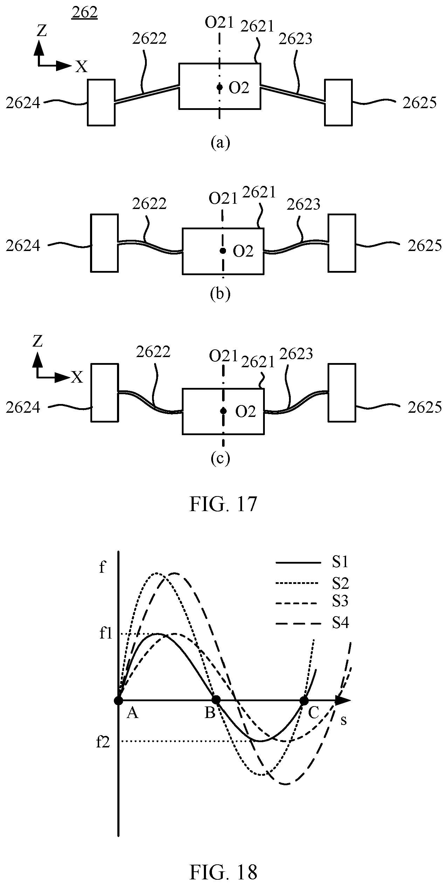

For example, FIG. 17 is status diagrams of a compliant bistable mechanism 262 according to an embodiment of this application.

In (a) in FIG. 17, the movable block 2621 moves to a first stable-state position, and the compliant bistable mechanism 262 is in the first stable state. In (b) in FIG. 17, the movable block 2621 moves to an unstable equilibrium position, and the compliant bistable mechanism 262 is in the unstable equilibrium state. In (c) in FIG. 17, the movable block 2621 moves to a second stable-state position, and the compliant bistable mechanism 262 is in the second stable state.

For ease of understanding a working principle of the compliant bistable mechanism 262, with reference to FIG. 18, the following describes in detail a state switching process of the compliant bistable mechanism 262 shown in FIG. 17.

FIG. 18 is a comparison chart of characteristic curves of a reaction force f and a displacement s of a bistable mechanism according to an embodiment of this application.

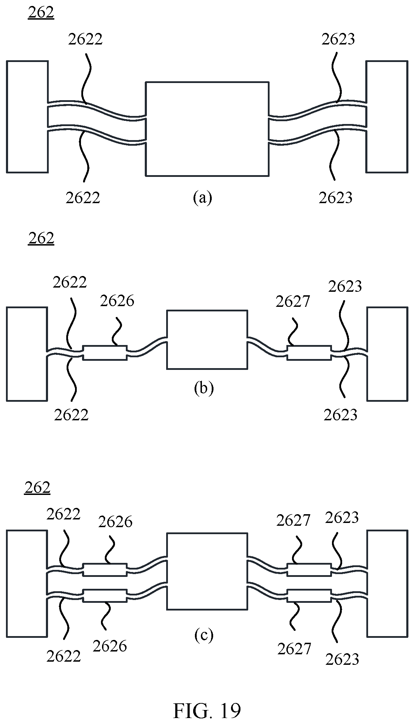

A curve S1 is a characteristic curve of a reaction force f and a displacement s of the compliant bistable mechanism 262 shown in FIG. 17. A curve S2, a curve S3, and a curve S4 are respectively characteristic curves of a reaction force f and a displacement s of three bistable mechanisms 262 shown in FIG. 19.

It can be learned from the curve S1 that the displacement s can be understood as a displacement of the movable block 2621, and the reaction force f can be understood as a force generated due to deformation of the first compliant beam 2622 and the second compliant beam 2623. It should be noted that, a point A in the figure is corresponding to the first stable state of the compliant bistable mechanism 262, and the movable block 2621 is at the first stable-state position. A point B in the figure is corresponding to the unstable equilibrium state of the compliant bistable mechanism 262, and the movable block 2621 is at the unstable equilibrium position. A point C in the figure is corresponding to the second stable state of the compliant bistable mechanism 262, and the movable block 2621 is at the second stable-state position.

First, a process is described in which the compliant bistable mechanism 262 in FIG. 17 switches from the first stable state to the second stable state, that is, the movable block 2621 moves from the first stable-state position to the second stable-state position. This process is corresponding to a transition process from the point A to the point C in FIG. 18.

When the movable block 2621 is at the first stable-state position (corresponding to the point A in the figure), if the movable block 2621 moves downward under the action of a downward driving force, the first compliant beam 2622 and the second compliant beam 2623 follow the motion of the movable block 2621. The first compliant beam 2622 and the second compliant beam 2623 deform to generate an upward and gradually increasing reaction force f, and continuously store strain energy. When the driving force applied to the movable block 2621 is greater than f1, the first compliant beam 2622 and the second compliant beam 2623 undergo buckling-induced snap-through, and the reaction force f rapidly decreases to 0. In this case, the compliant bistable mechanism 262 is in the unstable equilibrium state, and the movable block 2621 reaches the unstable equilibrium position (corresponding to the point B in the figure) at which elastic strain energy is maximum. In this case, only a slight downward force needs to be applied to the movable block 2621, and the first compliant beam 2622 and the second compliant beam 2623 release the stored elastic strain energy to push the movable block 2621 to automatically move downward. The reaction force f of the first compliant beam 2622 and the second compliant beam 2623 starts to inversely increase to a local maximum value f2 and rapidly decreases to zero, and the movable block 2621 reaches the second stable-state position (corresponding to the point C in the figure) in this case. This position is a stable equilibrium position formed by a local minimum value of the elastic strain energy. Therefore, the compliant bistable mechanism 262 can maintain stable equilibrium and is in the second stable state.

Next, a process is described in which the compliant bistable mechanism 262 in FIG. 17 switches from the second stable state to the first stable state, that is, the movable block 2621 moves from the second stable-state position to the first stable-state position. This process is corresponding to a transition process from the point C to the point A in FIG. 18.

When the movable block 2621 is at the second stable-state position (corresponding to the point B in the figure), if the movable block 2621 moves upward under the action of an upward driving force, the first compliant beam 2622 and the second compliant beam 2623 follow the motion of the movable block 2621. The first compliant beam 2622 and the second compliant beam 2623 deform to generate a downward and gradually increasing reaction force f, and continuously store elastic strain energy. When the driving force applied to the movable block 2621 is greater than f2, the first compliant beam 2622 and the second compliant beam 2623 undergo buckling-induced snap-through, and the reaction force f rapidly decreases to 0. In this case, the compliant bistable mechanism 262 is in the unstable equilibrium state, and the movable block 2621 reaches the unstable equilibrium position (corresponding to the point B in the figure) at which elastic strain energy is maximum. In this case, only a slight upward force needs to be applied to the movable block 2621, and the first compliant beam 2622 and the second compliant beam 2623 release the stored elastic strain energy to push the movable block 2621 to continue to move upward. The reaction force f of the first compliant beam 2622 and the second compliant beam 2623 starts to inversely increase to a local maximum value f1 and rapidly decreases to zero, and the movable block 2621 reaches the first stable-state position (corresponding to the point A in the figure) in this case. This position is a stable equilibrium position formed by a local minimum value of the elastic strain energy. Therefore, the compliant bistable mechanism 262 can maintain stable equilibrium and is in the first stable state.

It can be learned that regardless of whether the movable block 2621 moves from the first stable-state position to the second stable-state position or moves from the second stable-state position to the first stable-state position, the movable block 2621 needs to pass through the unstable equilibrium position. Before the movable block 2621 moves from the first stable-state position or the second stable-state position to the unstable equilibrium position, the movable block 2621 moves under the action of the driving force, to drive the first compliant beam 2622 and the second compliant beam 2623 to deform to store the elastic strain energy. When the movable block 2621 reaches the unstable equilibrium position at which the elastic strain energy is maximum, only a slight driving force needs to be provided, and the first compliant beam 2622 and the second compliant beam 2623 can release the stored elastic strain energy to push the movable block 2621 to automatically move until the movable block 2621 reaches the first stable-state position or the second stable-state position. It can be learned that in a process in which the movable block 2621 moves from the unstable equilibrium position to the first stable-state position or the second stable-state position, a slight force is initially applied, and then no driving force needs to be applied in a subsequent motion process, and the movable block 2621 moves into position through elastic deformation.

An example in which the bistable mechanism 262 is the compliant bistable mechanism 262 is used for description in FIG. 17 and FIG. 18. It should be understood that in other embodiments, the bistable mechanism 262 may be alternatively another type of multi-stable mechanism, provided that the bistable mechanism 262 can have two stable states.

For example, the bistable mechanism 262 may alternatively include only one compliant beam in FIG. 9, that is, one of the first compliant beam 2622 and the second compliant beam 2623, but at least one compliant beam is disposed on each of the two sides of the center line O32 on the bistable support plate 260. For example, with reference to FIG. 14, a bistable mechanism 262 in a region Q0 in the figure includes a first compliant beam 2622, a bistable mechanism 262 in the region Q1 in the figure includes a second compliant beam 2623, a bistable mechanism 262 in a region Q2 in the figure includes a first compliant beam 2622, and a bistable mechanism 262 in the region Q1 in the figure includes a second compliant beam 2623. In this case, the compliant beams located on the two sides of the center line O32 deform under the action of the driving force, so that the bistable mechanism 262 switches between states, to drive the support portion 261 connected to the bistable mechanism 262 to move to different positions.

For another example, the bistable mechanism 262 may alternatively include only two compliant beams in FIG. 9, that is, the first compliant beam 2622 and the second compliant beam 2623. In this case, one end of the first compliant beam 2622 and one end of the second compliant beam 2623 are directly connected to the back side of the support portion 261, and the other end of the first compliant beam 2622 and the other end of the second compliant beam 2623 are directly fastened in the hinge assembly 203 shown in FIG. 7. Both the first compliant beam 2622 and the second compliant beam 2623 are configured to deform under the action of the driving force, to drive the bistable mechanism 262 to switch between states. In comparison with a solution in which a single compliant beam is disposed, the first compliant beam 2622 and the second compliant beam 2623 are connected to the support portion 261 at two discrete positions in the X-axis direction, to drive the support portion 261 to move at the two discrete positions in the X-axis direction. In this way, a force on the support portion 261 in the X-axis direction is more widely distributed, and a motion process of the support portion 261 is more stable.

For another example, the first compliant beam 2622 and the second compliant beam 2623 included in the bistable mechanism 262 may not be aligned in the X-axis direction (that is, Y coordinates are the same), but are staggered by a distance in the Y-axis direction (that is, Y coordinates are different).

For another example, the bistable mechanism 262 may alternatively include only the first compliant beam 2622, the second compliant beam 2623, and the movable block 2621 in FIG. 15. In this case, one end of the first compliant beam 2622 and one end of the second compliant beam 2623 are connected to the back side of the support portion 261 through the movable block 2621, and the other end of the first compliant beam 2622 and the other end of the second compliant beam 2623 are directly fastened in the hinge assembly 203 shown in FIG. 7.

In this embodiment, one end of the first compliant beam 2622 and one end of the second compliant beam 2623 are both connected to the support portion 261 through the movable block 2621. In comparison with a solution in which one end of the first compliant beam 2622 and one end of the second compliant beam 2623 are directly connected to the support portion 261, the movable block 2621 is connected to the support portion 261 to form a face-to-face connection manner, so that a force-bearing area of the support portion 261 is larger, and a motion process of the support portion 261 is more stable.

For another example, the bistable mechanism 262 may alternatively include only the first compliant beam 2622, the second compliant beam 2623, the first fixed block 2624, and the second fixed block 2625 in FIG. 15. In this case, one end of the first compliant beam 2622 and one end of the second compliant beam 2623 are directly connected to the back side of the support portion 261, and the other end of the first compliant beam 2622 and the other end of the second compliant beam 2623 are fastened in the hinge assembly 203 shown in FIG. 7 respectively through the first fixed block 2624 and the second fixed block 2625.

In this embodiment, the other end of the first compliant beam 2622 and the other end of the second compliant beam 2623 are fastened in the hinge assembly 203 shown in FIG. 7 respectively through the first fixed block 2624 and the second fixed block 2625. In comparison with the solution in which one end of the first compliant beam 2622 and one end of the second compliant beam 2623 are directly connected to the support portion 261, a contact area for fastening is larger during fastening, and fastening is more secure.

For another example, the bistable mechanism 262 may be alternatively of three structures shown in FIG. 19.

For example, FIG. 19 is diagrams of structures of three other bistable mechanisms according to an embodiment of this application.

The three bistable mechanisms 262 shown in FIG. 19 all have two stable states and an unstable equilibrium state. FIG. 19 shows only the unstable equilibrium state of the three bistable mechanisms 262.

A difference from the compliant bistable mechanism 262 shown in FIG. 17 lies in that there are two groups of first compliant beams 2622 and second compliant beams 2623 in (a) in FIG. 19. In this case, a characteristic curve of a reaction force f and a displacement s is corresponding to the curve S2 in FIG. 18. It can be learned from the curve S2 in FIG. 18 that a shape of the curve S2 is similar to that of the curve S2, and the reaction force f of the curve S2 is approximately twice that of the curve S1.

A difference from the compliant bistable mechanism 262 shown in FIG. 17 lies in that in (b) in FIG. 19, a first compliant beam 2622 is provided with a first rigid block 2626, and a second compliant beam 2623 is provided with a second rigid block 2627. In this case, a characteristic curve of a reaction force f and a displacement s is corresponding to the curve S3 in FIG. 18. It can be learned from the curve S3 in FIG. 18 that the curve S3 is flatter than the curve S2. In this way, the reaction force f in a motion process of the first compliant beam 2622 and the second compliant beam 2623 changes more smoothly, and an impact force is smaller. This helps prolong lifespans of the first compliant beam 2622 and the second compliant beam 2623.

Based on (b) in FIG. 19, in (c) in FIG. 19, one group of first compliant beam 2622 and second compliant beam 2623 are added, the first compliant beams 2622 are provided with first rigid blocks 2626, and the second compliant beams 2623 are provided with second rigid blocks 2627. In this case, a characteristic curve of a reaction force f and a displacement s is corresponding to the curve S4 in FIG. 18. It can be learned from the curve S4 in FIG. 18 that the reaction force f of the curve S4 is approximately twice that of the curve S3. All the three bistable mechanisms 262 shown in FIG. 19 can be applied to the bistable support plate 260 shown in FIG. 15. It should be understood that the foregoing variations of the bistable mechanism 262 in FIG. 15 are also applicable to the bistable mechanisms 262 in FIG. 19. Details are not described herein again. The following uses an example for description in which the bistable mechanism 262 in the bistable support plate 260 shown in FIG. 15 is the compliant bistable mechanism 262 shown in FIG. 15.

It can be learned from the foregoing that, when the compliant bistable mechanism 262 in different states, the movable block 2621 is at different positions. Based on this, in FIG. 10, the compliant bistable mechanism 262 is driven to switch between states, so that the movable block 2621 can drive the support portion 261 to move to different positions along the Z-axis direction (or at a specific angle with the Z-axis direction). In this embodiment of this application, the first swing arm B1 and the second swing arm B2 drive the compliant bistable mechanism 262 to switch between states, so that the movable block 2621 drives the support portion 261 to move to different positions. The following provides descriptions by using an example in which the first swing arm B1 is the door panel swing arm B111 and the second swing arm B2 is the door panel swing arm B211.

Still refer to FIG. 10 and FIG. 11. The bistable support plate 260 is located between the third display region 130 and the front side of the hinge base 210, and the support portion 261 may move up and down relative to the hinge base 210. Optionally, the bistable support plate 260 is accommodated in a groove 211 of the hinge base 210, and the support portion 261 may move up and down in the groove 211 of the hinge base 210.

Specifically, when the hinge assembly 203 moves from the folded state shown in FIG. 11 to the flattened state shown in FIG. 10, the bistable support plate 260 is subjected to an upward driving force provided by the first swing arm B1 and the second swing arm B2, and the movable block 2621 moves upward under the action of the upward driving force, to drive the support portion 261 to move upward. When the hinge assembly 203 moves from the flattened state shown in FIG. 10 to the folded state shown in FIG. 11, the bistable support plate 260 is subjected to a downward driving force, and the movable block 2621 moves downward, to drive the support portion 261 to move downward.

As shown in FIG. 10, when the movable block 2621 moves to the first stable-state position, the compliant bistable mechanism 262 is in the first stable state, and the movable block 2621 drives the support portion 261 to move to a first position, to support the third bending region 133 in the flattened state shown in FIG. 10. As shown in FIG. 11, when the movable block 2621 moves to the second stable-state position, the compliant bistable mechanism 262 is in the second stable state, and the movable block 2621 drives the support portion 261 to move to a second position, to provide a screen accommodating space to avoid the third bending region 133 in the folded state shown in FIG. 11.

It can be understood that the first position shown in FIG. 10 is a position that can support the third bending region 133. For example, the first position shown in FIG. 10 may be a position of a groove top of the groove 211, that is, a plane on which a first upper surface of the hinge base 210 is located (to be specific, a surface that is of the hinge base 210 and that is disposed outside the groove 211). In this case, an upper surface of the bistable support plate 260 is flush with the first upper surface of the hinge base 210, to support the third bending region 133. The second position shown in FIG. 11 is a position that can avoid the third bending region 133. For example, the second position shown in FIG. 11 may be a position of a groove bottom of the groove 211, that is, a plane on which a second upper surface of the hinge base 210 is located (to be specific, a surface that is of the hinge base 210 and that is disposed on the groove bottom of the groove 211). In this case, the upper surface of the bistable support plate 260 is position below and spaced apart from the first upper surface of the hinge base 210 by a specific distance (which may be set depending on a requirement), to provide an accommodating space to avoid the third bending region 133.

It can be learned that, with reference to FIG. 10, the first stable state of the compliant bistable mechanism 262 is corresponding to the flattened state of the hinge assembly 203 shown in FIG. 10, and in this state, the movable block 2621 drives the support portion 261 to move to the first position. With reference to FIG. 11, the second stable state of the compliant bistable mechanism 262 is corresponding to the folded state of the hinge assembly 203 shown in FIG. 11, and in this state, the movable block 2621 drives the support portion 261 to move to the second position. In addition, in this embodiment of this application, a state that is of the hinge assembly 203 and that is corresponding to the unstable equilibrium state of the compliant bistable mechanism 262 is referred to as an intermediate state of the hinge assembly 203. The intermediate state of the hinge assembly 203 is a state in which the hinge assembly 203 moves from the flattened state shown in FIG. 10 to the folded state shown in FIG. 11 or moves from the folded state shown in FIG. 11 to the flattened state shown in FIG. 10. In this state, the movable block 2621 drives the support portion 261 to move to a third position between the first position and the second position. It should be understood that in other embodiments, when a multi-stable mechanism 262 having more stable states is used in FIG. 10 and FIG. 11, the movable block 2621 may move to more stable positions, so that the support portion 261 can move to a plurality of positions and maintained at the positions. This is not limited in embodiments of this application.

It should be noted that, a "stable state" is an equilibrium state that is presented depending on an inherent stability characteristic without an external force. It can be learned that in the bistable support plate 260 shown in FIG. 10 and FIG. 11, the bistable mechanism 262 having two stable states, namely, the first stable state and the second stable state, is disposed, so that the support portion 261 shown in FIG. 10 remains stable at the first position depending on the first stable state of the compliant bistable mechanism 262 and the support portion 261 shown in FIG. 11 remains stable at the second position depending on the second stable state of the compliant bistable mechanism 262 without an external force. It should be understood that, the compliant bistable mechanism 262 is a structure of the bistable support plate 260, and accordingly a stability characteristic of the compliant bistable mechanism 262 may be considered as a stability characteristic of the bistable support plate 260. Therefore, it can be understood that the support portion 261 can remain stable at the first position shown in FIG. 10 and the second position shown in FIG. 11 depending on an inherent stability characteristic of the bistable support plate 260 shown in FIG. 10 and FIG. 11 without an external force.

When the support portion 261 remains stable at the first position shown in FIG. 10 depending on the inherent stability characteristic of the bistable support plate 260, the compliant bistable mechanism 262 does not externally exert a reaction force, and therefore no force can be transferred to the first swing arm B1 and the second swing arm B2 to weaken a flattening restoring force of the hinge assembly 203. The flattening restoring force of the hinge assembly 203 is increased instead. Specifically, because the compliant bistable mechanism 262 has a feature of maintaining a stable state without being subjected to an external force, driving the support portion 261 away from the first position is equivalent to driving the compliant bistable mechanism 262 out of the first stable state. This makes the compliant bistable mechanism 262 generate a reaction force, thereby forming a resistance. The resistance prevents the first swing arm B1 and the second swing arm B2 shown in FIG. 11 from rotating toward a folded position, and prevents the hinge assembly 203 from moving toward the folded state shown in FIG. 11, so that the flattening restoring force of the hinge assembly 203 is increased. This is conducive to enabling the hinge assembly 203 to prevent screen warping and maintain a desirable flattened state.

In some embodiments, still with reference to FIG. 10 or FIG. 11, the movable block 2621 is centrally fastened to the back side of the support portion 261, that is, a center line O21 of the movable block 2621 overlaps with the center line O31 of the support portion 261. The center line O21 of the movable block 2621 is a reference line passing through a center O2 of the movable block 2621 in the X-axis direction and extending in the Z-axis direction, the center line O31 of the support portion 261 is a reference line passing through the center O3 of the support portion 261 in the X-axis direction and extending in the Z-axis direction, the X-axis direction can be understood as the width direction of the support portion 261, and the Z-axis direction can be understood as the thickness direction of the support portion 261. In this way, when the movable block 2621 drives the support portion 261 to move, a force acting on the support portion 261 is more centrally applied, and a process of driving the support portion 261 to move is more stable. Certainly, in other embodiments, the movable block 2621 may alternatively not be centrally fastened to the back side of the support portion 261. This is not limited in embodiments of this application.

In some embodiments, still with reference to FIG. 10 or FIG. 11, the first compliant beam 2622 and the second compliant beam 2623 are spaced apart in the X-axis direction. With such a setting, the first compliant beam 2622 and the second compliant beam 2623 are connected to the support portion 261 at two discrete positions in the X-axis direction, to drive the support portion 261 to move at the two discrete positions in the X-axis direction. In this way, a force on the support portion 261 in the X-axis direction is more widely distributed, and a motion process of the support portion 261 is more stable.

In some embodiments, still with reference to FIG. 10 or FIG. 11, the compliant bistable mechanism 262 is axisymmetric with respect to the center line O31 of the support portion (namely, a first center line). In this way, under the action of the driving force, deformation statuses of two sides of the compliant bistable mechanism 262 are consistent with each other, and a motion process of driving the support portion 261 to move is more stable. Certainly, in other embodiments, the compliant bistable mechanism 262 may alternatively not be axisymmetric. This is not limited in embodiments of this application. Certainly, in other embodiments, alternatively, the bistable mechanism 262 may be axisymmetrically arranged not with respect to the center line O31 of the support portion.

Still refer to FIG. 15. The drive mechanism 263 is a component that is of the bistable support plate 260 and to which a driving force is applied by the first swing arm B1 and/or the second swing arm B2 shown in FIG. 7. It can be understood that when the driving force applied by the first swing arm B1 and/or the second swing arm B2 shown in FIG. 7 acts on the drive mechanism 263, the driving force is transferred, through the drive mechanism 263, to everywhere of the bistable support plate 260, such as the support portion 261 and the bistable mechanism 262, and therefore the components of the bistable support plate 260 can be driven by the driving force. In this way, the bistable mechanism 262 can switch between states under the action of the driving force, and the support portion 261 can move up and down relative to the hinge base 210 under the action of the driving force.

Optionally, still with reference to FIG. 15, the drive mechanism 263 includes a first driving part D1 and a second driving part D2 that are spaced apart in the X-axis direction. The first driving part D1 is located on the first side of the center line O32 of the support portion 261, and the second driving part D2 is located on the second side of the center line O32 of the support portion 261.

The first driving part D1 and the second driving part D2 each include a first driving sub-part, a second driving sub-part, and a connecting part. For ease of differentiation, in this embodiment of this application, components respectively included in the first driving part D1 and the second driving part D2 are marked with different reference numerals. The first driving part D1 includes a first driving sub-part D11, a second driving sub-part D12, and a connecting part D13, and the second driving part D2 includes a first driving sub-part D21, a second driving sub-part D22, and a connecting part D23. The first driving part D1 is used as an example. The first driving sub-part D11 is located on the first side of the center line O32 of the support portion 261, and the first driving sub-part D11 is connected to the support portion 261 and may be flush with the support portion 261. Certainly, in other embodiments, the first driving sub-part D11 may alternatively not be flush with the support portion 261, for example, may be lower than an upper surface of the support portion 261.

The second driving sub-part D12 and the first driving sub-part D11 are spaced apart in the Z-axis direction, and the second driving sub-part D12 is farther from the support portion 261. The connecting part D13 is connected between a first end of the first driving sub-part D11 and a first end of the second driving sub-part D12. It can be learned that, a second end (one end far away from the center line O32) of the first driving sub-part D11 and a second end (one end far away from the center line O32) of the second driving sub-part D12 are not connected to each other, so that the first driving part D1 is U-shaped and has an opening facing away from the center line O32 of the support portion 261. The opening of the first driving part D1 can be understood as a U-shaped opening. In other embodiments, the first driving part D1 may alternatively have another structure, for example, may be "I"-shaped, provided that the first driving part D1 can be driven by the first swing arm B1 shown in FIG. 7.

Position relationships and connection relationships of the components in the second driving part D2 are similar to those in the first driving part D1. Details are not described herein again. An opening of the second driving part D2 also faces away from the center line O32 of the support portion 261, and the opening of the first driving part D1 faces away from the opening of the second driving part D2.

The first driving part D1 is a portion that is of the bistable support plate 260 and to which a driving force is applied by the first swing arm B1 shown in FIG. 7, and may be configured to drive, under the driving force provided by the first swing arm B1 shown in FIG. 7, the compliant bistable mechanism 262 to switch between states. The second driving part D2 is a portion that is of the bistable support plate 260 and to which a driving force is applied by the second swing arm B2 shown in FIG. 7, and may be configured to drive, under the driving force provided by the second swing arm B2 shown in FIG. 7, the bistable mechanism 262 to switch between states.

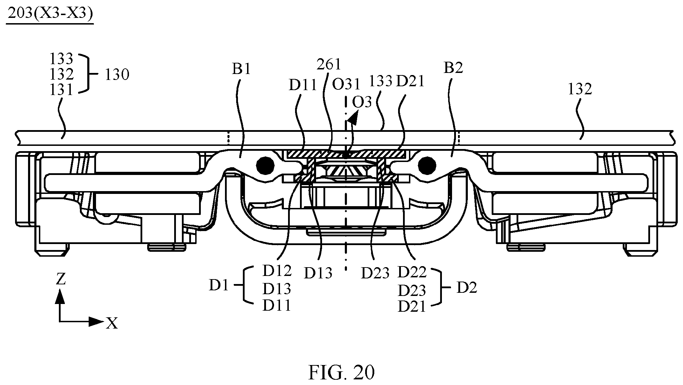

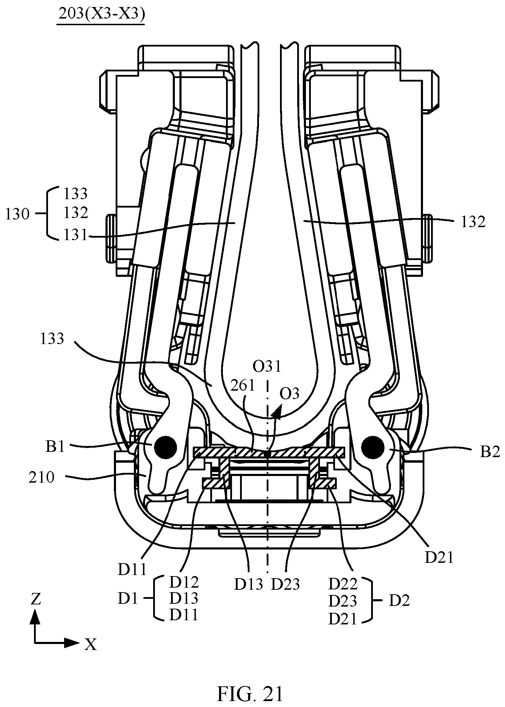

Specifically, refer to FIG. 20 and FIG. 21. FIG. 20 is a sectional view of the hinge assembly shown in FIG. 7 taken along a cutting plane line X3-X3 shown in FIG. 14. FIG. 21 is a diagram of a structure of the hinge assembly shown in FIG. 20 in a folded state. It should be noted that FIG. 21 can be understood as a sectional view of the hinge assembly 203 shown in FIG. 14 in a folded state taken along a cutting plane line that is at a same position as the cutting plane line X3-X3.

It should be understood that the hinge assembly 203 shown in FIG. 20 and FIG. 21 can be applied to the foldable electronic device 01 shown in FIG. 1 and FIG. 2. It should be noted that the flattened state of the hinge assembly 203 shown in FIG. 20 can be understood as a state of the hinge assembly 203 when the foldable electronic device 01 is in the flattened state shown in FIG. 1, and the folded state of the hinge assembly 203 shown in FIG. 21 can be understood as a state of the hinge assembly 203 when the foldable electronic device 01 is in the folded state shown in FIG. 2. For ease of understanding and description, FIG. 20 and FIG. 21 further show the third display region 130.

It can be learned from FIG. 20 and FIG. 21 that the first driving part D1 is located on the first side of the center line O31 of the support portion 261, and the opening of the first driving part D1 faces away from the center line O31 of a support plate body 2610. The second driving part D2 is located on the second side of the center line O31 of the support portion 261, and the opening of the first driving part D1 faces away from the center line O31 of the support plate body 2610.

As shown in FIG. 20, when the hinge assembly 203 is in the flattened state, the first swing arm B1 and the second swing arm B2 rotate to a flattened position. A second end of the first swing arm B1 extends into the first driving part D1 through the opening of the first driving part D1 and is located between the first driving sub-part D11 and the second driving sub-part D12 of the first driving part D1, and a second end of the second swing arm B2 extends into the second driving part D2 through the opening of the second driving part D2 and is located between the first driving sub-part D21 and the second driving sub-part D22 of the second driving part D2. As shown in FIG. 21, when the hinge assembly 203 is in the folded state, the first swing arm B1 and the second swing arm B2 rotate to a folded position. The second end of the first swing arm B1 withdraws from the first driving part D1 and is located on a side that faces the opening of the first driving part D1, and the second end of the second swing arm B2 withdraws from the second driving part D2 and is located on a side that faces the opening of the second driving part D2.

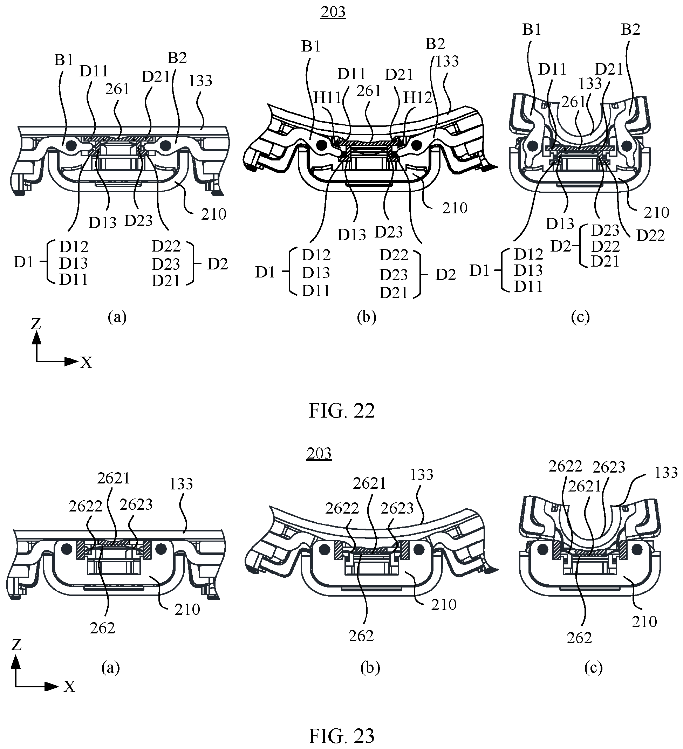

It should be understood that in a process of rotating around the hinge base 210 from the flattened position shown in FIG. 20 to the folded position shown in FIG. 21, the first swing arm B1 and the second swing arm B2 are in contact with the second driving sub-part D12 of the first driving part D1 and the second driving sub-part D22 of the second driving part D2, to apply a downward driving force to the second driving sub-part D12 of the first driving part D1 and the second driving sub-part D22 of the second driving part D2, thereby driving the support portion 261 to move downward. In a process of rotating around the hinge base 210 from the folded position shown in FIG. 21 to the flattened position shown in FIG. 20, the first swing arm B1 and the second swing arm B2 are in contact with the first driving sub-part D11 of the first driving part D1 and the first driving sub-part D21 of the second driving part D2, to apply an upward driving force to the first driving sub-part D11 of the first driving part D1 and the first driving sub-part D21 of the second driving part D2, thereby driving the support portion 261 to move upward. The following provides detailed descriptions with reference to FIG. 22 to FIG. 25.

FIG. 22 is a transition diagram 1 illustrating that a hinge assembly moves from a flattened state to a folded state via an intermediate state according to an embodiment of this application. FIG. 23 is a transition diagram 2 of movement from a flattened state to a folded state via an intermediate state according to an embodiment of this application.

(a) in FIG. 22 and (a) in FIG. 23 are corresponding to the flattened state of the hinge assembly 203, (b) in FIG. 22 and (b) in FIG. 23 are corresponding to the intermediate state of the hinge assembly 203, and (c) in FIG. 22 and (c) in FIG. 23 are corresponding to the folded state of the hinge assembly 203.

It should be noted that FIG. 22 shows mating relationships between swing arms and pawls of the hinge assembly 203 in various states. FIG. 22 can be understood as sectional views of the hinge assembly 203 shown in FIG. 7 sequentially in the flattened state, the intermediate state, and the folded state taken along a cutting plane line that is at a same position as the cutting plane line X3-X3. FIG. 23 shows states of the bistable mechanism 262 and positions of the support portion 261 corresponding to various states of the hinge assembly 203. FIG. 23 can be understood as sectional views of the hinge assembly 203 shown in FIG. 7 sequentially in the flattened state, the intermediate state, and the folded state taken along a cutting plane line that is at a same position as the cutting plane line X3-X3. In addition, FIG. 22 and FIG. 23 show only some regions of the hinge assembly 203 that are near the hinge base 210, and structures shown in FIG. 22 and FIG. 23 should not be understood as any limitation on the components of the hinge assembly 203. Moreover, for ease of understanding and description, FIG. 22 and FIG. 23 further show the third bending region 133.

A process in which the hinge assembly 203 moves from the flattened state to the folded state via the intermediate state is divided into two stages: a stage at which the hinge assembly 203 moves from the flattened state to the intermediate state, and a stage at which the hinge assembly 203 moves from the intermediate state to the folded state.

First, the stage at which the hinge assembly 203 moves from the flattened state to the intermediate state is described.

The first swing arm B1 and the second swing arm B2 rotate around the hinge base 210 from a flattened position shown in (a) in FIG. 22 to a transition position shown in (b) in FIG. 22. In this process, the second end of the first swing arm B1 and the second driving sub-part D12 of the first driving part D1 transition from a state in which the two components are in contact, as shown in (a) in FIG. 22 (when the hinge assembly 203 is in the flattened state, the second end of the first swing arm B1 extends into the first driving part D1 and is in contact with the second driving sub-part D12, or may not be in contact with the second driving sub-part D12 in other embodiments), to a state in which the two components are about to lose contact, as shown in (b) in FIG. 22. A mating relationship between the second end of the second swing arm B2 and the second driving sub-part D22 of the second driving part D2 is the same as that described above.

It should be noted that the first swing arm B1 and the second swing arm B2 provide a downward driving force for the first driving part D1 and the second driving part D2 through contact with the second driving sub-part D12 of the first driving part D1 and the second driving sub-part D22 of the second driving part D2, respectively. Under the action of the driving force, the movable block 2621 moves downward from a first stable-state position shown in (a) in FIG. 23 to an unstable equilibrium position shown in (b) in FIG. 23, and drives the first compliant beam 2622 and the second compliant beam 2623 to deform to store elastic strain energy. The compliant bistable mechanism 262 switches from a first stable state shown in (a) in FIG. 23 to an unstable equilibrium state shown in (b) in FIG. 23. The support portion 261 moves downward from a first position shown in (a) in FIG. 23 to a third position shown in (b) in FIG. 23.

Next, the stage at which the hinge assembly 203 moves from the intermediate state to the folded state is described.

The first swing arm B1 and the second swing arm B2 rotate around the hinge base 210 from the transition position shown in (b) in FIG. 22 to a folded position shown in (c) in FIG. 22. In this process, the second end of the first swing arm B1 and the second driving sub-part D12 of the first driving part D1 transition from the state in which the two components are about to lose contact, as shown in (b) in FIG. 22, to a state in which the two components are not in contact, as shown in (c) in FIG. 22 (when the hinge assembly 203 is in the folded state, the second end of the first swing arm B1 withdraws from the first driving part D1 and cannot be in contact with the second driving sub-part D12). A mating relationship between the second end of the second swing arm B2 and the first driving sub-part D21 of the second driving part D2 is the same as that described above.

It should be noted that the first swing arm B1 and the second swing arm B2 need to provide only a slight downward driving force in the intermediate state shown in (b) in FIG. 22, to enable the first compliant beam 2622 and the second compliant beam 2623 to release the elastic strain energy, to drive the movable block 2621 to move downward from the unstable equilibrium position shown in (b) in FIG. 23 to a second stable-state position shown in (c) in FIG. 23. In this way, the movable block 2621 drives the support portion 261 to move downward from the third position shown in (b) in FIG. 23 to a second position shown in (c) in FIG. 23, to provide a screen accommodating space to avoid the third display region 130. The compliant bistable mechanism 262 also switches from the unstable equilibrium state shown in (b) in FIG. 23 to a second stable state shown in (c) in FIG. 23.

It should be understood that the first compliant beam 2622 and the second compliant beam 2623 release the elastic strain energy, so that the first driving part D1 and the second driving part D2 that are disposed on the back side of the support portion 261 move downward accordingly. In this way, the second end of the first swing arm B1 is not in contact with the second driving sub-part D12 of the first driving part D1 but is in contact with the first driving sub-part D11 of the first driving part D1, and the second end of the second swing arm B2 is not in contact with the second driving sub-part D22 of the second driving part D2 but is in contact with the first driving sub-part D21 of the second driving part D2.

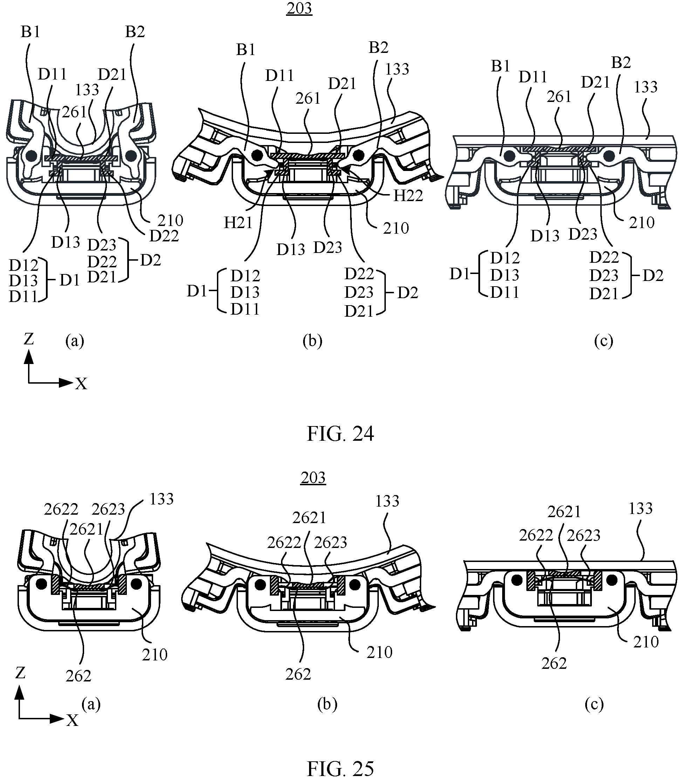

FIG. 24 is a transition diagram 1 illustrating that a hinge assembly moves from a folded state to a flattened state via an intermediate state according to an embodiment of this application. FIG. 25 is a transition diagram 2 of movement from a folded state to a flattened state via an intermediate state according to an embodiment of this application.

It should be noted that FIG. 24 shows mating relationships between swing arms and pawls of the hinge assembly 203 in various states. FIG. 24 can be understood as sectional views of the hinge assembly 203 shown in FIG. 7 sequentially in the folded state, the intermediate state, and the flattened state taken along a cutting plane line that is at a same position as the cutting plane line X3-X3. FIG. 25 shows states of the bistable mechanism 262 and positions of the support portion 261 corresponding to various states of the hinge assembly 203. FIG. 25 can be understood as sectional views of the hinge assembly 203 shown in FIG. 7 sequentially in the flattened state, the intermediate state, and the folded state taken along a cutting plane line that is at a same position as the cutting plane line X3-X3. In addition, FIG. 24 and FIG. 25 show only some regions of the hinge assembly 203 that are near the hinge base 210, and structures shown in FIG. 24 and FIG. 25 should not be understood as any limitation on the components of the hinge assembly 203. Moreover, for ease of understanding and description, FIG. 24 and FIG. 25 further show some regions of the third display region 130.

A process in which the hinge assembly 203 moves from the folded state to the flattened state via the intermediate state includes two stages: a stage at which the hinge assembly 203 moves from the folded state to the intermediate state, and a stage at which the hinge assembly 203 moves from the intermediate state to the flattened state.

First, the stage at which the hinge assembly 203 moves from the folded state to the intermediate state is described.

The first swing arm B1 and the second swing arm B2 rotate around the hinge base 210 from a flattened position shown in (a) in FIG. 24 to a transition position shown in (b) in FIG. 24. In this process, the second end of the first swing arm B1 and the first driving sub-part D11 of the first driving part D1 transition from a state in which the two components are not in contact, as shown in (a) in FIG. 24, to a state in which the two components are about to come into contact, as shown in (b) in FIG. 24. A mating relationship between the second end of the second swing arm B2 and a first driving region of the second driving part D2 is the same as that described above.

In this process, the first swing arm B1 and the second swing arm B2 provide an upward driving force for the first driving part D1 and the second driving part D2 through contact with the first driving sub-part D11 of the first driving part D1 and the first driving sub-part D21 of the second driving part D2, respectively. Under the action of the driving force, the movable block 2621 moves upward from a first stable-state position shown in (a) in FIG. 25 to an unstable equilibrium position shown in (b) in FIG. 25, and drives the first compliant beam 2622 and the second compliant beam 2623 to deform to store elastic strain energy. The compliant bistable mechanism 262 switches from a first stable state shown in (a) in FIG. 25 to an unstable equilibrium state shown in (b) in FIG. 25. The support portion 261 moves upward from a first position shown in (a) in FIG. 25 to a third position shown in (b) in FIG. 25.

Next, the stage at which the hinge assembly 203 moves from the intermediate state to the flattened state is described.

The first swing arm B1 and the second swing arm B2 rotate around the hinge base 210 from the transition position shown in (b) in FIG. 24 to the flattened position shown in (c) in FIG. 24. In this process, the second end of the first swing arm B1 and the first driving sub-part D11 of the first driving part D1 transition from a state in which the two components are about to lose contact, as shown in (b) in FIG. 24, to a state in which the two components are not in contact, as shown in (c) in FIG. 24. A mating relationship between the second end of the second swing arm B2 and the first driving sub-part D21 of the second driving part D2 is the same as that described above.

It should be noted that the first swing arm B1 and the second swing arm B2 need to provide only a slight upward driving force in the intermediate state shown in (b) in FIG. 24, to enable the first compliant beam 2622 and the second compliant beam 2623 to release the elastic strain energy, to drive the movable block 2621 to move upward from the unstable equilibrium position shown in (b) in FIG. 25 to a first stable-state position shown in (c) in FIG. 25. In this way, the movable block 2621 drives the support portion 261 to move upward from the third position shown in (b) in FIG. 25 to a first position shown in (c) in FIG. 25, to support the third display region 130. The compliant bistable mechanism 262 also switches from the unstable equilibrium state shown in (b) in FIG. 25 to a first stable state shown in (c) in FIG. 25.

It should be understood that the first compliant beam 2622 and the second compliant beam 2623 release the elastic strain energy, so that the first driving part D1 and the second driving part D2 that are disposed on the back side of the support portion 261 move upward accordingly. In this way, the second end of the first swing arm B1 is not in contact with the first driving sub-part D11 of the first driving part D1 but is in contact with the second driving sub-part D12 of the first driving part D1, and the second end of the second swing arm B2 is not in contact with the first driving sub-part D21 of the second driving part D2 but is in contact with the second driving sub-part D22 of the second driving part D2.

It can be learned from the foregoing that, still with reference to FIG. 20 and FIG. 21, the bistable support plate 260 shown in FIG. 20 and FIG. 21 is driven in a different manner from the floating support plate 230 shown in FIG. 4 and FIG. 5. In FIG. 20 and FIG. 21, in a process in which the hinge assembly 203 moves from the flattened state shown in FIG. 20 to the folded state shown in FIG. 21, the bistable support plate 260 is first driven downward under the action of the driving force provided by the first swing arm B1 and the second swing arm B2, so that the support portion 261 of the bistable support plate 260 moves from a first position shown in FIG. 20 to a third position. Then, slight downward perturbation is applied by the first swing arm B1 and the second swing arm B2, so that the support portion 261 can automatically move to a second position shown in FIG. 21 based on the elastic strain energy generated through deformation of the bistable mechanism 262 (not shown in the figure due to shielding) of the bistable support plate 260, and remain stable at the second position shown in FIG. 21 depending on the inherent stability characteristic of the bistable support plate 260 (specifically, the second stable state of the bistable mechanism 262) without an external force.

Reversely, in a process in which the hinge assembly 203 moves from the folded state shown in FIG. 21 to the flattened state shown in FIG. 20, the bistable support plate 260 is first driven upward under the action of the driving force provided by the first swing arm B1 and the second swing arm B2, so that the support portion 261 of the bistable support plate 260 moves from the second position shown in FIG. 21 to the third position. Then, slight upward perturbation is applied by the first swing arm B1 and the second swing arm B2, so that the support portion 261 of the bistable support plate 260 can automatically move to the first position shown in FIG. 20 based on the elastic strain energy generated through deformation of the bistable mechanism 262 (not shown in the figure due to shielding), and remain stable at the first position shown in FIG. 20 depending on the inherent stability characteristic of the bistable support plate 260 (specifically, the first stable state of the bistable mechanism 262) without an external force.

In brief, in the bistable support plate 260 shown in FIG. 20 and FIG. 21, driven by the first swing arm B1 and the second swing arm B2 and enabled by mechanical properties of the support portion 261, the support portion 261 can move between the first position shown in FIG. 20 and the second position shown in FIG. 21, without a need to dispose the screw 233 and the spring 234 shown in FIG. 4 and FIG. 5 to provide an elastic force to assist the support portion 261 in moving downward. In this case, the hinge base 210 shown in FIG. 20 and FIG. 21 no longer has the groove 212 in FIG. 4 and FIG. 5 for accommodating the head of the screw 233 and the spring 234.

It should be noted that, because the bistable support plate 260 has a feature of making the support portion 261 stable at the first position shown in FIG. 20 depending on the inherent stability characteristic of the bistable support plate 260 without an external force, when the hinge assembly 203 is in the flattened state shown in FIG. 20, the bistable support plate 260 can make the support portion 261 stable at the first position shown in FIG. 20 without support by two swing arms: the first swing arm B1 and the second swing arm B2, to support the third bending region 133. It can be learned from FIG. 20 that the first swing arm B1 is not in contact with the first driving sub-part D11 of the first driving part D1, and the second swing arm B2 is not in contact with the first driving sub-part D21 of the second driving part D2. Therefore, the first swing arm B1 and the second swing arm B2 do not provide support for the bistable support plate 260.

Still refer to (b) in FIG. 24. It should be noted that in (b) in FIG. 24, a gap H21 exists between the second end of the first swing arm B1 and the second driving sub-part D12 of the first driving part D1, and a gap H22 exists between the second end of the second swing arm B2 and the second driving sub-part D22 of the second driving part D2.

When the first swing arm B1 and the second swing arm B2 provide a slight upward driving force in the intermediate state shown in (b) in FIG. 24, under the action of the elastic strain energy released by the first compliant beam 2622 and the second compliant beam 2623, the first driving part D1 and the second driving part D2 shown in (b) in FIG. 24 rapidly move upward. In this way, the first driving sub-part D11 of the first driving part D1 and the first driving sub-part D21 of the second driving part D2 respectively move away from the second end of the first swing arm B1 and the second end of the second swing arm B2, and are respectively in contact with the second end of the first swing arm B1 and the second end of the second swing arm B2. Existence of the gap H21 and the gap H22 makes it easy to generate abnormal noise during contact. It should be understood that a problem of abnormal noise also exists in the hinge assembly 203 shown in (b) in FIG. 22. For details, refer to the foregoing descriptions for understanding.

To resolve the problem of abnormal noise that exists in a motion process of the bistable support plate 260, in some embodiments of this application, the gap H21 and the gap H22 in (b) in FIG. 24 are less than a first preset threshold. A gap H11 and a gap H12 in (b) in FIG. 22 are less than a second preset threshold. For example, the first preset threshold and the second preset threshold may range from 0.02 mm to 0.05 mm, for example, may be 0.02 mm, 0.03 mm, 0.04 mm, or 0.05 mm. The first preset threshold and the second preset threshold may be identical or different.

In this embodiment, motion paths of the first driving part D1 and the second driving part D2 are shorter by limiting each gap within a specific range. When the first driving part D1 and the second driving part D2 are respectively in contact with the second end of the first swing arm B1 and the second end of the second swing arm B2, an impact force is smaller, resulting in less abnormal noise.

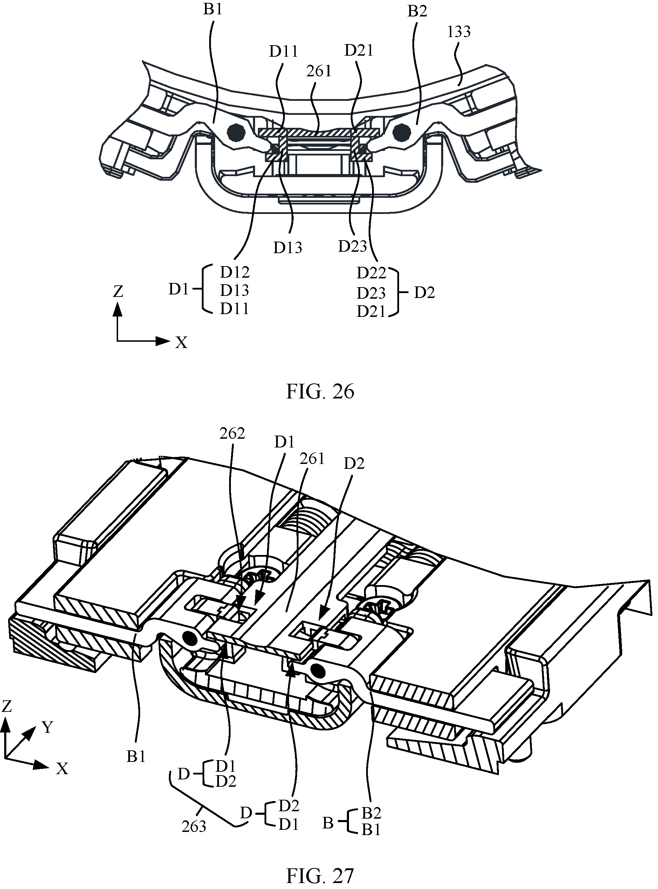

Optionally, with reference to FIG. 26, each gap may be zero, that is, there is no gap. In this way, when the second end of the first swing arm B1 and the second end of the second swing arm B2 have just separated from the second driving sub-part D12 of the first driving part D1 and the second driving sub-part D22 of the second driving part D2, the second end of the first swing arm B1 and the second end of the second swing arm B2 just come into contact with the first driving sub-part D11 of the first driving part D1 and the first driving sub-part D21 of the second driving part D2, motion paths are shorter, and an impact force is smaller, resulting in less abnormal noise.

FIG. 15 provides descriptions by using an example in which the drive mechanism 263 includes the first driving part D1 and the second driving part D2 that are spaced apart in the X-axis direction and that are distributed on the two sides of the center line O32 of the support portion 261. In this case, the first driving part D1 is driven by the first swing arm B1 shown in FIG. 20 and FIG. 21, and the second driving part D2 is driven by the second swing arm B2 shown in FIG. 20 and FIG. 21, that is, the drive mechanism 263 is driven by the first swing arm B1 and the second swing arm B2. The first driving part D1 and the second driving part D2 are distributed at two discrete positions in the X-axis direction. In this way, when the first swing arm B1 and the second swing arm B2 respectively drive the first driving part D1 and the second driving part D2, a force on the support portion 261 in the X-axis direction is more widely distributed and more uniform, and a motion process of the support portion 261 is more stable.

Because the first driving part D1 and the second driving part D2 are located on the two sides of the center line O31 of the support portion 261, when the driving force acts on the first driving part D1 and the second driving part D2, the two sides of the support portion 261 in the X-axis direction are both driven by the driving force. In this way, the force on the support portion 261 in the X-axis direction is more uniform, and the motion process of the support portion 261 is more stable.

Certainly, in other embodiments, the drive mechanism 263 may alternatively include only the first driving part D1 located on the first side of the center line O31 of the support portion 261, or include only the second driving part D2 located on the second side of the center line O31 of the support portion 261. In this case, the drive mechanism 263 is driven by only the first swing arm B1 or the second swing arm B2.

Still refer to FIG. 15. Optionally, the first driving part D1 and the second driving part D2 may be axisymmetrically arranged on the two sides of the center line O32 of the support portion 261 by using the center line O32 of the support portion 261 as an axis. In this way, the force on the support portion 261 in the X-axis direction is more uniform, and the motion process of the support portion 261 is more stable.

In this embodiment, one first driving part D1 and one second driving part D2 that are axisymmetrically arranged are referred to as one driving-part pair D. Certainly, in other embodiments, a first driving part D1 and a second driving part D2 included in one driving-part pair D may alternatively not be axisymmetrically arranged, for example, staggered by a distance in the Y-axis direction. It can be learned from FIG. 15 that, two driving-part pairs D distributed in the Y-axis direction and one compliant bistable mechanism 262 located between the two driving-part pairs D are disposed in the region Q of the bistable support plate 260 shown in FIG. 15.

One driving-part pair D is disposed on a first side of the compliant bistable mechanism 262, and the other driving-part pair D is disposed on a second side of the compliant bistable mechanism 262. The first side and the second side of the compliant bistable mechanism 262 are two sides of the compliant bistable mechanism 262 that are distributed in the Y-axis direction. In this case, when a driving force acts on the two driving-part pairs D, the two sides of the compliant bistable mechanism 262 in the Y-axis direction are both driven by the driving force. In this way, a force on the compliant bistable mechanism 262 is more uniform, and a process in which the compliant bistable mechanism 262 drives the support portion 261 to move is more stable. Optionally, the two driving-part pairs D are symmetrically arranged on the two sides of the compliant bistable mechanism 262. In this way, the process in which the compliant bistable mechanism 262 drives the support portion 261 to move is more stable.

It should be understood that in other embodiments, the drive mechanism 263 may alternatively include only one driving-part pair D. In addition, it should be noted that in FIG. 15, the two driving-part pairs D are in close proximity to the compliant bistable mechanism 262. In other embodiments, the two driving-part pairs D may alternatively not be in close proximity to the compliant bistable mechanism 262.

Still with reference to FIG. 14, there are four regions Q in FIG. 14. With reference to FIG. 15, one region Q includes one drive mechanism 263 and one compliant bistable mechanism 262. This means that the bistable support plate 260 shown in FIG. 14 includes four compliant bistable mechanisms 262 shown in FIG. 15 and four drive mechanisms 263 shown in FIG. 15. The four compliant bistable mechanisms 262 are spaced apart on the back side of the support portion 261 in the Y-axis direction, for example, are equally spaced. The four drive mechanisms 263 are spaced apart on the back side of the support portion 261 in the Y-axis direction, for example, are equally spaced.

In this embodiment, the four drive mechanisms 263, as well as the four compliant bistable mechanisms 262, are spaced apart on the support portion 261 in the Y-axis direction. In this case, when a driving force acts on the plurality of drive mechanisms 263, four positions of the support portion 261 in the Y-axis direction are all driven by the driving force. In this way, a force on the support portion 261 in the Y-axis direction is more uniform, and a motion process of the support portion 261 is more stable.

It should be understood that in other embodiments, there may be alternatively more or fewer compliant bistable mechanisms 262 and drive mechanisms 263. This is not specifically limited in embodiments of this application. In addition, the quantity of compliant bistable mechanisms 262 may be the same as or different from the quantity of drive mechanisms 263.

It should be noted that, because the bistable support plate 260 shown in FIG. 14 is provided with the four drive mechanisms 263, correspondingly, there may also be the corresponding quantity of groups of first swing arms B1 and second swing arms B2 that are configured to drive the drive mechanisms 263. For ease of description, the first swing arm B1 and the second swing arm B2 are referred to as a swing arm pair. In this case, a quantity of swing arm pair may be the same as the quantity of drive mechanisms 263, and one swing arm pair correspondingly drives one drive mechanism 263.

For example, FIG. 27 is a diagram of a three-dimensional structure of the hinge assembly shown in FIG. 7 taken along a cutting plane line X3-X3 shown in FIG. 14. It can be understood that a status shown in FIG. 27 is corresponding to the flattened state of the hinge assembly. It can be learned from FIG. 27 that, one swing arm pair B and one drive mechanism 263 correspondingly driven by the swing arm pair B are included in the region P1.

Two first driving parts D1 in two driving-part pairs D included in one drive mechanism 263 are all driven by one first swing arm B1, and two second driving parts D2 in the two driving-part pairs D included in the drive mechanism 263 are all driven by one second swing arm B2.

In this case, a second end of the first swing arm B1 and a second end of the second swing arm B2 each have two terminals distributed in the Y-axis direction. One terminal of the first swing arm B1 extends into one of the first driving parts D1, to drive the first driving part D1. The other terminal of the first swing arm B1 extends into the other first driving part D1, to drive the other first driving part D1. It should be understood that, for a position relationship between two terminals of the second swing arm B2 and the two second driving parts D2, refer to the foregoing descriptions for understanding.

It should be noted that in other embodiments, the first swing arm B1 may be alternatively divided into two independent components, to respectively drive the two first driving parts D1. In this case, one swing arm pair B includes two first swing arms B1 and two second swing arms B2.

Based on this, there are four regions P in FIG. 7. This means that the hinge assembly 203 shown in FIG. 7 includes four swing arm pairs B shown in FIG. 27 and four drive mechanisms 263 shown in FIG. 27. The four drive mechanisms 263 are spaced apart on the support portion 261 in the Y-axis direction, for example, are equally spaced. The four swing arm pairs B are spaced apart on the hinge base (the hinge base is shielded by the bistable support plate 260 in FIG. 7) in the Y-axis direction, for example, are equally spaced. It should be understood that in other embodiments, there may be alternatively more or fewer swing arm pairs B. This is not specifically limited in embodiments of this application.

In some embodiments of this application, still with reference to FIG. 14, the bistable support plate 260 shown in FIG. 14 is an integrally formed structure. The integrally formed structure means that components of the bistable support plate 260 are a single integral component rather than discrete components. That the bistable support plate 260 is an integrally formed structure makes the bistable support plate 260 have a small quantity of components, so that an assembly process is simpler.

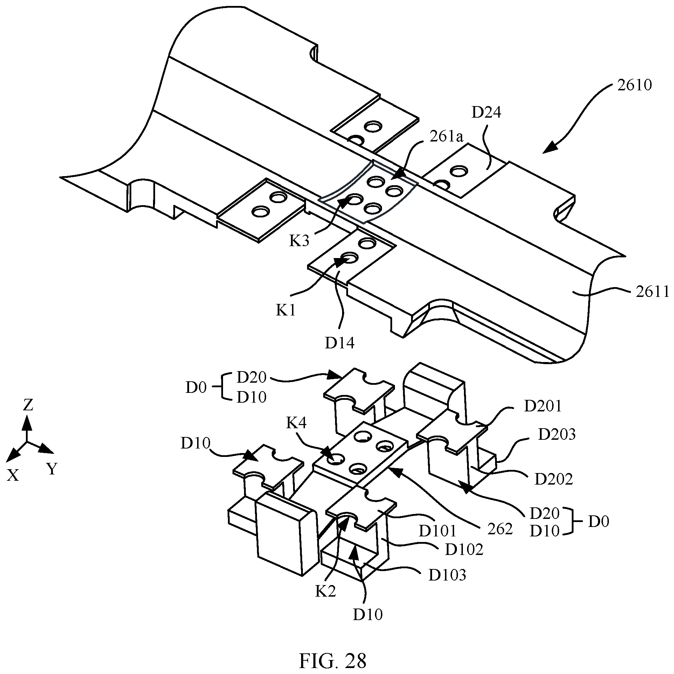

For example, refer to FIG. 15 and FIG. 28. FIG. 28 is an exploded diagram of components in some regions of a bistable support plate according to an embodiment of this application. Components included in the bistable support plate 260 shown in FIG. 28 include a support plate body 2610, a bistable mechanism 262, and two driving-member pairs D0. The two driving-member pairs D0 are disposed on two sides of the bistable mechanism 262 in the Y-axis direction. One driving-member pair D0 distributed on one side of a positive direction of a Y axis is used as an example for description in this embodiment, and is used as a reference for implementation of the other driving-member pair D0.

One driving-member pair D0 includes two driving members: a first pawl D10 and a second pawl D20. The first pawl D10 and the second pawl D20 are spaced apart in a width direction (that is, the X-axis direction) of the support plate body 2610, and are both connected to a back side of the support plate body 2610, to form the first driving part D1 and the second driving part D2 shown in FIG. 15. The support plate body 2610 is further configured to form the support portion 261 shown in FIG. 15.

Specifically, the first pawl D10 and the second pawl D20 each include a first driving region, a connecting region, and a second driving region. For ease of differentiation, in this embodiment, components respectively included in the first pawl D10 and the second pawl D20 are marked with different reference numerals. The first pawl D10 includes a first driving region D101, a connecting region D102, and a second driving region D103, and the second pawl D20 includes a first driving region D201, a connecting region D202, and a second driving region D203.

The support plate body 2610 may include a support region 2611 and two third driving regions: a third driving region D14 and a third driving region D24, and the third driving region D14 and the third driving region D24 are disposed on two sides of the support region 2611. It should be understood that the support region 2611 is a portion of the support plate body 2610 other than the third driving region D14 and the third driving region D24. The support region 2611 is configured to form the support portion 261 shown in FIG. 15. For example, a structure formed by filling an injection molding groove 261a of the support region 2611 with plastic constitutes the support portion 261.

The connecting region D102 is configured to form the connecting part D12 shown in FIG. 15, and the connecting region D202 is configured to form the connecting part D22 shown in FIG. 15. The second driving region D103 is configured to form the second driving sub-part D13 shown in FIG. 15, and the second driving region D203 is configured to form the second driving sub-part D23 shown in FIG. 15. For example, the connecting region D102 is the connecting part D12, the connecting region D202 is the connecting part D22, the second driving region D103 is the second driving sub-part D13, and the second driving region D203 is the second driving sub-part D23. The first driving region D101 of the first pawl D10 and the third driving region D14 are stacked and connected to form the first driving sub-part D11 of the first driving part D1 shown in FIG. 15, and the first driving region D201 of the second pawl D20 and the third driving region D24 are stacked and connected to form the first driving sub-part D21 of the second driving part D2 shown in FIG. 15.

To be specific, in the embodiment provided in FIG. 28, the support portion 261 is implemented by using a portion of the support plate body 2610, the first driving part D1 is implemented by using a portion of the support plate body 2610 and the first pawl D10, and the second driving part D2 is implemented by using a portion of the support plate body 2610 and the second pawl D20. It should be understood that in other embodiments, the support portion 261, the first driving part D1, and the second driving part D2 may be alternatively implemented in other manners. FIG. 28 merely provides an example. For example, the first driving sub-part D11 of the first driving part D1 is provided only by the first pawl D10, and the first driving sub-part D21 of the second driving part D2 is provided only by the second pawl D20.

In FIG. 28, the support plate body 2610, the first pawl D10, the second pawl D20, and the bistable mechanism 262 are made into an integrally formed structure by using an integral forming process, to obtain the bistable support plate 260 shown in FIG. 14. The following describes materials of the components and the integral forming process of the bistable support plate 260.

First, the materials of the components of the bistable support plate 260 are described by using examples.

The support plate body 2610 has a function of supporting a screen, and an elongated and narrow profile of the support plate body 2610 requires high strength and desirable flatness of the support plate body 2610. Based on this, optionally, a material of the support plate body 2610 may be one of the following manners:

Manner 1: The support plate body 2610 is made of a carbon fiber plate. Because carbon fiber is featured by a light weight, when requirements of the support plate body 2610 for strength and flatness are met, a weight of the bistable support plate 260 can be reduced if the support plate body 2610 is made of the carbon fiber plate. This reduces an entire weight of the foldable electronic device 01.

Manner 2: The support plate body 2610 is made of a stainless steel sheet, and covers a surface of the stainless steel sheet with plastic. Compared with the carbon fiber plate, the support plate body 2610 made of the stainless steel sheet exhibits higher strength and enhanced impact resistance, and therefore is not easily damaged. In addition, with a same thickness, because the support plate body 2610 made of the stainless steel material is heavier than the support plate body 2610 made of the carbon fiber, the second manner is used for the support plate body 2610. In this way, a weight of the support plate body 2610 can be relatively reduced on a premise of increasing the strength of the support plate body 2610.

For example, a material of the stainless steel sheet may be but is not limited to one of the following materials: SUS201, SUS301-1/2H, SUS301-H, SUS301-EH, SUS301-3/4H, SUS301-SHE, SUS304, SUS420, and SUS430.

For example, a material of the plastic may be but is not limited to one of the following materials: PA, PEI, PEEK, SPR (PR-250), POM, POM+GF10, PA+GF55, and PA66+GF.

Manner 3: The support plate body 2610 is made of a pure metal sheet. Likewise, compared with the carbon fiber plate, the support plate body 2610 made of the pure metal sheet exhibits higher strength and enhanced impact resistance, and therefore is not easily damaged.

For example, a material of the pure metal sheet may be but is not limited to one of the following materials: zirconium-based amorphous alloy, high-strength aluminum, titanium alloy, stainless steel, and high-strength MIM steel.

The compliant bistable mechanism 262 needs deformation, and has a fatigue life requirement. Based on this, the compliant bistable mechanism 262 may use a metal material having high toughness, for example, SUS403 (stainless steel), SUS301-H (stainless steel), SUS301-EH (stainless steel), SUS301-SHE (stainless steel), zirconium-based amorphous alloy, high-strength MIM steel, 60Si2Mn (silicon-manganese steel), 55CrSi (silicon steel), or 65Mn (manganese steel).

The first pawl D10 and the second pawl D20 mainly mate with swing arms, are driven by the swing arms to move, and need to be subjected to a specific force. In this case, the first pawl D10 and the second pawl D20 need to have specific strength. Based on this, the first pawl D10 and the second pawl D20 may use a metal material having high strength, for example, SUS403 (stainless steel), SUS301-H (stainless steel), SUS301-EH (stainless steel), SUS301-SHE (stainless steel), zirconium-based amorphous alloy, 60Si2Mn (silicon-manganese steel), 55CrSi (silicon steel), 65Mn (manganese steel), or high-strength MIM steel.

Next, the integral forming process of the bistable support plate 260 is described by using examples.

It should be noted that a forming manner of the bistable support plate 260 is related to the materials of the support plate body 2610, the compliant bistable mechanism 262, the first pawl D10, and the second pawl D20, and is discussed in different cases below:

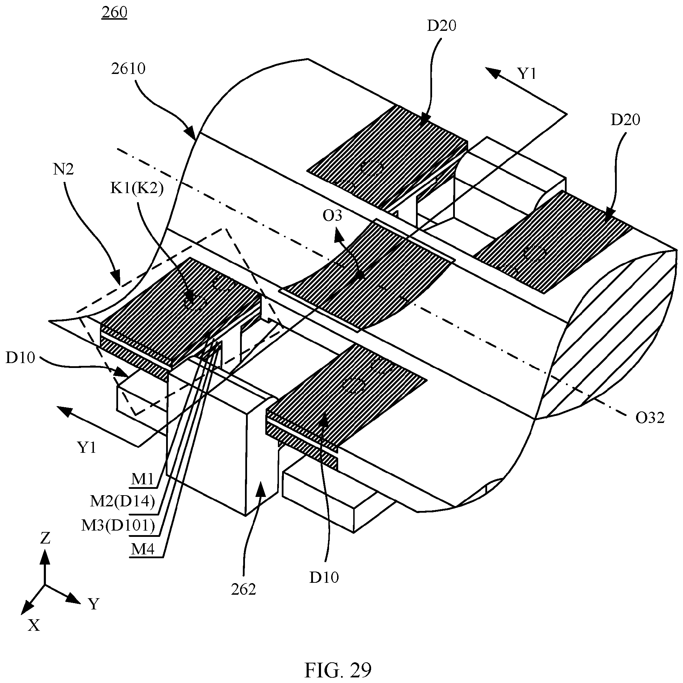

Case 1: With reference to FIG. 29, the support plate body 2610 is made of a carbon fiber plate, and the compliant bistable mechanism 262, the first pawl D10, and the second pawl D20 are all made of metal materials.

An integral forming process route is as follows: First, the support plate body 2610 is fabricated through carbon fiber hot pressing molding, and the compliant bistable mechanism 262, the first pawl D10, and the second pawl D20 are fabricated through wire EDM, computer numerical control machine tools (computer numerical control machine tools, CNC), metal injection molding (metal injection molding, MIM), or the like. For formed component structures, adaptively refer to the example in FIG. 27. Then, the compliant bistable mechanism 262, the first pawl D10, the second pawl D20, and the support plate body 2610 are placed into position. Finally, the compliant bistable mechanism 262, the first pawl D10, the second pawl D20, and the support plate body 2610 may be integrated into the bistable support plate 260 by using a plastic injection molding process. The integral forming process route describes only main steps of obtaining the bistable support plate 260, and may further include more steps in a specific implementation process. This is not limited in embodiments of this application.

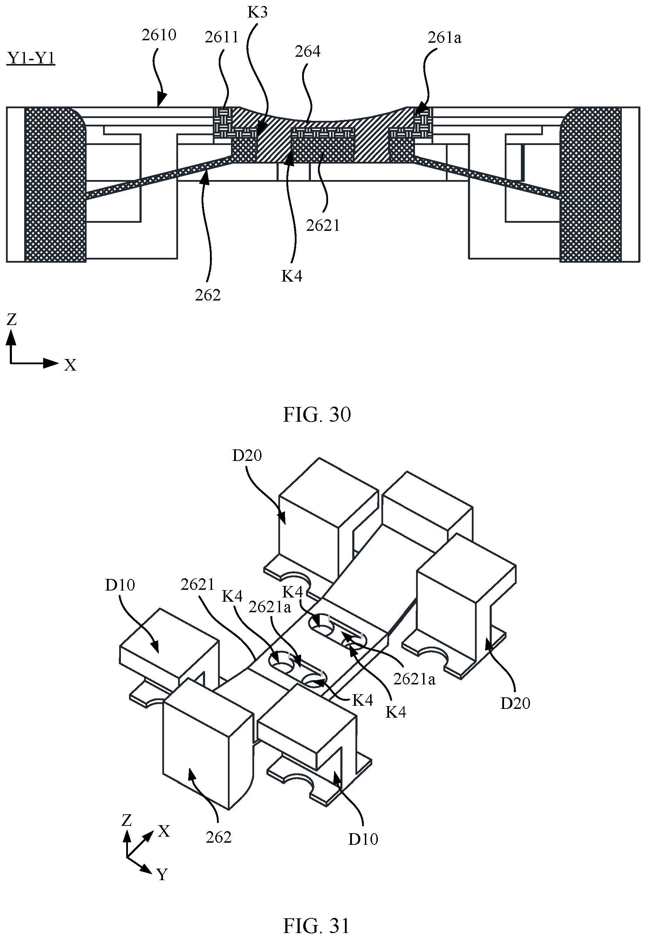

It should be noted that because the materials of the support plate body 2610, the compliant bistable mechanism 262, the first pawl D10, and the second pawl D20 are different, the support plate body 2610 cannot be fastened to the compliant bistable mechanism 262 and the support plate body 2610 cannot be fastened to the first pawl D10 and the second pawl D20 through welding. In view of this, for this case, these components are integrated into an integral structure by using the plastic injection molding process. The following provides descriptions with reference to FIG. 29 and FIG. 30.

For example, FIG. 29 is a diagram of a structure illustrating that a support plate body 2610 is connected to a first pawl D10 according to some embodiments of this application. FIG. 29 shows details of connecting the first pawl D10 to the support plate body 2610 through plastic adhesive bonding. This may be used as a reference for implementing details of connecting the second pawl D20 to the support plate body 2610 through plastic adhesive bonding.

It can be learned from a structure boxed in a region N2 shown in FIG. 29 that, the third driving region D14 that is of the support plate body 2610 and that is located on the first side of the center line O32 and the first pawl D10 also located on the first side of the center line O32 are stacked in the Z-axis direction. It should be understood that, that the first pawl D10 is placed into position means that the first driving region D101 of the first pawl D10 is stacked below the third driving region D14 of the support plate body 2610. The first pawl D10 can be fastened to the back side of the support plate body 2610 by connecting the third driving region D14 to the first driving region D101 of the first pawl D10. In FIG. 29, the third driving region D14 is connected to the first driving region D101 of the first pawl D10 through plastic adhesive bonding.

Specifically, still refer to the region N2 shown in FIG. 29. The region N2 includes four layers in total, which are sequentially as follows from top to bottom along the Z-axis direction: a first layer M1: plastic (namely, a first plastic layer), a second layer M2: the third driving region D14, a third layer M3: the first driving region D101, and a fourth layer M4: plastic (namely, a second plastic layer). The third driving region D14 and the first driving sub-part D11 are sandwiched between plastic of the first layer M1 and the fourth layer M4. In addition, with reference to FIG. 28, the first driving region D101 is provided with a through hole K1, and the third driving region D14 is provided with a through hole K2. After the first pawl D10 is placed into position, as can be learned from FIG. 29, the through hole K1 and the through hole K2 are in communication with each other, and plastic is also filled in the through hole K1 and the through hole K2. In FIG. 29, the plastic of the first layer M1 and the fourth layer M4 is bonded to the plastic filled in the through hole K1 and the through hole K2 to form an integral structure, to pull the third driving region D14 and the first driving region D101 together, so that the third driving region D14 is connected to the first driving region D101 of the first pawl D10 through plastic adhesive bonding.

Certainly, in other embodiments, the third driving region D14 and the first driving region D101 may be alternatively connected in other plastic adhesive bonding manners or other plastic connection manners. In addition, the first pawl D10 and the support plate body 2610 may be fastened to each other in other manners. This is not limited in embodiments of this application.

For example, FIG. 30 is a sectional view taken along a cutting plane line Y1-Y1 shown in FIG. 29. The figure shows details of connecting the compliant bistable mechanism 262 to the support plate body 2610 through plastic adhesive bonding.

To dispose the compliant bistable mechanism 262 centrally on the back side of the support plate body 2610, with reference to FIG. 28, the injection molding groove 261a is disposed on a front side of the support region 2611, and the injection molding groove 261a is located in a region directly opposite to the movable block 2621. That the injection molding groove 261a is located in the region directly opposite to the movable block 2621 means that a projection of the injection molding groove 261a on the movable block 2621 along the Z-axis direction covers the movable block 2621, for example, just overlaps with or goes beyond a boundary of the movable block 2621. Four through holes K3 (only one is marked in the figure) are disposed on a groove bottom of the injection molding groove 261a, and four through holes K4 (only one is marked in the figure) are disposed on the movable block 2621 of the compliant bistable mechanism 262. It should be understood that in other embodiments, there may be more or fewer through holes K3 and through holes K4. This is not limited in embodiments of this application.

After the compliant bistable mechanism 262 is placed into position, as can be learned from FIG. 30, the through holes K3, the through holes K4, and the injection molding groove 261a are in communication with each other, and plastic 264 is filled in the through holes K3, the through holes K4, and the injection molding groove 261a. The plastic 264 filled in the through holes K3, the through holes K4, and the injection molding groove 261a is an integral structure, to pull the support region 2611 and the movable block 2621 together, so that the compliant bistable mechanism 262 is connected to the support plate body 2610 through plastic adhesive bonding. It should be understood that, that the compliant bistable mechanism 262 is placed into position means that the movable block 2621 of the compliant bistable mechanism 262 is stacked below the injection molding groove 261a of the support region 2611. It can be learned from the foregoing that, a part of the plastic 264 that is located in the through holes K3 and the through holes K4 penetrates the support region 2611 and the movable block 2621, a part of the plastic 264 that is located in the injection molding groove 261a is located on the front side of the support region 2611, and the two parts of plastic are bonded together. In addition, because the injection molding groove 261a is located in the region directly opposite to the movable block 2621, the part of the plastic 264 that is located in the injection molding groove 261a is also located in the region directly opposite to the movable block 2621.

In some embodiments, with reference to FIG. 31, FIG. 31 is a diagram of a structure obtained after the compliant bistable mechanism 262, the first pawl D10, and the second pawl D20 in FIG. 28 are flipped. Two injection molding grooves 2621a are disposed on a back side of the movable block 2621. One injection molding groove 2621a is in communication with two of the through holes K4 distributed in the Y-axis direction, and the other injection molding groove 2621a is in communication with the other two through holes K4 distributed in the Y-axis direction. It should be understood that in other embodiments, there may be more or fewer injection molding grooves 2621a, and the injection molding groove 2621a may be in communication with the through holes K4 in other manners. This is not limited in embodiments of this application. In this way, the plastic 264 shown in FIG. 30 is also filled in the injection molding grooves 2621a shown in FIG. 31, so that the movable block 2621 can be more securely fastened to the back side of the support plate body 2610 shown in FIG. 30.

It should be understood that in other embodiments, the support region 2611 and the movable block 2621 may be alternatively connected in other plastic adhesive bonding manners. In addition, the support region 2611 and the movable block 2621 may be fastened to each other in other manners. This is not limited in embodiments of this application.

It should be noted that, still with reference to FIG. 29, because carbon fiber is featured by a light weight, the support plate body 2610 shown in FIG. 29 may be made into a carbon fiber plate by using the carbon fiber. When a thickness requirement is met, the obtained support plate body 2610 is also light in weight, without a need to use plastic for weight balancing. Therefore, it can be learned from FIG. 29 that, when injection molding is performed by using a plastic injection molding process, plastic injection molding only needs to be performed at positions that need to be connected in FIG. 29. Plastic distribution is shown by using shaded parts in the figure.

It should be noted that, the exploded structure of the bistable support plate 260 shown in FIG. 28 is an exploded structure of the bistable support plate 260 made corresponding to the foregoing case 1, and may be adaptively referenced for understanding for the following case 2 and case 3.

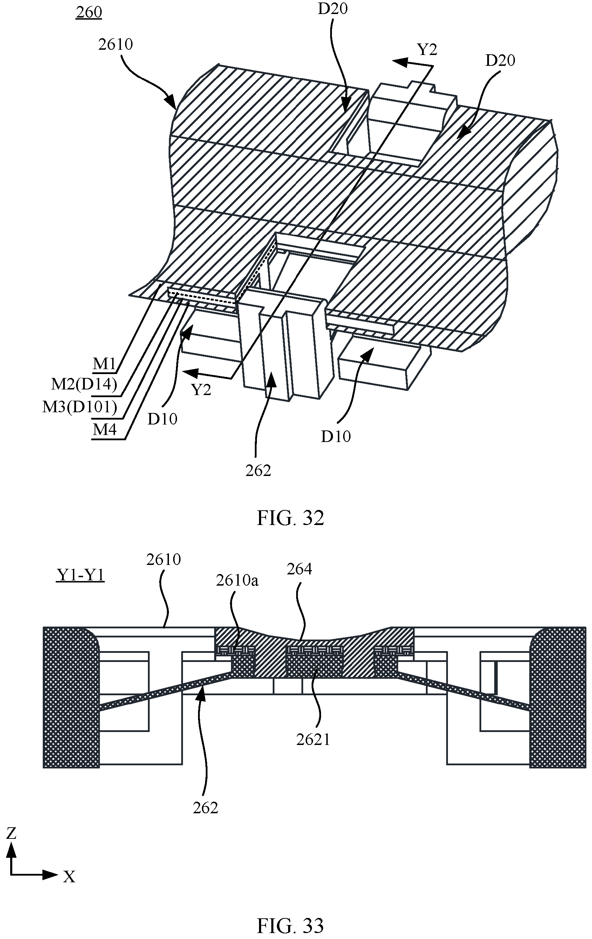

Case 2: With reference to FIG. 32, the support plate body 2610 is made of a stainless steel sheet, and the compliant bistable mechanism 262, the first pawl D10, and the second pawl D20 are all made of metal materials.

An integral forming process route is as follows: First, the stainless steel sheet, the compliant bistable mechanism 262, the first pawl D10, and the second pawl D20 are fabricated through wire EDM, CNC, MIM, or the like. Then, the compliant bistable mechanism 262, the first pawl D10, the second pawl D20, and the stainless steel sheet are placed into position. Finally, the compliant bistable mechanism 262, the first pawl D10, the second pawl D20, and the stainless steel sheet may be integrated into the bistable support plate 260 by using a plastic injection molding process. The integral forming process route describes only main steps of obtaining the bistable support plate 260, and may further include more steps in a specific implementation process. This is not limited in embodiments of this application.

For example, FIG. 32 is a diagram of a structure illustrating that a support plate body 2610 is connected to a first pawl D10 according to some other embodiments of this application. FIG. 32 shows details of connecting the first pawl D10 to the support plate body 2610 through plastic adhesive bonding. For details, refer to the specific descriptions of connecting the first pawl D10 to the support plate body 2610 through plastic adhesive bonding in FIG. 29. Details are not described herein again. It should be understood that the foregoing descriptions may be used as a reference for implementing details of connecting the second pawl D20 to the support plate body 2610 through plastic adhesive bonding.

A difference from FIG. 29 lies in that, in FIG. 32, the plastic of the first layer M1 is distributed on an entire upper surface of the stainless steel sheet. Plastic distribution is shown by using a shaded part in the figure. It should be understood that the support region 2611 is a part of the stainless steel sheet. Therefore, the plastic is distributed on the entire upper surface of the stainless steel sheet, and is accordingly distributed on an upper surface of the support region 2611 and is located on the front side of the support region 2611. Certainly, in other embodiments, the plastic of the fourth layer M4 may be alternatively distributed on an entire lower surface of the stainless steel sheet, to form the support plate body 2610 in which the stainless steel sheet is embedded in the plastic. This is not limited in embodiments of this application.

For example, FIG. 33 is a sectional view taken along a cutting plane line Y2-Y2 shown in FIG. 32. The figure shows details of connecting the compliant bistable mechanism 262 to the support plate body 2610 through plastic adhesive bonding. For details, refer to the specific descriptions of connecting the compliant bistable mechanism 262 to the support plate body 2610 through plastic adhesive bonding in FIG. 30. Details are not described herein again.

A difference from FIG. 30 lies in that, because an upper surface of the stainless steel sheet needs to be spread with plastic, the injection molding groove 261a shown in FIG. 30 is no longer disposed in FIG. 33, and the plastic 264 is distributed on an entire surface of a stainless steel sheet 2610a.

It should be understood that in other embodiments, because the stainless steel sheet, the compliant bistable mechanism 262, the first pawl D10, and the second pawl D20 are all made of metal materials, the stainless steel sheet can be connected to the compliant bistable mechanism 262 and the stainless steel sheet can be connected to the first pawl D10 and the second pawl D20 by using metal connection methods such as welding or sintering. Based on this, for the case 2, these components may be alternatively integrated into an integral structure by using metal connection methods such as welding or sintering.

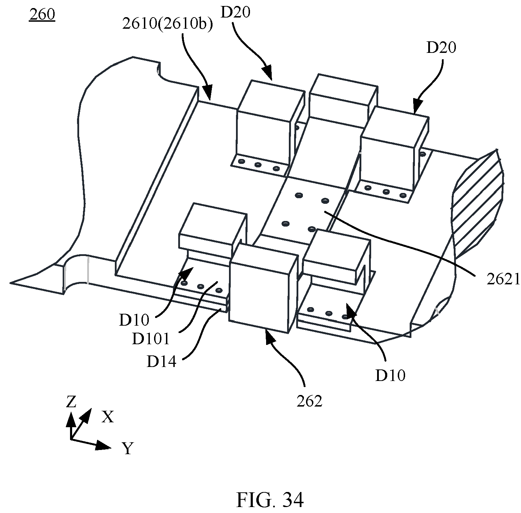

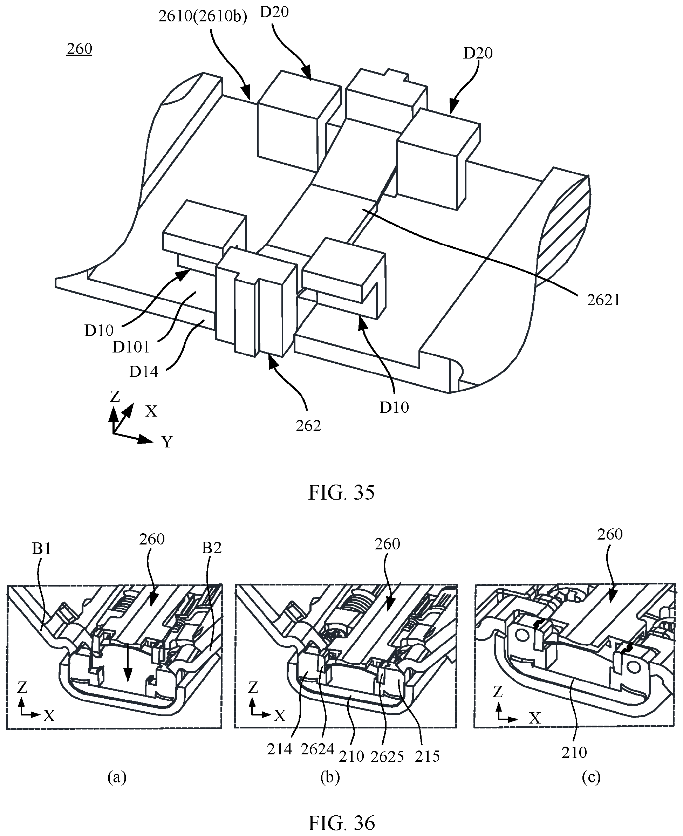

Case 3: With reference to FIG. 34 and FIG. 35, the support plate body 2610 is made of a pure metal sheet, and the compliant bistable mechanism 262, the first pawl D10, and the second pawl D20 are made of metal materials.

An integral forming process route 1 is as follows: With reference to FIG. 34, first, the compliant bistable mechanism 262, the pure metal sheet, the first pawl D10, and the second pawl D20 are fabricated through wire EDM, CNC, MIM, or the like. Then, after being placed into position, the compliant bistable mechanism 262, the pure metal sheet 2610b, the first pawl D10, and the second pawl D20 are integrated into the bistable support plate 260 by using a welding process.

For example, FIG. 34 is a diagram of a structure illustrating that a support plate body 2610 is connected to all of a first pawl D10, a second pawl D20, and a compliant bistable mechanism 262 according to some embodiments of this application.

It can be learned from FIG. 34 that the third driving region D14 of the support plate body 2610 (that is, the pure metal sheet 2610b) is connected to the first driving region D101 of the first pawl D10 and the support plate body 2610 is connected to the movable block 2621 of the compliant bistable mechanism 262 through welding. For example, point-to-point welding is implemented through deep penetration welding. In FIG. 34, connection manners between the structures are shown in forms of solder joints. It should be understood that, because the connections are implemented through welding rather than plastic adhesive bonding, the through holes and the injection molding grooves shown in FIG. 28 and FIG. 31 are no longer disposed on the components in this embodiment.

It should be noted that, for meanings of placing the first pawl D10, the second pawl D20, the compliant bistable mechanism 262, and the pure metal sheet 2610b into position, adaptively refer to related descriptions in FIG. 29 and FIG. 30.

An integral forming process route 2 is as follows: With reference to FIG. 35, first, the compliant bistable mechanism 262, the first pawl D10, the second pawl D20, and the pure metal sheet 2610b are fabricated through wire EDM, CNC, MIM, or the like. Then, after being placed into position, the compliant bistable mechanism 262, the pure metal sheet 2610b, the first pawl D10, and the second pawl D20 are integrated into the bistable support plate 260 by using a MIM process.

For example, FIG. 35 is a diagram of a structure illustrating that a support plate body 2610 is connected to all of a first pawl D10, a second pawl D20, and a compliant bistable mechanism 262 according to some other embodiments of this application.

It can be learned from FIG. 35 that the first driving sub-part D11 of the support plate body 2610 (that is, the pure metal sheet 2610b) is connected to the connecting part D13 of the first pawl D10 and the support plate body 2610 (that is, the pure metal sheet 2610b) is connected to the movable block 2621 of the compliant bistable mechanism 262 through MIM. In FIG. 35, the structures are visually fused together with no visible boundaries, and surface effect is better. It should be understood that, because the connections are implemented through MIM rather than plastic adhesive bonding, the through holes and the injection molding grooves shown in FIG. 28 and FIG. 31 are no longer disposed on the components in this embodiment.

The following describes an assembly process of the bistable support plate 260 with reference to FIG. 36.

FIG. 36 is a diagram of the assembly process of the bistable support plate according to an embodiment of this application.

First, as shown in (a) in FIG. 36, the first swing arm B1 and the second swing arm B2 rotate to specific angles and hold positions, and a hover state shown in (a) in FIG. 36 is presented. Then, the bistable support plate 260 is moved downward along the Z-axis direction (a direction indicated by an arrow in the figure), until the bistable support plate 260 is fastened to the first mounting platform 214214 and the second mounting platform 215 of the hinge base 210 respectively through the first fixed block 2624 and the second fixed block 2625, and stops moving, as shown in (b) in FIG. 36. Optionally, finally, as shown in (c) in FIG. 36, the bistable support plate 260 and the hinge base 210 are permanently welded together through laser welding along a bold path in the figure.

It should be noted that in (a) in FIG. 36, hovering angles of the first swing arm B1 and the second swing arm B2 needs to ensure that the second ends of the first swing arm B1 and the second swing arm B2 do not obstruct the first driving sub-part D11 of the first pawl D10 and the second driving sub-part D22 of the second pawl D20 of the bistable support plate 260 that move downward.

Obviously, compared with the floating support plate 230 shown in FIG. 5, the bistable support plate 260 is an integrally formed structure and has fewer components, and therefore the assembly process does not involve disassembly of the components of the bistable support plate 260, so that the assembly process is simpler.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-stable support plate, applied to a foldable electronic device, wherein the multi-stable support plate comprises:
a support portion; and
a multi-stable mechanism, wherein the multi-stable mechanism is disposed on a back side of the support portion, statuses of the multi-stable mechanism comprise at least a first stable state and a second stable state, and the multi-stable mechanism is configured to switch between states under the action of a driving force, to drive the support portion to move; wherein
when the multi-stable mechanism is in the first stable state, the support portion moves to a first position, to support a foldable display screen of the foldable electronic device; or when the multi-stable mechanism is in the second stable state, the support portion moves to a second position, to provide a screen accommodating space to avoid the foldable display screen.

2. The multi-stable support plate according to claim 1, wherein the multi-stable mechanism is a bistable mechanism, and the bistable mechanism comprises a compliant beam; and
one end of the compliant beam is connected to the back side of the support portion, the other end of the compliant beam is fastened in a hinge assembly of the foldable electronic device, and the compliant beam is configured to deform under the action of the driving force, to drive the multi-stable mechanism to switch between states.

3. The multi-stable support plate according to claim 2, wherein the bistable mechanism comprises two compliant beams: a first compliant beam and a second compliant beam, and the first compliant beam and the second compliant beam are spaced apart in a width direction of the support portion.

4. The multi-stable support plate according to claim 3, wherein the bistable mechanism further comprises a movable block;
the movable block is located between the first compliant beam and the second compliant beam, one end of the first compliant beam and one end of the second compliant beam are both connected to the movable block, and the movable block is connected to the back side of the support portion; and
both the first compliant beam and the second compliant beam are configured to deform under the action of the driving force, to drive the movable block to move; and when the movable block moves to a first stable-state position, the multi-stable mechanism is in the first stable state, and the movable block drives the support portion to move to the first position; or when the movable block moves to a second stable-state position, the multi-stable mechanism is in the second stable state, and the movable block drives the support portion to move to the second position.

5. The multi-stable support plate according to claim 3 or 4, wherein the bistable mechanism further comprises a first fixed block and a second fixed block spaced apart in the width direction of the support portion; and
the first compliant beam and the second compliant beam are located between the first fixed block and the second fixed block, the other end of the first compliant beam is connected to the first fixed block, the other end of the second compliant beam is connected to the second fixed block, and the first fixed block and the second fixed block are configured to be fastened in the hinge assembly.

6. The multi-stable support plate according to any one of claims 2 to 5, wherein the compliant beam is provided with a rigid block.

7. The multi-stable support plate according to any one of claims 1 to 6, wherein the multi-stable support plate comprises a plurality of multi-stable mechanisms; and
the plurality of multi-stable mechanisms are spaced apart in a length direction of the support portion.

8. The multi-stable support plate according to any one of claims 1 to 7, wherein the multi-stable support plate further comprises a drive mechanism disposed on the back side of the support portion; and
the drive mechanism comprises a first driving part and a second driving part, the first driving part and the second driving part are spaced apart in the width direction of the support portion, and both the first driving part and the second driving part are configured to drive, under the action of the driving force, the multi-stable mechanism to switch between states.

9. The multi-stable support plate according to claim 8, wherein the first driving part comprises a first driving sub-part, a connecting part, and a second driving sub-part;
the first driving sub-part and the second driving sub-part are spaced apart in a thickness direction of the support portion, the second driving sub-part is farther from the support portion, the connecting part is connected between the first driving sub-part and the second driving sub-part and forms an opening together with the first driving sub-part and the second driving sub-part, an opening of the first driving part is configured to enable a first swing arm of the hinge assembly to extend into the first driving part, and an opening of the second driving part is configured to enable a second swing arm of the hinge assembly to extend into the second driving part, to provide the driving force; and
when the driving force acts on the first driving sub-part, the first driving part and the second driving part drive the multi-stable mechanism to switch from the second stable state to the first stable state, to drive the support portion to move from the second position to the first position; or when the driving force acts on the second driving sub-part, the first driving part and the second driving part drive the multi-stable mechanism to switch from the first stable state to the second stable state, to drive the support portion to move from the first position to the second position.

10. The multi-stable support plate according to claim 9, wherein the multi-stable support plate comprises a support plate body and two driving members;
the two driving members are spaced apart in a width direction of the support plate body, and are both connected to a back side of the support plate body, to form the first driving part and the second driving part; and
the support portion body is further configured to form the support portion.

11. The multi-stable support plate according to claim 10, wherein the driving member comprises a first driving region, a connecting region, and a second driving region;
the support plate body comprises a support region and two third driving regions, the two third driving regions are disposed on two sides in a width direction of the support region, and the support region is configured to form the support portion;
the connecting region is configured to form the connecting part, and the second driving region is configured to form the second driving sub-part; and
the first driving region of one driving member and one third driving region are stacked and connected to form the first driving sub-part of the first driving part, and the first driving region of the other driving member and the other third driving region are stacked and connected to form the first driving sub-part of the second driving part.

12. The multi-stable support plate according to claim 11, wherein the support plate body is made of a carbon fiber plate or a stainless steel sheet;
the two driving members and the multi-stable mechanism are all made of metal materials; and
the two driving members and the multi-stable mechanism are all connected to the support plate body through plastic adhesive bonding.

13. The multi-stable support plate according to claim 12, wherein the first driving sub-part comprises a first plastic layer, the third driving region, the first driving region, and a second plastic layer that are sequentially stacked in the thickness direction of the support portion; and
the first driving region and the third driving region are penetrated by plastic, and the plastic penetrating the first driving region and the third driving region is bonded to both the first plastic layer and the second plastic layer.

14. The multi-stable support plate according to claim 12 or 13, wherein the movable block of the multi-stable mechanism is stacked on a back side of the support region, the support region and the movable block are penetrated by plastic, plastic is distributed on plastic of a front side of the support region, and the plastic penetrating the support region and the movable block is bonded to the plastic distributed on the front side of the support region.

15. The multi-stable support plate according to claim 14, wherein when the support plate body is made of the carbon fiber plate, the plastic distributed on the front side of the support region is located at least in a region directly opposite to the movable block; or
when the support plate body is made of the stainless steel sheet, the plastic distributed on the front side of the support region is spread over an upper surface of the support region.

16. The multi-stable support plate according to claim 10 or 11, wherein the support plate body is made of a pure metal sheet;
the two driving members and the multi-stable mechanism are all made of metal materials; and
the two driving members and the multi-stable mechanism are all connected to the support plate body through welding or sintering.

17. The multi-stable support plate according to any one of claims 8 to 16, wherein the multi-stable mechanism comprises a first side and a second side that are distributed in the length direction of the support portion; and
the drive mechanism comprises two driving-part pairs, one driving-part pair comprises one first driving part and one second driving part, one driving-part pair is distributed on one side of the multi-stable mechanism, and the other driving-part pair is disposed on the other side of the multi-stable mechanism.

18. The multi-stable support plate according to any one of claims 8 to 17, wherein the multi-stable support plate comprises a plurality of drive mechanisms; and
the plurality of drive mechanisms are spaced apart in the length direction of the support portion.

19. The multi-stable support plate according to any one of claims 1 to 18, wherein the multi-stable support plate is an integrally formed structure.

20. A hinge assembly, applied to a foldable electronic device, wherein the hinge assembly comprises:
a hinge base;
a first swing arm and a second swing arm, wherein the first swing arm and the second swing arm are rotatably connected to two sides of the hinge base, and are capable of rotating around the hinge base between a flattened position and a folded position; and
the multi-stable support plate according to any one of claims 1 to 19, wherein the multi-stable support plate is disposed on a front side of the hinge base, and a multi-stable mechanism of the multi-stable support plate is configured to switch between states under the action of a driving force provided by the first swing arm and/or the second swing arm, to drive a support portion of the multi-stable support plate to move up and down relative to the hinge base; wherein
when the first swing arm and the second swing arm rotate to the flattened position, the multi-stable mechanism is in a first stable state, and the support portion moves to a first position; or when the first swing arm and the second swing arm rotate to the folded position, the multi-stable mechanism is in a second stable state, and the support portion moves to a second position.

21. The hinge assembly according to claim 20, wherein the first swing arm comprises a first door panel swing arm, the second swing arm comprises a second door panel swing arm, and the hinge assembly further comprises a first door panel and a second door panel;
one end of the first door panel swing arm is rotatably connected to the hinge base, and the other end of the first door panel swing arm is slidably connected to the first door panel; and
one end of the second door panel swing arm is rotatably connected to the hinge base, and the other end of the second door panel swing arm is slidably connected to the second door panel.

22. The hinge assembly according to claim 20, wherein the first swing arm comprises a first main swing arm, the second swing arm comprises a second main swing arm, and the hinge assembly further comprises a first connecting member and a second connecting member;
one end of the first main swing arm is rotatably connected to the hinge base, and the other end of the first main swing arm is rotatably connected to the first connecting member; and
one end of the second main swing arm is rotatably connected to the hinge base, and the other end of the second main swing arm is rotatably connected to the second connecting member.

23. The hinge assembly according to claim 20, wherein the first swing arm comprises a first secondary swing arm, the second swing arm comprises a second secondary swing arm, and the hinge assembly further comprises a first connecting member and a second connecting member;
one end of the first secondary swing arm is rotatably connected to the hinge base, and the other end of the first secondary swing arm is slidably connected to the first connecting member; and
one end of the second secondary swing arm is rotatably connected to the hinge base, and the other end of the second secondary swing arm is slidably connected to the second connecting member.

24. The hinge assembly according to claim 20, wherein the first swing arm comprises a first damping swing arm, the second swing arm comprises a second damping swing arm, and the hinge assembly further comprises a damping assembly, a first connecting member, and a second connecting member;
the first damping swing arm and the second damping swing arm are both connected to the damping assembly;
one end of the first damping swing arm is rotatably connected to the hinge base, and the other end of the first damping swing arm forms a higher pair joint with the first connecting member; and
one end of the second damping swing arm is rotatably connected to the hinge base, and the other end of the second damping swing arm forms a higher pair joint with the second connecting member.

25. The hinge assembly according to claim 24, wherein the hinge assembly further comprises a synchronization assembly; and
the first damping swing arm and the second damping swing arm are connected to each other via the synchronization assembly.

26. The hinge assembly according to any one of claims 20 to 25, wherein
when the first swing arm and the second swing arm rotate to the flattened position, one end that is of the first swing arm and that is close to the hinge base extends into an opening of a first driving part of the multi-stable support plate and is located between a first driving sub-part and a second driving sub-part of the first driving part, and one end that is of the second swing arm and that is close to the hinge base extends into an opening of a second driving part of the multi-stable support plate and is located between a first driving sub-part and a second driving sub-part of the second driving part;
in a process in which the first swing arm and the second swing arm rotate from the folded position to the flattened position, one end that is of the first swing arm and that is close to the hinge base is in contact with the first driving sub-part of the first driving part, and one end that is of the second swing arm and that is close to the hinge base is in contact with the first driving sub-part of the second driving part, to provide the driving force to act on the first driving sub-parts; or
in a process in which the first swing arm and the second swing arm rotate from the flattened position to the folded position, one end that is of the first swing arm and that is close to the hinge base is in contact with the second driving sub-part of the first driving part, and one end that is of the second swing arm and that is close to the hinge base is in contact with the second driving sub-part of the second driving part, to provide the driving force to act on the second driving sub-parts.

27. The hinge assembly according to claim 26, wherein when the first swing arm and the second swing arm rotate along a first direction to a transition position between the flattened position and the folded position, the multi-stable mechanism is in an unstable equilibrium state, the support portion moves to a third position between the first position and the second position, a gap between the first driving sub-part and one end that is of the first swing arm and that is close to the hinge base and a gap between the first driving sub-part and one end that is of the second swing arm and that is close to the hinge base are both less than a first preset threshold, and the first direction is a rotational direction from the flattened position to the folded position.

28. The hinge assembly according to claim 26 or 27, wherein when the first swing arm and the second swing arm rotate along a second direction to the transition position between the flattened position and the folded position, the multi-stable mechanism is in the unstable equilibrium state, the support portion moves to the third position between the first position and the second position, a gap between the second driving sub-part and one end that is of the first swing arm and that is close to the hinge base and a gap between the second driving sub-part and one end that is of the second swing arm and that is close to the hinge base are both less than a second preset threshold, and the second direction is a rotational direction from the folded position to the flattened position.

29. The hinge assembly according to any one of claims 20 to 28, wherein the hinge assembly comprises a plurality of swing arm pairs, one swing arm pair comprises one first swing arm and one second swing arm, and the plurality of swing arm pairs are spaced apart in a length direction of the hinge base; and
one swing arm pair is configured to drive one of a plurality of drive mechanisms of the multi-stable support plate.

30. The hinge assembly according to any one of claims 20 to 29, wherein the hinge base comprises a first mounting platform and a second mounting platform, and the first mounting platform and the second mounting platform are located on two sides of a second center line; and
a first fixed block of the multi-stable mechanism engages with the first mounting platform through a mortise-and-tenon fit, and a second fixed block of the multi-stable mechanism engages with the second mounting platform through a mortise-and-tenon fit.

31. The hinge assembly according to claim 30, wherein
one side that is of the first fixed block and that faces the second fixed block is provided with a first protrusion extending in a thickness direction of the support portion, and one side that is of the second fixed block and that faces the first fixed block is provided with a second protrusion extending in the thickness direction of the support portion;
the first mounting platform has a first notch, platform surfaces forming the first notch comprise a first platform surface facing a side on which the second mounting platform is located, and the first platform surface has a first groove extending in a thickness direction of the hinge base;
the second mounting platform has a second notch, platform surfaces forming the second notch comprise a third platform surface facing a side on which the first mounting platform is located and a fourth platform surface facing a side on which the support portion is located, and the third platform surface has a second groove extending in the thickness direction of the hinge base;
the first fixed block is seated in the first notch, and the first protrusion is inserted into the first groove; and
the second fixed block is seated in the second notch, and the second protrusion is inserted into the second groove.

32. The hinge assembly according to claim 30 or 31, wherein
the platform surfaces forming the first notch comprise a second platform surface facing the side on which the support portion is located, and the second platform surface has a third groove extending in a length direction of the support portion;
the platform surfaces forming the second notch comprise the fourth platform surface facing the side on which the support portion is located, and the fourth platform surface has a fourth groove extending in the length direction of the support portion;
the first fixed block is seated in the first notch, and one end that is of the first fixed block and that is away from the support portion is inserted into the third groove; and
the second fixed block is seated in the second notch, and one end that is of the second fixed block and that is away from the support portion is inserted into the fourth groove.

33. A foldable electronic device, comprising:
a foldable display screen; and
the hinge assembly according to any one of claims 20 to 32, wherein the foldable display screen is disposed on one side of the hinge assembly, and the multi-stable support plate of the hinge assembly is mounted on the hinge base of the hinge assembly and is located between the hinge base and the foldable display screen; wherein
when the first swing arm and the second swing arm of the hinge assembly rotate, the multi-stable support plate is driven to move relative to the hinge base, to support the foldable display screen or provide a screen accommodating space to avoid the foldable display screen.
